# EUROPEAN PATENT APPLICATION

(11) **EP 4 723 537 A1**
(43) Date of publication of application: **08.04.2026**
(21) Application number: 25204868.1
(22) Date of filing: 26.09.2025
(51) Int. Cl.: H04L 5/14, H04L 5/00, H04W 24/02, H04W 72/0453, H04W 92/04, H04W 88/08

(54) **SUBBAND FULL DUPLEX CONFIGURATION EXCHANGE IN SPLIT RADIO ACCESS NETWORK**

(30) Priority: 01.10.2024 US 202463701839 P
(71) Applicant: Ofinno, LLC, Reston, VA 20190 (US); Kazmi, Muhammad Ali, Reston, Virginia 20190 (US); Xu, Jian, Reston, Virginia 20190 (US); Dinan, Esmael Hejazi, Reston, Virginia 20190 (US); Yi, Yunjung, Reston, VA 20190 (US); Khoshkholgh Dashtaki, Mohammad Ghadir, Reston, VA 20190 (US); Zhou, Hua, Reston, Virginia 20190 (US); Cirik, Ali Cagatay, Reston, Virginia 20190 (US)
(72) Inventor: KAZMI, Muhammad Ali, Reston, Virginia 20190 (US); XU, Jian, Reston, Virginia 20190 (US); DINAN, Esmael Hejazi, Reston, Virginia 20190 (US); YI, Yunjung, Reston, Virginia 20190 (US); KHOSHKHOLGH DASHTAKI, Mohammad Ghadir, Reston, Virginia 20190 (US); ZHOU, Hua, Reston, Virginia 20190 (US); CIRIK, Ali Cagatay, Reston, Virginia 20190 (US)
(74) Representative: Westphal, Mussgnug & Partner, Patentanwälte mbB

(57) **Abstract**

A method comprises receiving, by a central unit (CU) of a base station from a first distributed unit (DU) of the base station, an F1 setup request message indicating a subband full duplex (SBFD) configuration to be used in a cell of the first DU. The method comprises transmitting, by the CU to a second DU of the base station, a gNB-CU configuration update message indicating the SBFD configuration, and in response to transmitting the gNB-CU configuration update message, receiving, by the CU from the second DU, a gNB-CU configuration update acknowledgement message.

## Description

### CROSS-REFERENCE TO RELATED APPLICATIONS

This application claims the benefit of U.S. Provisional Application No. 63/701,839, filed October 1, 2024, which is hereby incorporated by reference in its entirety.

### BRIEF DESCRIPTION OF THE DRAWINGS

Examples of several of the various embodiments of the present disclosure are described herein with reference to the drawings.
FIG. 1A and FIG. 1B illustrate example mobile communication networks in which embodiments of the present disclosure may be implemented.
FIG. 2A and FIG. 2B respectively illustrate a New Radio (NR) user plane and control plane protocol stack.
FIG. 3 illustrates an example of services provided between protocol layers of the NR user plane protocol stack of FIG. 2A.
FIG. 4A illustrates an example downlink data flow through the NR user plane protocol stack of FIG. 2A.
FIG. 4B illustrates an example format of a MAC subheader in a MAC PDU.
FIG. 5A and FIG. 5B respectively illustrate a mapping between logical channels, transport channels, and physical channels for the downlink and uplink.
FIG. 6 is an example diagram showing RRC state transitions of a UE.
FIG. 7 illustrates an example configuration of an NR frame into which OFDM symbols are grouped.
FIG. 8 illustrates an example configuration of a slot in the time and frequency domain for an NR carrier.
FIG. 9 illustrates an example of bandwidth adaptation using three configured BWPs for an NR carrier.
FIG. 10A illustrates three carrier aggregation configurations with two component carriers.
FIG. 10B illustrates an example of how aggregated cells may be configured into one or more PUCCH groups.
FIG. 11A illustrates an example of an SS/PBCH block structure and location.
FIG. 11B illustrates an example of CSI-RSs that are mapped in the time and frequency domains.
FIG. 12A and FIG. 12B respectively illustrate examples of three downlink and uplink beam management procedures.
FIG. 13A, FIG. 13B, and FIG. 13C respectively illustrate a four-step contention-based random access procedure, a two-step contention-free random access procedure, and another two-step random access procedure.
FIG. 14A illustrates an example of CORESET configurations for a bandwidth part.
FIG. 14B illustrates an example of a CCE-to-REG mapping for DCI transmission on a CORESET and PDCCH processing.
FIG. 15 illustrates an example of a wireless device in communication with a base station.
FIG. 16A, FIG. 16B, FIG. 16C, and FIG. 16D illustrate example structures for uplink and downlink transmission.
FIG. 17 illustrates an aspect of an example embodiment according to the present disclosure.
FIG. 18 illustrates an aspect of an example embodiment according to the present disclosure.
FIG. 19 illustrates an aspect of an example embodiment according to the present disclosure.
FIG. 20 illustrates an aspect of an example embodiment according to the present disclosure.
FIG. 21 illustrates an aspect of an example embodiment according to the present disclosure.
FIG. 22 illustrates an aspect of an example embodiment according to the present disclosure.
FIG. 23 illustrates an aspect of an example embodiment according to the present disclosure.
FIG. 24 illustrates an aspect of an example embodiment according to the present disclosure.
FIG. 25 illustrates an aspect of an example embodiment according to the present disclosure.
FIG. 26 illustrates an aspect of an example embodiment according to the present disclosure.
FIG. 27 illustrates an aspect of an example embodiment according to the present disclosure.
FIG. 28 illustrates a flowchart of an example embodiment according to the present disclosure.
FIG. 29 illustrates a flowchart of an example embodiment according to the present disclosure.
FIG. 30 illustrates a flowchart of an example embodiment according to the present disclosure.
FIG. 31 illustrates a flowchart of an example embodiment according to the present disclosure.

### DETAILED DESCRIPTION

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. In fact, after reading the description, it will be apparent to one skilled in the relevant art how to implement alternative embodiments. The present embodiments should not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have some specific capability(ies) depending on wireless device category and/or capability(ies). When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, those wireless devices or base stations may perform based on older releases of LTE or 5G technology.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, should be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets of B = {cell1, cell2} are: {cell1}, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that affect or implement the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g., hardware with a biological element) or a combination thereof, which may be behaviorally equivalent. For example, modules may be implemented as a software routine written in a computer language configured to be executed by a hardware machine (such as C, C++, Fortran, Java, Basic, MATLAB or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

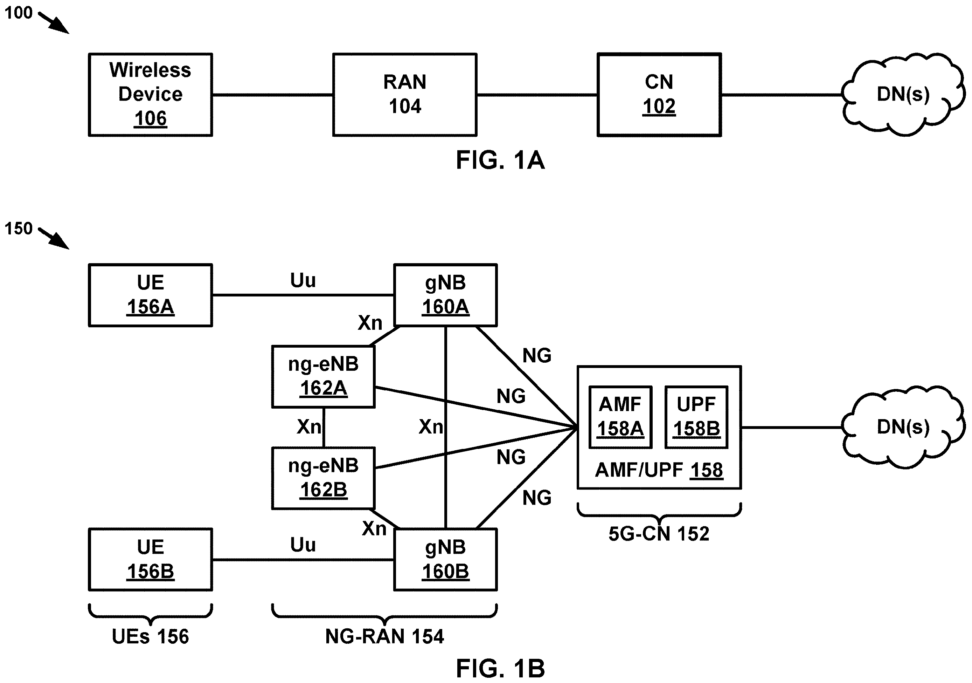

FIG. 1A illustrates an example of a mobile communication network 100 in which embodiments of the present disclosure may be implemented. The mobile communication network 100 may be, for example, a public land mobile network (PLMN) run by a network operator. As illustrated in FIG. 1A, the mobile communication network 100 includes a core network (CN) 102, a radio access network (RAN) 104, and a wireless device 106.

The CN 102 may provide the wireless device 106 with an interface to one or more data networks (DNs), such as public DNs (e.g., the Internet), private DNs, and/or intra-operator DNs. As part of the interface functionality, the CN 102 may set up end-to-end connections between the wireless device 106 and the one or more DNs, authenticate the wireless device 106, and provide charging functionality.

The RAN 104 may connect the CN 102 to the wireless device 106 through radio communications over an air interface. As part of the radio communications, the RAN 104 may provide scheduling, radio resource management, and retransmission protocols. The communication direction from the RAN 104 to the wireless device 106 over the air interface is known as the downlink and the communication direction from the wireless device 106 to the RAN 104 over the air interface is known as the uplink. Downlink transmissions may be separated from uplink transmissions using frequency division duplexing (FDD), time-division duplexing (TDD), and/or some combination of the two duplexing techniques.

The term wireless device may be used throughout this disclosure to refer to and encompass any mobile device or fixed (non-mobile) device for which wireless communication is needed or usable. For example, a wireless device may be a telephone, smart phone, tablet, computer, laptop, sensor, meter, wearable device, Internet of Things (IoT) device, vehicle roadside unit (RSU), relay node, automobile, and/or any combination thereof. The term wireless device encompasses other terminology, including user equipment (UE), user terminal (UT), access terminal (AT), mobile station, handset, wireless transmit and receive unit (WTRU), and/or wireless communication device.

The RAN 104 may include one or more base stations (not shown). The term base station may be used throughout this disclosure to refer to and encompass a Node B (associated with UMTS and/or 3G standards), an Evolved Node B (eNB, associated with E-UTRA and/or 4G standards), a remote radio head (RRH), a baseband processing unit coupled to one or more RRHs, a repeater node or relay node used to extend the coverage area of a donor node, a Next Generation Evolved Node B (ng-eNB), a Generation Node B (gNB, associated with NR and/or 5G standards), an access point (AP, associated with, for example, Wi-Fi or any other suitable wireless communication standard), and/or any combination thereof. A base station may comprise at least one gNB Central Unit (gNB-CU) and at least one a gNB Distributed Unit (gNB-DU).

A base station included in the RAN 104 may include one or more sets of antennas for communicating with the wireless device 106 over the air interface. For example, one or more of the base stations may include three sets of antennas to respectively control three cells (or sectors). The size of a cell may be determined by a range at which a receiver (e.g., a base station receiver) can successfully receive the transmissions from a transmitter (e.g., a wireless device transmitter) operating in the cell. Together, the cells of the base stations may provide radio coverage to the wireless device 106 over a wide geographic area to support wireless device mobility.

In addition to three-sector sites, other implementations of base stations are possible. For example, one or more of the base stations in the RAN 104 may be implemented as a sectored site with more or less than three sectors. One or more of the base stations in the RAN 104 may be implemented as an access point, as a baseband processing unit coupled to several remote radio heads (RRHs), and/or as a repeater or relay node used to extend the coverage area of a donor node. A baseband processing unit coupled to RRHs may be part of a centralized or cloud RAN architecture, where the baseband processing unit may be either centralized in a pool of baseband processing units or virtualized. A repeater node may amplify and rebroadcast a radio signal received from a donor node. A relay node may perform the same/similar functions as a repeater node but may decode the radio signal received from the donor node to remove noise before amplifying and rebroadcasting the radio signal.

The RAN 104 may be deployed as a homogenous network of macrocell base stations that have similar antenna patterns and similar high-level transmit powers. The RAN 104 may be deployed as a heterogeneous network. In heterogeneous networks, small cell base stations may be used to provide small coverage areas, for example, coverage areas that overlap with the comparatively larger coverage areas provided by macrocell base stations. The small coverage areas may be provided in areas with high data traffic (or so-called "hotspots") or in areas with weak macrocell coverage. Examples of small cell base stations include, in order of decreasing coverage area, microcell base stations, picocell base stations, and femtocell base stations or home base stations.

The Third-Generation Partnership Project (3GPP) was formed in 1998 to provide global standardization of specifications for mobile communication networks similar to the mobile communication network 100 in FIG. 1A. To date, 3GPP has produced specifications for three generations of mobile networks: a third generation (3G) network known as Universal Mobile Telecommunications System (UMTS), a fourth generation (4G) network known as Long-Term Evolution (LTE), and a fifth generation (5G) network known as 5G System (5GS). Embodiments of the present disclosure are described with reference to the RAN of a 3GPP 5G network, referred to as next-generation RAN (NG-RAN). Embodiments may be applicable to RANs of other mobile communication networks, such as the RAN 104 in FIG. 1A, the RANs of earlier 3G and 4G networks, and those of future networks yet to be specified (e.g., a 3GPP 6G network). NG-RAN implements 5G radio access technology known as New Radio (NR) and may be provisioned to implement 4G radio access technology or other radio access technologies, including non-3GPP radio access technologies.

FIG. 1B illustrates another example mobile communication network 150 in which embodiments of the present disclosure may be implemented. Mobile communication network 150 may be, for example, a PLMN run by a network operator. As illustrated in FIG. 1B, mobile communication network 150 includes a 5G core network (5G-CN) 152, an NG-RAN 154, and UEs 156A and 156B (collectively UEs 156). These components may be implemented and operate in the same or similar manner as corresponding components described with respect to FIG. 1A.

The 5G-CN 152 provides the UEs 156 with an interface to one or more DNs, such as public DNs (e.g., the Internet), private DNs, and/or intra-operator DNs. As part of the interface functionality, the 5G-CN 152 may set up end-to-end connections between the UEs 156 and the one or more DNs, authenticate the UEs 156, and provide charging functionality. Compared to the CN of a 3GPP 4G network, the basis of the 5G-CN 152 may be a service-based architecture. This means that the architecture of the nodes making up the 5G-CN 152 may be defined as network functions that offer services via interfaces to other network functions. The network functions of the 5G-CN 152 may be implemented in several ways, including as network elements on dedicated or shared hardware, as software instances running on dedicated or shared hardware, or as virtualized functions instantiated on a platform (e.g., a cloud-based platform).

As illustrated in FIG. 1B, the 5G-CN 152 includes an Access and Mobility Management Function (AMF) 158A and a User Plane Function (UPF) 158B, which are shown as one component AMF/UPF 158 in FIG. 1B for ease of illustration. The UPF 158B may serve as a gateway between the NG-RAN 154 and the one or more DNs. The UPF 158B may perform functions such as packet routing and forwarding, packet inspection and user plane policy rule enforcement, traffic usage reporting, uplink classification to support routing of traffic flows to the one or more DNs, quality of service (QoS) handling for the user plane (e.g., packet filtering, gating, uplink/downlink rate enforcement, and uplink traffic verification), downlink packet buffering, and downlink data notification triggering. The UPF 158B may serve as an anchor point for intra-linter-Radio Access Technology (RAT) mobility, an external protocol (or packet) data unit (PDU) session point of interconnect to the one or more DNs, and/or a branching point to support a multi-homed PDU session. The UEs 156 may be configured to receive services through a PDU session, which is a logical connection between a UE and a DN.

The AMF 158A may perform functions such as Non-Access Stratum (NAS) signaling termination, NAS signaling security, Access Stratum (AS) security control, inter-CN node signaling for mobility between 3GPP access networks, idle mode UE reachability (e.g., control and execution of paging retransmission), registration area management, intra-system and inter-system mobility support, access authentication, access authorization including checking of roaming rights, mobility management control (subscription and policies), network slicing support, and/or session management function (SMF) selection. NAS may refer to the functionality operating between a CN and a UE, and AS may refer to the functionality operating between the UE and a RAN.

The 5G-CN 152 may include one or more additional network functions that are not shown in FIG. 1B for the sake of clarity. For example, the 5G-CN 152 may include one or more of a Session Management Function (SMF), an NR Repository Function (NRF), a Policy Control Function (PCF), a Network Exposure Function (NEF), a Unified Data Management (UDM), an Application Function (AF), and/or an Authentication Server Function (AUSF).

The NG-RAN 154 may connect the 5G-CN 152 to the UEs 156 through radio communications over the air interface. The NG-RAN 154 may include one or more gNBs, illustrated as gNB 160A and gNB 160B (collectively gNBs 160) and/or one or more ng-eNBs, illustrated as ng-eNB 162A and ng-eNB 162B (collectively ng-eNBs 162). The gNBs 160 and ng-eNBs 162 may be more generically referred to as base stations. The gNBs 160 and ng-eNBs 162 may include one or more sets of antennas for communicating with the UEs 156 over an air interface. For example, one or more of the gNBs 160 and/or one or more of the ng-eNBs 162 may include three sets of antennas to respectively control three cells (or sectors). Together, the cells of the gNBs 160 and the ng-eNBs 162 may provide radio coverage to the UEs 156 over a wide geographic area to support UE mobility.

As shown in FIG. 1B, the gNBs 160 and/or the ng-eNBs 162 may be connected to the 5G-CN 152 by means of an NG interface and to other base stations by an Xn interface. The NG and Xn interfaces may be established using direct physical connections and/or indirect connections over an underlying transport network, such as an internet protocol (IP) transport network. The gNBs 160 and/or the ng-eNBs 162 may be connected to the UEs 156 by means of a Uu interface. For example, as illustrated in FIG. 1B, gNB 160A may be connected to the UE 156A by means of a Uu interface. The NG, Xn, and Uu interfaces are associated with a protocol stack. The protocol stacks associated with the interfaces may be used by the network elements in FIG. 1B to exchange data and signaling messages and may include two planes: a user plane and a control plane. The user plane may handle data of interest to a user. The control plane may handle signaling messages of interest to the network elements.

The gNBs 160 and/or the ng-eNBs 162 may be connected to one or more AMF/UPF functions of the 5G-CN 152, such as the AMF/UPF 158, by means of one or more NG interfaces. For example, the gNB 160A may be connected to the UPF 158B of the AMF/UPF 158 by means of an NG-User plane (NG-U) interface. The NG-U interface may provide delivery (e.g., non-guaranteed delivery) of user plane PDUs between the gNB 160A and the UPF 158B. The gNB 160A may be connected to the AMF 158A by means of an NG-Control plane (NG-C) interface. The NG-C interface may provide, for example, NG interface management, UE context management, UE mobility management, transport of NAS messages, paging, PDU session management, and configuration transfer and/or warning message transmission.

The gNBs 160 may provide NR user plane and control plane protocol terminations towards the UEs 156 over the Uu interface. For example, the gNB 160A may provide NR user plane and control plane protocol terminations toward the UE 156A over a Uu interface associated with a first protocol stack. The ng-eNBs 162 may provide Evolved UMTS Terrestrial Radio Access (E-UTRA) user plane and control plane protocol terminations towards the UEs 156 over a Uu interface, where E-UTRA refers to the 3GPP 4G radio-access technology. For example, the ng-eNB 162B may provide E-UTRA user plane and control plane protocol terminations towards the UE 156B over a Uu interface associated with a second protocol stack.

The 5G-CN 152 was described as being configured to handle NR and 4G radio accesses. It will be appreciated by one of ordinary skill in the art that it may be possible for NR to connect to a 4G core network in a mode known as "non-standalone operation." In non-standalone operation, a 4G core network is used to provide (or at least support) control-plane functionality (e.g., initial access, mobility, and paging). Although only one AMF/UPF 158 is shown in FIG. 1B, one gNB or ng-eNB may be connected to multiple AMF/UPF nodes to provide redundancy and/or to load share across the multiple AMF/UPF nodes.

As discussed, an interface (e.g., Uu, Xn, and NG interfaces) between the network elements in FIG. 1B may be associated with a protocol stack that the network elements use to exchange data and signaling messages. A protocol stack may include two planes: a user plane and a control plane. The user plane may handle data of interest to a user, and the control plane may handle signaling messages of interest to the network elements.

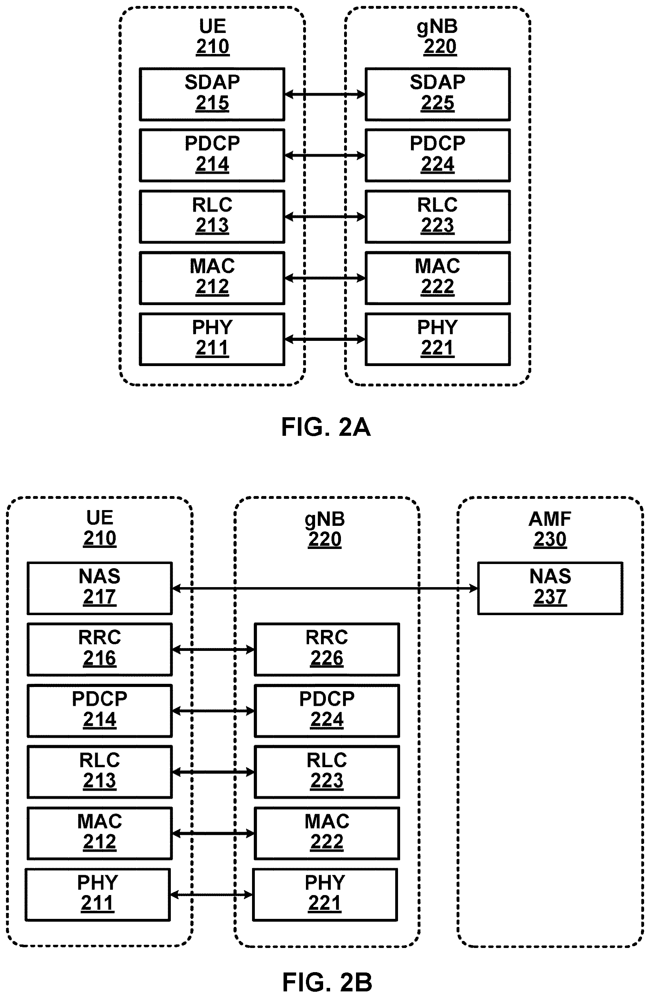

FIG. 2A and FIG. 2B respectively illustrate examples of NR user plane and NR control plane protocol stacks for the Uu interface that lies between a UE 210 and a gNB 220. The protocol stacks illustrated in FIG. 2A and FIG. 2B may be the same or similar to those used for the Uu interface between, for example, the UE 156A and the gNB 160A shown in FIG. 1B.

FIG. 2A illustrates a NR user plane protocol stack comprising five layers implemented in the UE 210 and the gNB 220. At the bottom of the protocol stack, physical layers (PHYs) 211 and 221 may provide transport services to the higher layers of the protocol stack and may correspond to layer 1 of the Open Systems Interconnection (OSI) model. The next four protocols above PHYs 211 and 221 comprise media access control layers (MACs) 212 and 222, radio link control layers (RLCs) 213 and 223, packet data convergence protocol layers (PDCPs) 214 and 224, and service data application protocol layers (SDAPs) 215 and 225. Together, these four protocols may make up layer 2, or the data link layer, of the OSI model.

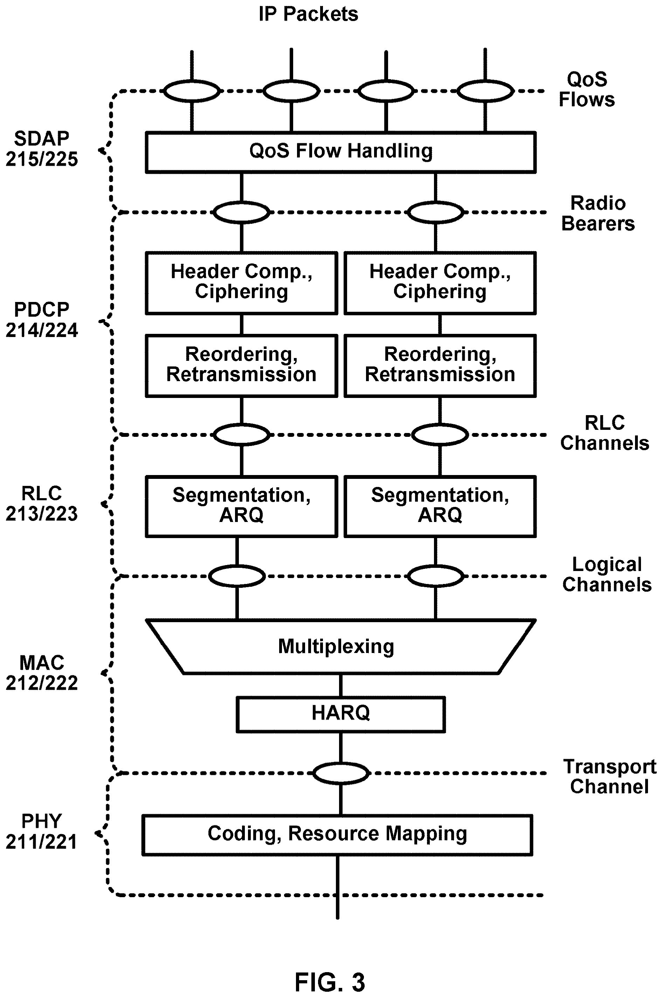

FIG. 3 illustrates an example of services provided between protocol layers of the NR user plane protocol stack. Starting from the top of FIG. 2A and FIG. 3, the SDAPs 215 and 225 may perform QoS flow handling. The UE 210 may receive services through a PDU session, which may be a logical connection between the UE 210 and a DN. The PDU session may have one or more QoS flows. A UPF of a CN (e.g., the UPF 158B) may map IP packets to the one or more QoS flows of the PDU session based on QoS requirements (e.g., in terms of delay, data rate, and/or error rate). The SDAPs 215 and 225 may perform mapping/de-mapping between the one or more QoS flows and one or more data radio bearers. The mapping/de-mapping between the QoS flows and the data radio bearers may be determined by the SDAP 225 at the gNB 220. The SDAP 215 at the UE 210 may be informed of the mapping between the QoS flows and the data radio bearers through reflective mapping or control signaling received from the gNB 220. For reflective mapping, the SDAP 225 at the gNB 220 may mark the downlink packets with a QoS flow indicator (QFI), which may be observed by the SDAP 215 at the UE 210 to determine the mapping/de-mapping between the QoS flows and the data radio bearers.

The PDCPs 214 and 224 may perform header compression/decompression to reduce the amount of data that needs to be transmitted over the air interface, ciphering/deciphering to prevent unauthorized decoding of data transmitted over the air interface, and integrity protection (to ensure control messages originate from intended sources. The PDCPs 214 and 224 may perform retransmissions of undelivered packets, in-sequence delivery and reordering of packets, and removal of packets received in duplicate due to, for example, an intra-gNB handover. The PDCPs 214 and 224 may perform packet duplication to improve the likelihood of the packet being received and, at the receiver, remove any duplicate packets. Packet duplication may be useful for services that require high reliability.

Although not shown in FIG. 3, PDCPs 214 and 224 may perform mapping/de-mapping between a split radio bearer and RLC channels in a dual connectivity scenario. Dual connectivity is a technique that allows a UE to connect to two cells or, more generally, two cell groups: a master cell group (MCG) and a secondary cell group (SCG). A split bearer is when a single radio bearer, such as one of the radio bearers provided by the PDCPs 214 and 224 as a service to the SDAPs 215 and 225, is handled by cell groups in dual connectivity. The PDCPs 214 and 224 may map/de-map the split radio bearer between RLC channels belonging to cell groups.

The RLCs 213 and 223 may perform segmentation, retransmission through Automatic Repeat Request (ARQ), and removal of duplicate data units received from MACs 212 and 222, respectively. The RLCs 213 and 223 may support three transmission modes: transparent mode (TM); unacknowledged mode (UM); and acknowledged mode (AM). Based on the transmission mode an RLC is operating, the RLC may perform one or more of the noted functions. The RLC configuration may be per logical channel with no dependency on numerologies and/or Transmission Time Interval (TTI) durations. As shown in FIG. 3, the RLCs 213 and 223 may provide RLC channels as a service to PDCPs 214 and 224, respectively.

The MACs 212 and 222 may perform multiplexing/demultiplexing of logical channels and/or mapping between logical channels and transport channels. The multiplexing/demultiplexing may include multiplexing/demultiplexing of data units, belonging to the one or more logical channels, into/from Transport Blocks (TBs) delivered to/from the PHYs 211 and 221. The MAC 222 may be configured to perform scheduling, scheduling information reporting, and priority handling between UEs by means of dynamic scheduling. Scheduling may be performed in the gNB 220 (at the MAC 222) for downlink and uplink. The MACs 212 and 222 may be configured to perform error correction through Hybrid Automatic Repeat Request (HARQ) (e.g., one HARQ entity per carrier in case of Carrier Aggregation (CA)), priority handling between logical channels of the UE 210 by means of logical channel prioritization, and/or padding. The MACs 212 and 222 may support one or more numerologies and/or transmission timings. In an example, mapping restrictions in a logical channel prioritization may control which numerology and/or transmission timing a logical channel may use. As shown in FIG. 3, the MACs 212 and 222 may provide logical channels as a service to the RLCs 213 and 223.

The PHYs 211 and 221 may perform mapping of transport channels to physical channels and digital and analog signal processing functions for sending and receiving information over the air interface. These digital and analog signal processing functions may include, for example, coding/decoding and modulation/demodulation. The PHYs 211 and 221 may perform multi-antenna mapping. As shown in FIG. 3, the PHYs 211 and 221 may provide one or more transport channels as a service to the MACs 212 and 222.

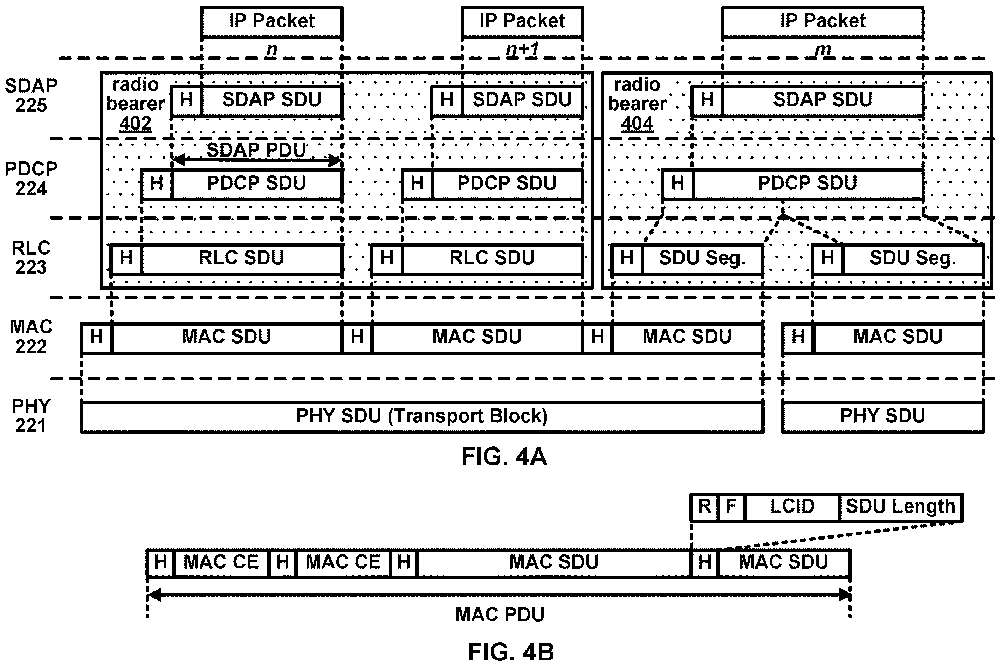

FIG. 4A illustrates an example downlink data flow through the NR user plane protocol stack. FIG. 4A illustrates a downlink data flow of three IP packets (*n, n*+*1,* and *m*) through the NR user plane protocol stack to generate two TBs at the gNB 220. An uplink data flow through the NR user plane protocol stack may be similar to the downlink data flow depicted in FIG. 4A.

The downlink data flow of FIG. 4A begins when SDAP 225 receives the three IP packets from one or more QoS flows and maps the three packets to radio bearers. In FIG. 4A, the SDAP 225 maps IP packets n and n+1 to a first radio bearer 402 and maps IP packet m to a second radio bearer 404. An SDAP header (labeled with an "H" in FIG. 4A) is added to an IP packet. The data unit from/to a higher protocol layer is referred to as a service data unit (SDU) of the lower protocol layer and the data unit to/from a lower protocol layer is referred to as a protocol data unit (PDU) of the higher protocol layer. As shown in FIG. 4A, the data unit from the SDAP 225 is an SDU of lower protocol layer PDCP 224 and is a PDU of the SDAP 225.

The remaining protocol layers in FIG. 4A may perform their associated functionality (e.g., with respect to FIG. 3), add corresponding headers, and forward their respective outputs to the next lower layer. For example, the PDCP 224 may perform IP-header compression and ciphering and forward its output to the RLC 223. The RLC 223 may optionally perform segmentation (e.g., as shown for IP packet m in FIG. 4A) and forward its output to the MAC 222. The MAC 222 may multiplex a number of RLC PDUs and may attach a MAC subheader to an RLC PDU to form a transport block. In NR, the MAC subheaders may be distributed across the MAC PDU, as illustrated in FIG. 4A. In LTE, the MAC subheaders may be entirely located at the beginning of the MAC PDU. The NR MAC PDU structure may reduce processing time and associated latency because the MAC PDU subheaders may be computed before the full MAC PDU is assembled.

FIG. 4B illustrates an example format of a MAC subheader in a MAC PDU. The MAC subheader includes: an SDU length field for indicating the length (e.g., in bytes) of the MAC SDU to which the MAC subheader corresponds; a logical channel identifier (LCID) field for identifying the logical channel from which the MAC SDU originated to aid in the demultiplexing process; a flag (F) for indicating the size of the SDU length field; and a reserved bit (R) field for future use.

FIG. 4B further illustrates MAC control elements (CEs) inserted into the MAC PDU by a MAC, such as MAC 223 or MAC 222. For example, FIG. 4B illustrates two MAC CEs inserted into the MAC PDU. MAC CEs may be inserted at the beginning of a MAC PDU for downlink transmissions (as shown in FIG. 4B) and at the end of a MAC PDU for uplink transmissions. MAC CEs may be used for in-band control signaling. Example MAC CEs include: scheduling-related MAC CEs, such as buffer status reports and power headroom reports; activation/deactivation MAC CEs, such as those for activation/deactivation of PDCP duplication detection, channel state information (CSI) reporting, sounding reference signal (SRS) transmission, and prior configured components; discontinuous reception (DRX) related MAC CEs; timing advance MAC CEs; and random access related MAC CEs. A MAC CE may be preceded by a MAC subheader with a similar format as described for MAC SDUs and may be identified with a reserved value in the LCID field that indicates the type of control information included in the MAC CE.

Before describing the NR control plane protocol stack, logical channels, transport channels, and physical channels are first described as well as a mapping between the channel types. One or more of the channels may be used to carry out functions associated with the NR control plane protocol stack described later below.

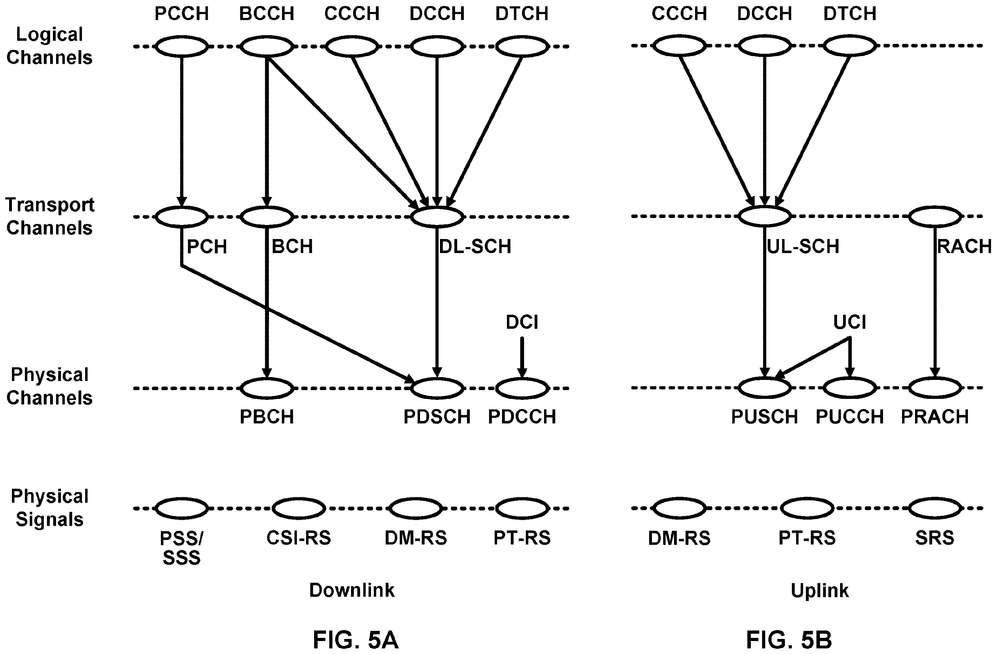

FIG. 5A and FIG. 5B illustrate, for downlink and uplink respectively, a mapping between logical channels, transport channels, and physical channels. Information is passed through channels between the RLC, the MAC, and the PHY of the NR protocol stack. A logical channel may be used between the RLC and the MAC and may be classified as a control channel that carries control and configuration information in the NR control plane or as a traffic channel that carries data in the NR user plane. A logical channel may be classified as a dedicated logical channel that is dedicated to a specific UE or as a common logical channel that may be used by more than one UE. A logical channel may also be defined by the type of information it carries. The set of logical channels defined by NR include, for example:
-- a paging control channel (PCCH) for carrying paging messages used to page a UE whose location is not known to the network on a cell level;
-- a broadcast control channel (BCCH) for carrying system information messages in the form of a master information block (MIB) and several system information blocks (SIBs), wherein the system information messages may be used by the UEs to obtain information about how a cell is configured and how to operate within the cell;
-- a common control channel (CCCH) for carrying control messages together with random access;
-- a dedicated control channel (DCCH) for carrying control messages to/from a specific the UE to configure the UE; and
-- a dedicated traffic channel (DTCH) for carrying user data to/from a specific the UE.
Transport channels are used between the MAC and PHY layers and may be defined by how the information they carry is transmitted over the air interface. The set of transport channels defined by NR include, for example:
-- a paging channel (PCH) for carrying paging messages that originated from the PCCH;
-- a broadcast channel (BCH) for carrying the MIB from the BCCH;
-- a downlink shared channel (DL-SCH) for carrying downlink data and signaling messages, including the SIBs from the BCCH;
-- an uplink shared channel (UL-SCH) for carrying uplink data and signaling messages; and
-- a random access channel (RACH) for allowing a UE to contact the network without any prior scheduling.

The PHY may use physical channels to pass information between processing levels of the PHY. A physical channel may have an associated set of time-frequency resources for carrying the information of one or more transport channels. The PHY may generate control information to support the low-level operation of the PHY and provide the control information to the lower levels of the PHY via physical control channels, known as L1/L2 control channels. The set of physical channels and physical control channels defined by NR include, for example:
-- a physical broadcast channel (PBCH) for carrying the MIB from the BCH;
-- a physical downlink shared channel (PDSCH) for carrying downlink data and signaling messages from the DL-SCH, as well as paging messages from the PCH;
-- a physical downlink control channel (PDCCH) for carrying downlink control information (DCI), which may include downlink scheduling commands, uplink scheduling grants, and uplink power control commands;
-- a physical uplink shared channel (PUSCH) for carrying uplink data and signaling messages from the UL-SCH and in some instances uplink control information (UCI) as described below;
-- a physical uplink control channel (PUCCH) for carrying UCI, which may include HARQ acknowledgments, channel quality indicators (CQI), pre-coding matrix indicators (PMI), rank indicators (RI), and scheduling requests (SR); and
-- a physical random access channel (PRACH) for random access.

Similar to the physical control channels, the physical layer generates physical signals to support the low-level operation of the physical layer. As shown in FIG. 5A and FIG. 5B, the physical layer signals defined by NR include: primary synchronization signals (PSS), secondary synchronization signals (SSS), channel state information reference signals (CSI-RS), demodulation reference signals (DMRS), sounding reference signals (SRS), and phase-tracking reference signals (PT-RS). These physical layer signals will be described in greater detail below.

FIG. 2B illustrates an example NR control plane protocol stack. As shown in FIG. 2B, the NR control plane protocol stack may use the same/similar first four protocol layers as the example NR user plane protocol stack. These four protocol layers include the PHYs 211 and 221, the MACs 212 and 222, the RLCs 213 and 223, and the PDCPs 214 and 224. Instead of having the SDAPs 215 and 225 at the top of the stack as in the NR user plane protocol stack, the NR control plane stack has radio resource controls (RRCs) 216 and 226 and NAS protocols 217 and 237 at the top of the NR control plane protocol stack.

The NAS protocols 217 and 237 may provide control plane functionality between the UE 210 and the AMF 230 (e.g., the AMF 158A) or, more generally, between the UE 210 and the CN. The NAS protocols 217 and 237 may provide control plane functionality between the UE 210 and the AMF 230 via signaling messages, referred to as NAS messages. There is no direct path between the UE 210 and the AMF 230 through which the NAS messages can be transported. The NAS messages may be transported using the AS of the Uu and NG interfaces. NAS protocols 217 and 237 may provide control plane functionality such as authentication, security, connection setup, mobility management, and session management.

The RRCs 216 and 226 may provide control plane functionality between the UE 210 and the gNB 220 or, more generally, between the UE 210 and the RAN. The RRCs 216 and 226 may provide control plane functionality between the UE 210 and the gNB 220 via signaling messages, referred to as RRC messages. RRC messages may be transmitted between the UE 210 and the RAN using signaling radio bearers and the same/similar PDCP, RLC, MAC, and PHY protocol layers. The MAC may multiplex control-plane and user-plane data into the same transport block (TB). The RRCs 216 and 226 may provide control plane functionality such as: broadcast of system information related to AS and NAS; paging initiated by the CN or the RAN; establishment, maintenance and release of an RRC connection between the UE 210 and the RAN; security functions including key management; establishment, configuration, maintenance and release of signaling radio bearers and data radio bearers; mobility functions; QoS management functions; the UE measurement reporting and control of the reporting; detection of and recovery from radio link failure (RLF); and/or NAS message transfer. As part of establishing an RRC connection, RRCs 216 and 226 may establish an RRC context, which may involve configuring parameters for communication between the UE 210 and the RAN.

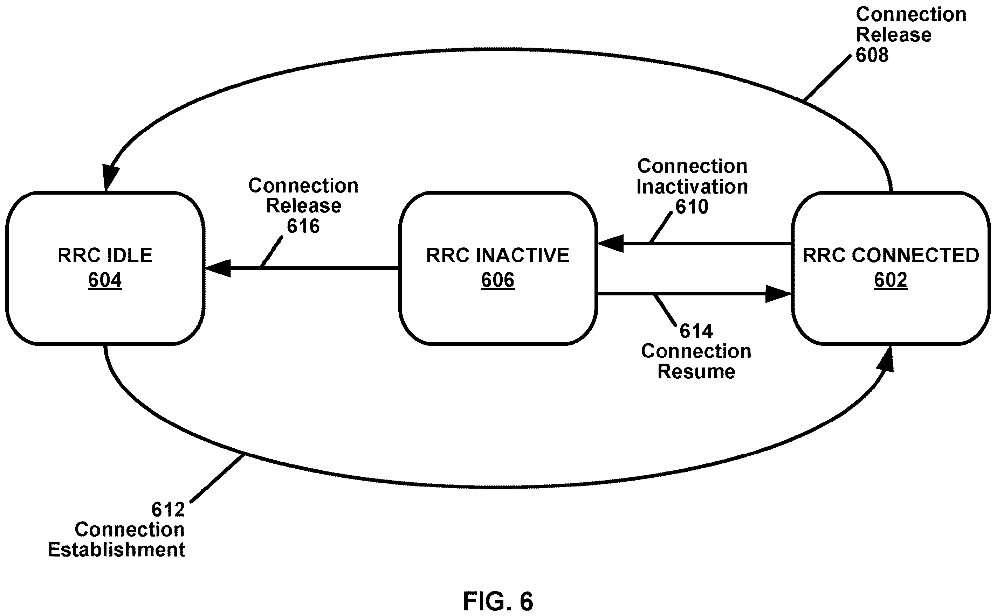

FIG. 6 is an example diagram showing RRC state transitions of a UE. The UE may be the same or similar to the wireless device 106 depicted in FIG. 1A, the UE 210 depicted in FIG. 2A and FIG. 2B, or any other wireless device described in the present disclosure. As illustrated in FIG. 6, a UE may be in at least one of three RRC states: RRC connected 602 (e.g., RRC_CONNECTED), RRC idle 604 (e.g., RRC_IDLE), and RRC inactive 606 (e.g., RRC_INACTIVE).

In RRC connected 602, the UE has an established RRC context and may have at least one RRC connection with a base station. The base station may be similar to one of the one or more base stations included in the RAN 104 depicted in FIG. 1A, one of the gNBs 160 or ng-eNBs 162 depicted in FIG. 1B, the gNB 220 depicted in FIG. 2A and FIG. 2B, or any other base station described in the present disclosure. The base station with which the UE is connected may have the RRC context for the UE. The RRC context, referred to as the UE context, may comprise parameters for communication between the UE and the base station. These parameters may include, for example: one or more AS contexts; one or more radio link configuration parameters; bearer configuration information (e.g., relating to a data radio bearer, signaling radio bearer, logical channel, QoS flow, and/or PDU session); security information; and/or PHY, MAC, RLC, PDCP, and/or SDAP layer configuration information. While in RRC connected 602, mobility of the UE may be managed by the RAN (e.g., the RAN 104 or the NG-RAN 154). The UE may measure the signal levels (e.g., reference signal levels) from a serving cell and neighboring cells and report these measurements to the base station currently serving the UE. The UE's serving base station may request a handover to a cell of one of the neighboring base stations based on the reported measurements. The RRC state may transition from RRC connected 602 to RRC idle 604 through a connection release procedure 608 or to RRC inactive 606 through a connection inactivation procedure 610.

In RRC idle 604, an RRC context may not be established for the UE. In RRC idle 604, the UE may not have an RRC connection with the base station. While in RRC idle 604, the UE may be in a sleep state for the majority of the time (e.g., to conserve battery power). The UE may wake up periodically (e.g., once in every discontinuous reception cycle) to monitor for paging messages from the RAN. Mobility of the UE may be managed by the UE through a procedure known as cell reselection. The RRC state may transition from RRC idle 604 to RRC connected 602 through a connection establishment procedure 612, which may involve a random access procedure as discussed in greater detail below.

In RRC inactive 606, the RRC context previously established is maintained in the UE and the base station. This allows for a fast transition to RRC connected 602 with reduced signaling overhead as compared to the transition from RRC idle 604 to RRC connected 602. While in RRC inactive 606, the UE may be in a sleep state and mobility of the UE may be managed by the UE through cell reselection. The RRC state may transition from RRC inactive 606 to RRC connected 602 through a connection resume procedure 614 or to RRC idle 604 though a connection release procedure 616 that may be the same as or similar to connection release procedure 608.

An RRC state may be associated with a mobility management mechanism. In RRC idle 604 and RRC inactive 606, mobility is managed by the UE through cell reselection. The purpose of mobility management in RRC idle 604 and RRC inactive 606 is to allow the network to be able to notify the UE of an event via a paging message without having to broadcast the paging message over the entire mobile communications network. The mobility management mechanism used in RRC idle 604 and RRC inactive 606 may allow the network to track the UE on a cell-group level so that the paging message may be broadcast over the cells of the cell group that the UE currently resides within instead of the entire mobile communication network. The mobility management mechanisms for RRC idle 604 and RRC inactive 606 track the UE on a cell-group level. They may do so using different granularities of grouping. For example, there may be three levels of cell-grouping granularity: individual cells; cells within a RAN area identified by a RAN area identifier (RAI); and cells within a group of RAN areas, referred to as a tracking area and identified by a tracking area identifier (TAI).

Tracking areas may be used to track the UE at the CN level. The CN (e.g., the CN 102 or the 5G-CN 152) may provide the UE with a list of TAls associated with a UE registration area. If the UE moves, through cell reselection, to a cell associated with a TAI not included in the list of TAls associated with the UE registration area, the UE may perform a registration update with the CN to allow the CN to update the UE's location and provide the UE with a new the UE registration area.

RAN areas may be used to track the UE at the RAN level. For a UE in RRC inactive 606 state, the UE may be assigned a RAN notification area. A RAN notification area may comprise one or more cell identities, a list of RAls, or a list of TAls. In an example, a base station may belong to one or more RAN notification areas. In an example, a cell may belong to one or more RAN notification areas. If the UE moves, through cell reselection, to a cell not included in the RAN notification area assigned to the UE, the UE may perform a notification area update with the RAN to update the UE's RAN notification area.

A base station storing an RRC context for a UE or a last serving base station of the UE may be referred to as an anchor base station. An anchor base station may maintain an RRC context for the UE at least during a period of time that the UE stays in a RAN notification area of the anchor base station and/or during a period of time that the UE stays in RRC inactive 606.

A gNB, such as gNBs 160 in FIG. 1B, may be split into two parts: a central unit (gNB-CU), and one or more distributed units (gNB-DU). A gNB-CU may be coupled to one or more gNB-DUs using an F1 interface. The gNB-CU may comprise the RRC, the PDCP, and the SDAP. A gNB-DU may comprise the RLC, the MAC, and the PHY.

In NR, the physical signals and physical channels (discussed with respect to FIG. 5A and FIG. 5B) may be mapped onto orthogonal frequency divisional multiplexing (OFDM) symbols. OFDM is a multicarrier communication scheme that transmits data over F orthogonal subcarriers (or tones). Before transmission, the data may be mapped to a series of complex symbols (e.g., M-quadrature amplitude modulation (M-QAM) or M-phase shift keying (M-PSK) symbols), referred to as source symbols, and divided into F parallel symbol streams. The F parallel symbol streams may be treated as though they are in the frequency domain and used as inputs to an Inverse Fast Fourier Transform (IFFT) block that transforms them into the time domain. The IFFT block may take in F source symbols at a time, one from each of the F parallel symbol streams, and use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. After some processing (e.g., addition of a cyclic prefix) and up-conversion, an OFDM symbol provided by the IFFT block may be transmitted over the air interface on a carrier frequency. The F parallel symbol streams may be mixed using an FFT block before being processed by the IFFT block. This operation produces Discrete Fourier Transform (DFT)-precoded OFDM symbols and may be used by UEs in the uplink to reduce the peak to average power ratio (PAPR). Inverse processing may be performed on the OFDM symbol at a receiver using an FFT block to recover the data mapped to the source symbols.

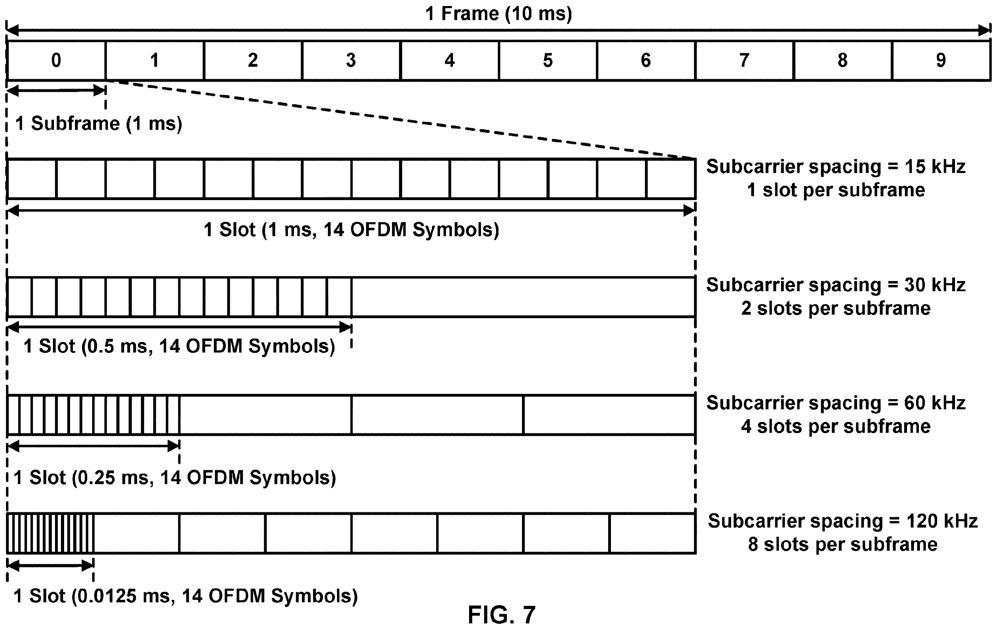

FIG. 7 illustrates an example configuration of an NR frame into which OFDM symbols are grouped. An NR frame may be identified by a system frame number (SFN). The SFN may repeat with a period of 1024 frames. As illustrated, one NR frame may be 10 milliseconds (ms) in duration and may include 10 subframes that are 1 ms in duration. A subframe may be divided into slots that include, for example, 14 OFDM symbols per slot.

The duration of a slot may depend on the numerology used for the OFDM symbols of the slot. In NR, a flexible numerology is supported to accommodate different cell deployments (e.g., cells with carrier frequencies below 1 GHz up to cells with carrier frequencies in the mm-wave range). A numerology may be defined in terms of subcarrier spacing and cyclic prefix duration. For a numerology in NR, subcarrier spacings may be scaled up by powers of two from a baseline subcarrier spacing of 15 kHz, and cyclic prefix durations may be scaled down by powers of two from a baseline cyclic prefix duration of 4.7 µs. For example, NR defines numerologies with the following subcarrier spacing/cyclic prefix duration combinations: 15 kHz/4.7 µs; 30 kHz/2.3 µs; 60 kHz/1.2 µs; 120 kHz/0.59 µs; and 240 kHz/0.29 µs.

A slot may have a fixed number of OFDM symbols (e.g., 14 OFDM symbols). A numerology with a higher subcarrier spacing has a shorter slot duration and, correspondingly, more slots per subframe. FIG. 7 illustrates this numerology-dependent slot duration and slots-per-subframe transmission structure (the numerology with a subcarrier spacing of 240 kHz is not shown in FIG. 7 for ease of illustration). A subframe in NR may be used as a numerology-independent time reference, while a slot may be used as the unit upon which uplink and downlink transmissions are scheduled. To support low latency, scheduling in NR may be decoupled from the slot duration and start at any OFDM symbol and last for as many symbols as needed for a transmission. These partial slot transmissions may be referred to as mini-slot or subslot transmissions.

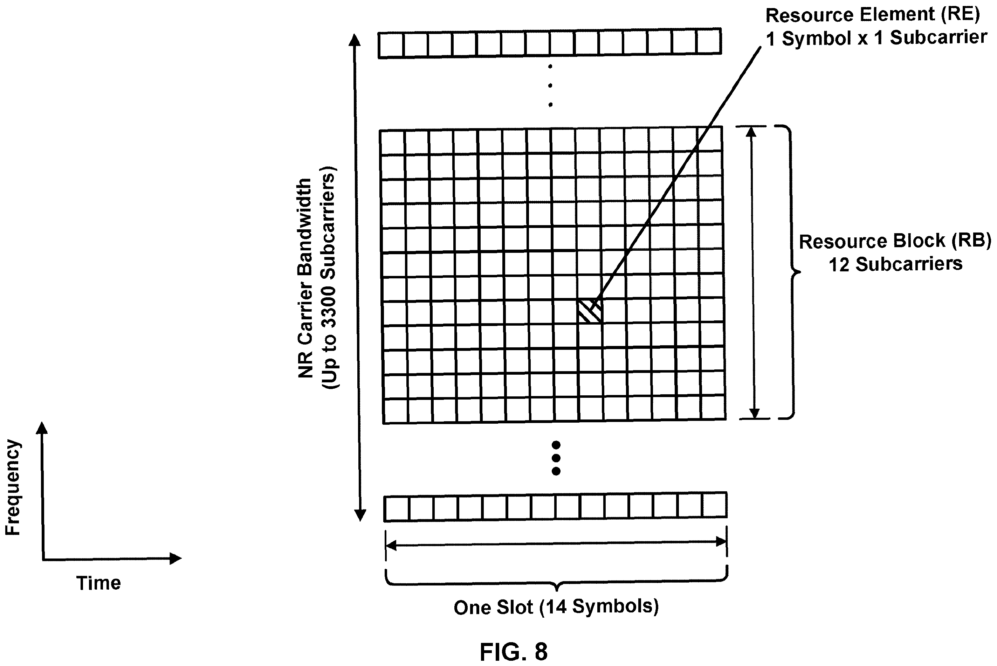

FIG. 8 illustrates an example configuration of a slot in the time and frequency domain for an NR carrier. The slot includes resource elements (REs) and resource blocks (RBs). An RE is the smallest physical resource in NR. An RE spans one OFDM symbol in the time domain by one subcarrier in the frequency domain as shown in FIG. 8. An RB spans twelve consecutive REs in the frequency domain as shown in FIG. 8. An NR carrier may be limited to a width of 275 RBs or 275×12 = 3300 subcarriers. Such a limitation, if used, may limit the NR carrier to 50, 100, 200, and 400 MHz for subcarrier spacings of 15, 30, 60, and 120 kHz, respectively, where the 400 MHz bandwidth may be set based on a 400 MHz per carrier bandwidth limit.

FIG. 8 illustrates a single numerology being used across the entire bandwidth of the NR carrier. In other example configurations, multiple numerologies may be supported on the same carrier.

NR may support wide carrier bandwidths (e.g., up to 400 MHz for a subcarrier spacing of 120 kHz). Not all UEs may be able to receive the full carrier bandwidth (e.g., due to hardware limitations). Also, receiving the full carrier bandwidth may be prohibitive in terms of UE power consumption. In an example, to reduce power consumption and/or for other purposes, a UE may adapt the size of the UE's receive bandwidth based on the amount of traffic the UE is scheduled to receive. This is referred to as bandwidth adaptation.

NR defines bandwidth parts (BWPs) to support UEs not capable of receiving the full carrier bandwidth and to support bandwidth adaptation. In an example, a BWP may be defined by a subset of contiguous RBs on a carrier. A UE may be configured (e.g., via RRC layer) with one or more downlink BWPs and one or more uplink BWPs per serving cell (e.g., up to four downlink BWPs and up to four uplink BWPs per serving cell). At a given time, one or more of the configured BWPs for a serving cell may be active. These one or more BWPs may be referred to as active BWPs of the serving cell. When a serving cell is configured with a secondary uplink carrier, the serving cell may have one or more first active BWPs in the uplink carrier and one or more second active BWPs in the secondary uplink carrier.

For unpaired spectra, a downlink BWP from a set of configured downlink BWPs may be linked with an uplink BWP from a set of configured uplink BWPs if a downlink BWP index of the downlink BWP and an uplink BWP index of the uplink BWP are the same. For unpaired spectra, a UE may expect that a center frequency for a downlink BWP is the same as a center frequency for an uplink BWP.

For a downlink BWP in a set of configured downlink BWPs on a primary cell (PCell), a base station may configure a UE with one or more control resource sets (CORESETs) for at least one search space. A search space is a set of locations in the time and frequency domains where the UE may find control information. The search space may be a UE-specific search space or a common search space (potentially usable by a plurality of UEs). For example, a base station may configure a UE with a common search space, on a PCell or on a primary secondary cell (PSCell), in an active downlink BWP.

For an uplink BWP in a set of configured uplink BWPs, a BS may configure a UE with one or more resource sets for one or more PUCCH transmissions. A UE may receive downlink receptions (e.g., PDCCH or PDSCH) in a downlink BWP according to a configured numerology (e.g., subcarrier spacing and cyclic prefix duration) for the downlink BWP. The UE may transmit uplink transmissions (e.g., PUCCH or PUSCH) in an uplink BWP according to a configured numerology (e.g., subcarrier spacing and cyclic prefix length for the uplink BWP).

One or more BWP indicator fields may be provided in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a UE with a default downlink BWP within a set of configured downlink BWPs associated with a PCell. If the base station does not provide the default downlink BWP to the UE, the default downlink BWP may be an initial active downlink BWP. The UE may determine which BWP is the initial active downlink BWP based on a CORESET configuration obtained using the PBCH.

A base station may configure a UE with a BWP inactivity timer value for a PCell. The UE may start or restart a BWP inactivity timer at any appropriate time. For example, the UE may start or restart the BWP inactivity timer (a) when the UE detects a DCI indicating an active downlink BWP other than a default downlink BWP for a paired spectra operation; or (b) when a UE detects a DCI indicating an active downlink BWP or active uplink BWP other than a default downlink BWP or uplink BWP for an unpaired spectra operation. If the UE does not detect DCI during an interval of time (e.g., 1 ms or 0.5 ms), the UE may run the BWP inactivity timer toward expiration (for example, increment from zero to the BWP inactivity timer value, or decrement from the BWP inactivity timer value to zero). When the BWP inactivity timer expires, the UE may switch from the active downlink BWP to the default downlink BWP.

In an example, a base station may semi-statically configure a UE with one or more BWPs. A UE may switch an active BWP from a first BWP to a second BWP in response to receiving a DCI indicating the second BWP as an active BWP and/or in response to an expiry of the BWP inactivity timer (e.g., if the second BWP is the default BWP).

Downlink and uplink BWP switching (where BWP switching refers to switching from a currently active BWP to a not currently active BWP) may be performed independently in paired spectra. In unpaired spectra, downlink and uplink BWP switching may be performed simultaneously. Switching between configured BWPs may occur based on RRC signaling, DCI, expiration of a BWP inactivity timer, and/or an initiation of random access.

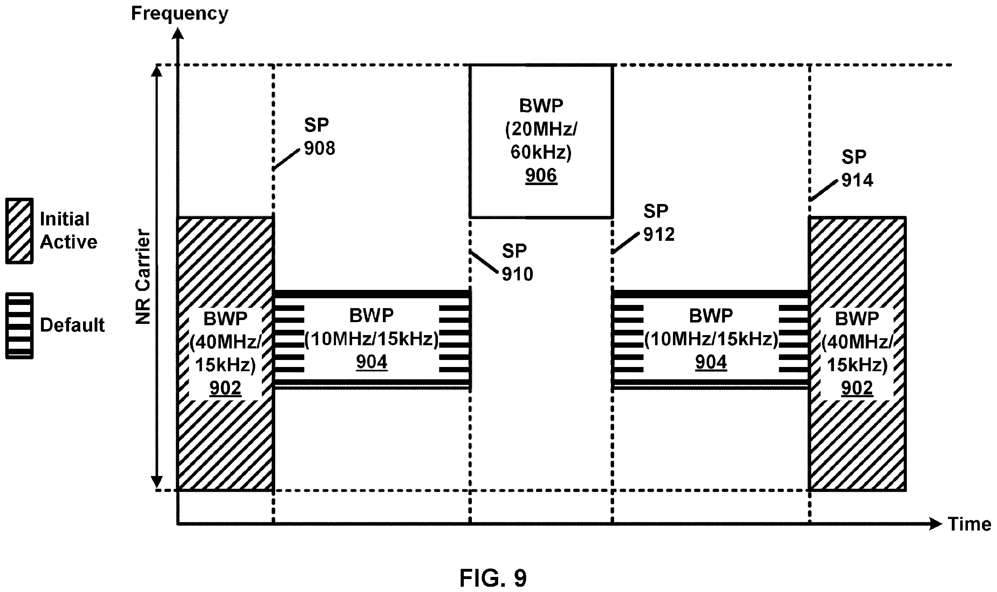

FIG. 9 illustrates an example of bandwidth adaptation using three configured BWPs for an NR carrier. A UE configured with the three BWPs may switch from one BWP to another BWP at a switching point. In the example illustrated in FIG. 9, the BWPs include: a BWP 902 with a bandwidth of 40 MHz and a subcarrier spacing of 15 kHz; a BWP 904 with a bandwidth of 10 MHz and a subcarrier spacing of 15 kHz; and a BWP 906 with a bandwidth of 20 MHz and a subcarrier spacing of 60 kHz. The BWP 902 may be an initial active BWP, and the BWP 904 may be a default BWP. The UE may switch between BWPs at switching points. In the example of FIG. 9, the UE may switch from the BWP 902 to the BWP 904 at a switching point 908. The switching at the switching point 908 may occur for any suitable reason, for example, in response to an expiry of a BWP inactivity timer (indicating switching to the default BWP) and/or in response to receiving a DCI indicating BWP 904 as the active BWP. The UE may switch at a switching point 910 from active BWP 904 to BWP 906 in response to receiving a DCI indicating BWP 906 as the active BWP. The UE may switch at a switching point 912 from active BWP 906 to BWP 904 in response to an expiry of a BWP inactivity timer and/or in response to receiving a DCI indicating BWP 904 as the active BWP. The UE may switch at a switching point 914 from active BWP 904 to BWP 902 in response to receiving a DCI indicating BWP 902 as the active BWP.

If a UE is configured for a secondary cell with a default downlink BWP in a set of configured downlink BWPs and a timer value, UE procedures for switching BWPs on a secondary cell may be the same/similar as those on a primary cell. For example, the UE may use the timer value and the default downlink BWP for the secondary cell in the same/similar manner as the UE would use these values for a primary cell.

To provide for greater data rates, two or more carriers can be aggregated and simultaneously transmitted to/from the same UE using carrier aggregation (CA). The aggregated carriers in CA may be referred to as component carriers (CCs). When CA is used, there are a number of serving cells for the UE, one for a CC. The CCs may have three configurations in the frequency domain.

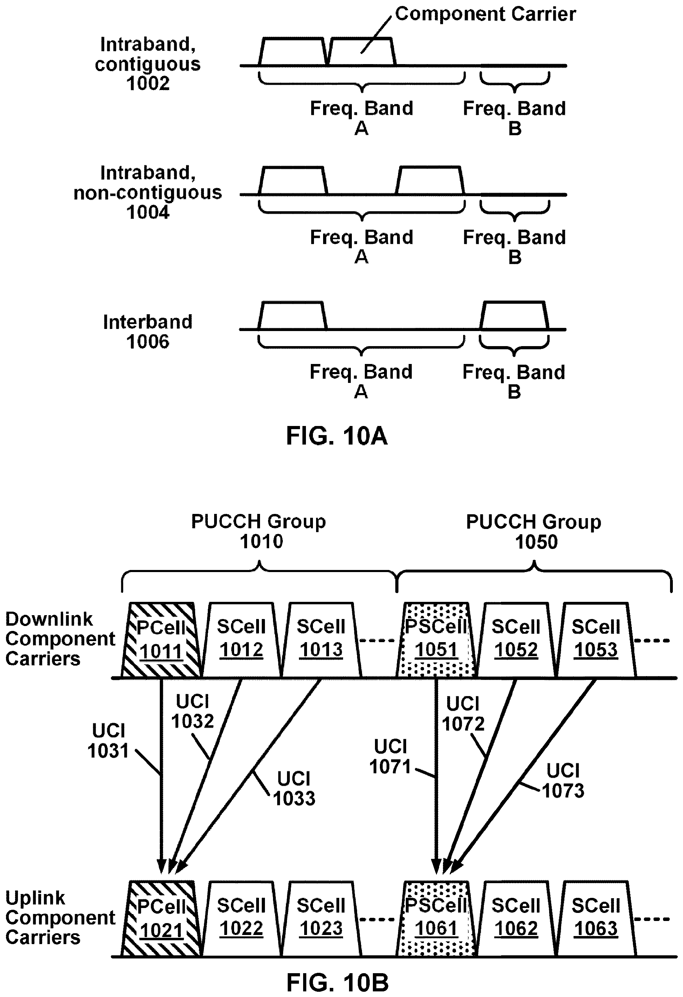

FIG. 10A illustrates the three CA configurations with two CCs. In the intraband, contiguous configuration 1002, the two CCs are aggregated in the same frequency band (frequency band A) and are located directly adjacent to each other within the frequency band. In the intraband, non-contiguous configuration 1004, the two CCs are aggregated in the same frequency band (frequency band A) and are separated in the frequency band by a gap. In the interband configuration 1006, the two CCs are located in frequency bands (frequency band A and frequency band B).

In an example, up to 32 CCs may be aggregated. The aggregated CCs may have the same or different bandwidths, subcarrier spacing, and/or duplexing schemes (TDD or FDD). A serving cell for a UE using CA may have a downlink CC. For FDD, one or more uplink CCs may be optionally configured for a serving cell. The ability to aggregate more downlink carriers than uplink carriers may be useful, for example, when the UE has more data traffic in the downlink than in the uplink.

When CA is used, one of the aggregated cells for a UE may be referred to as a primary cell (PCell). The PCell may be the serving cell that the UE initially connects to at RRC connection establishment, reestablishment, and/or handover. The PCell may provide the UE with NAS mobility information and the security input. UEs may have different PCells. In the downlink, the carrier corresponding to the PCell may be referred to as the downlink primary CC (DL PCC). In the uplink, the carrier corresponding to the PCell may be referred to as the uplink primary CC (UL PCC). The other aggregated cells for the UE may be referred to as secondary cells (SCells). In an example, the SCells may be configured after the PCell is configured for the UE. For example, an SCell may be configured through an RRC Connection Reconfiguration procedure. In the downlink, the carrier corresponding to an SCell may be referred to as a downlink secondary CC (DL SCC). In the uplink, the carrier corresponding to the SCell may be referred to as the uplink secondary CC (UL SCC).

Configured SCells for a UE may be activated and deactivated based on, for example, traffic and channel conditions. Deactivation of an SCell may mean that PDCCH and PDSCH reception on the SCell is stopped and PUSCH, SRS, and CQI transmissions on the SCell are stopped. Configured SCells may be activated and deactivated using a MAC CE with respect to FIG. 4B. For example, a MAC CE may use a bitmap (e.g., one bit per SCell) to indicate which SCells (e.g., in a subset of configured SCells) for the UE are activated or deactivated. Configured SCells may be deactivated in response to an expiration of an SCell deactivation timer (e.g., one SCell deactivation timer per SCell).

Downlink control information, such as scheduling assignments and scheduling grants, for a cell may be transmitted on the cell corresponding to the assignments and grants, which is known as self-scheduling. The DCI for the cell may be transmitted on another cell, which is known as cross-carrier scheduling. Uplink control information (e.g., HARQ acknowledgments and channel state feedback, such as CQl, PMI, and/or RI) for aggregated cells may be transmitted on the PUCCH of the PCell. For a larger number of aggregated downlink CCs, the PUCCH of the PCell may become overloaded. Cells may be divided into multiple PUCCH groups.

FIG. 10B illustrates an example of how aggregated cells may be configured into one or more PUCCH groups. A PUCCH group 1010 and a PUCCH group 1050 may include one or more downlink CCs, respectively. In the example of FIG. 10B, the PUCCH group 1010 includes three downlink CCs: a PCell 1011, an SCell 1012, and an SCell 1013. The PUCCH group 1050 includes three downlink CCs in the present example: a PCell 1051, an SCell 1052, and an SCell 1053. One or more uplink CCs may be configured as a PCell 1021, an SCell 1022, and an SCell 1023. One or more other uplink CCs may be configured as a primary SCell (PSCell) 1061, an SCell 1062, and an SCell 1063. Uplink control information (UCI) related to the downlink CCs of the PUCCH group 1010, shown as UCI 1031, UCI 1032, and UCI 1033, may be transmitted in the uplink of the PCell 1021. Uplink control information (UCI) related to the downlink CCs of the PUCCH group 1050, shown as UCI 1071, UCI 1072, and UCI 1073, may be transmitted in the uplink of the PSCell 1061. In an example, if the aggregated cells depicted in FIG. 10B were not divided into the PUCCH group 1010 and the PUCCH group 1050, a single uplink PCell to transmit UCI relating to the downlink CCs, and the PCell may become overloaded. By dividing transmissions of UCI between the PCell 1021 and the PSCell 1061, overloading may be prevented.

A cell, comprising a downlink carrier and optionally an uplink carrier, may be assigned with a physical cell ID and a cell index. The physical cell ID or the cell index may identify a downlink carrier and/or an uplink carrier of the cell, for example, depending on the context in which the physical cell ID is used. A physical cell ID may be determined using a synchronization signal transmitted on a downlink component carrier. A cell index may be determined using RRC messages. In the disclosure, a physical cell ID may be referred to as a carrier ID, and a cell index may be referred to as a carrier index. For example, when the disclosure refers to a first physical cell ID for a first downlink carrier, the disclosure may mean the first physical cell ID is for a cell comprising the first downlink carrier. The same/similar concept may apply to, for example, a carrier activation. When the disclosure indicates that a first carrier is activated, the specification may mean that a cell comprising the first carrier is activated.

In CA, a multi-carrier nature of a PHY may be exposed to a MAC. In an example, a HARQ entity may operate on a serving cell. A transport block may be generated per assignment/grant per serving cell. A transport block and potential HARQ retransmissions of the transport block may be mapped to a serving cell.

In the downlink, a base station may transmit (e.g., unicast, multicast, and/or broadcast) one or more Reference Signals (RSs) to a UE (e.g., PSS, SSS, CSI-RS, DMRS, and/or PT-RS, as shown in FIG. 5A). In the uplink, the UE may transmit one or more RSs to the base station (e.g., DMRS, PT-RS, and/or SRS, as shown in FIG. 5B). The PSS and the SSS may be transmitted by the base station and used by the UE to synchronize the UE to the base station. The PSS and the SSS may be provided in a synchronization signal (SS) / physical broadcast channel (PBCH) block that includes the PSS, the SSS, and the PBCH. The base station may periodically transmit a burst of SS/PBCH blocks.

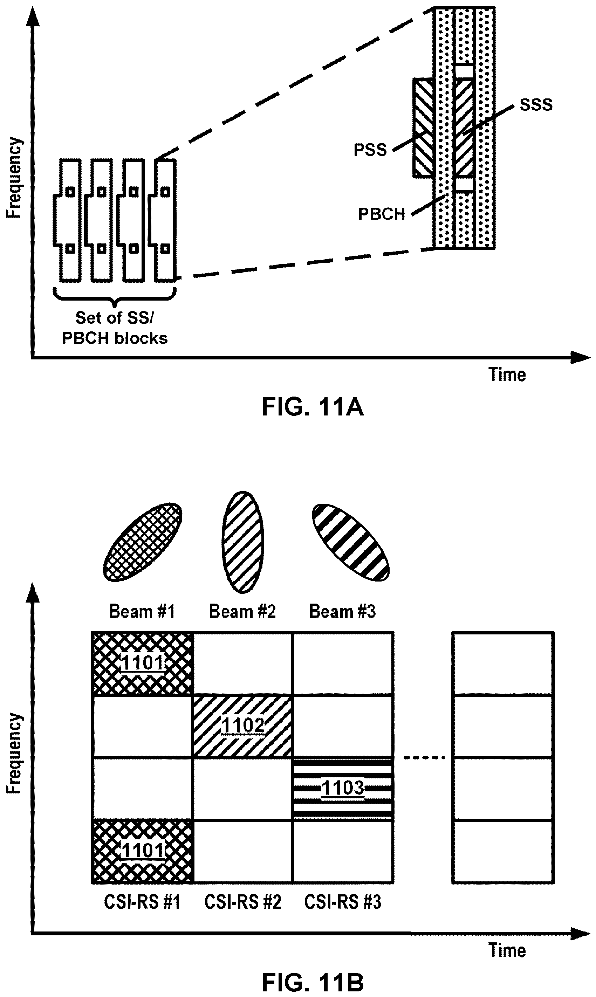

FIG. 11A illustrates an example of an SS/PBCH block's structure and location. A burst of SS/PBCH blocks may include one or more SS/PBCH blocks (e.g., 4 SS/PBCH blocks, as shown in FIG. 11A). Bursts may be transmitted periodically (e.g., every 2 frames or 20 ms). A burst may be restricted to a half-frame (e.g., a first half-frame having a duration of 5 ms). It will be understood that FIG. 11A is an example, and that these parameters (number of SS/PBCH blocks per burst, periodicity of bursts, position of burst within the frame) may be configured based on, for example: a carrier frequency of a cell in which the SS/PBCH block is transmitted; a numerology or subcarrier spacing of the cell; a configuration by the network (e.g., using RRC signaling); or any other suitable factor. In an example, the UE may assume a subcarrier spacing for the SS/PBCH block based on the carrier frequency being monitored, unless the radio network configured the UE to assume a different subcarrier spacing.

The SS/PBCH block may span one or more OFDM symbols in the time domain (e.g., 4 OFDM symbols, as shown in the example of FIG. 11A) and may span one or more subcarriers in the frequency domain (e.g., 240 contiguous subcarriers). The PSS, the SSS, and the PBCH may have a common center frequency. The PSS may be transmitted first and may span, for example, 1 OFDM symbol and 127 subcarriers. The SSS may be transmitted after the PSS (e.g., two symbols later) and may span 1 OFDM symbol and 127 subcarriers. The PBCH may be transmitted after the PSS (e.g., across the next 3 OFDM symbols) and may span 240 subcarriers.

The location of the SS/PBCH block in the time and frequency domains may not be known to the UE (e.g., if the UE is searching for the cell). To find and select the cell, the UE may monitor a carrier for the PSS. For example, the UE may monitor a frequency location within the carrier. If the PSS is not found after a certain duration (e.g., 20 ms), the UE may search for the PSS at a different frequency location within the carrier, as indicated by a synchronization raster. If the PSS is found at a location in the time and frequency domains, the UE may determine, based on a known structure of the SS/PBCH block, the locations of the SSS and the PBCH, respectively. The SS/PBCH block may be a cell-defining SS block (CD-SSB). In an example, a primary cell may be associated with a CD-SSB. The CD-SSB may be located on a synchronization raster. In an example, a cell selection/search and/or reselection may be based on the CD-SSB.

The SS/PBCH block may be used by the UE to determine one or more parameters of the cell. For example, the UE may determine a physical cell identifier (PCI) of the cell based on the sequences of the PSS and the SSS, respectively. The UE may determine a location of a frame boundary of the cell based on the location of the SS/PBCH block. For example, the SS/PBCH block may indicate that it has been transmitted in accordance with a transmission pattern, wherein a SS/PBCH block in the transmission pattern is a known distance from the frame boundary.

The PBCH may use a QPSK modulation and may use forward error correction (FEC). The FEC may use polar coding. One or more symbols spanned by the PBCH may carry one or more DMRSs for demodulation of the PBCH. The PBCH may include an indication of a current system frame number (SFN) of the cell and/or a SS/PBCH block timing index. These parameters may facilitate time synchronization of the UE to the base station. The PBCH may include a master information block (MIB) used to provide the UE with one or more parameters. The MIB may be used by the UE to locate remaining minimum system information (RMSI) associated with the cell. The RMSI may include a System Information Block Type 1 (SIB1). The SIB1 may contain information needed by the UE to access the cell. The UE may use one or more parameters of the MIB to monitor PDCCH, which may be used to schedule PDSCH. The PDSCH may include the SIB1. The SIB1 may be decoded using parameters provided in the MIB. The PBCH may indicate an absence of SIB1. Based on the PBCH indicating the absence of SIB1, the UE may be pointed to a frequency. The UE may search for an SS/PBCH block at the frequency to which the UE is pointed.

The UE may assume that one or more SS/PBCH blocks transmitted with a same SS/PBCH block index are quasi co-located (QCLed) (e.g., having the same/similar Doppler spread, Doppler shift, average gain, average delay, and/or spatial Rx parameters). The UE may not assume QCL for SS/PBCH block transmissions having different SS/PBCH block indices.

SS/PBCH blocks (e.g., those within a half-frame) may be transmitted in spatial directions (e.g., using different beams that span a coverage area of the cell). In an example, a first SS/PBCH block may be transmitted in a first spatial direction using a first beam, and a second SS/PBCH block may be transmitted in a second spatial direction using a second beam.

In an example, within a frequency span of a carrier, a base station may transmit a plurality of SS/PBCH blocks. In an example, a first PCI of a first SS/PBCH block of the plurality of SS/PBCH blocks may be different from a second PCI of a second SS/PBCH block of the plurality of SS/PBCH blocks. The PCIs of SS/PBCH blocks transmitted in different frequency locations may be different or the same.

The CSI-RS may be transmitted by the base station and used by the UE to acquire channel state information (CSI). The base station may configure the UE with one or more CSI-RSs for channel estimation or any other suitable purpose. The base station may configure a UE with one or more of the same/similar CSI-RSs. The UE may measure the one or more CSI-RSs. The UE may estimate a downlink channel state and/or generate a CSI report based on the measuring of the one or more downlink CSI-RSs. The UE may provide the CSI report to the base station. The base station may use feedback provided by the UE (e.g., the estimated downlink channel state) to perform link adaptation.

The base station may semi-statically configure the UE with one or more CSI-RS resource sets. A CSI-RS resource may be associated with a location in the time and frequency domains and a periodicity. The base station may selectively activate and/or deactivate a CSI-RS resource. The base station may indicate to the UE that a CSI-RS resource in the CSI-RS resource set is activated and/or deactivated.

The base station may configure the UE to report CSI measurements. The base station may configure the UE to provide CSI reports periodically, aperiodically, or semi-persistently. For periodic CSI reporting, the UE may be configured with a timing and/or periodicity of a plurality of CSI reports. For aperiodic CSI reporting, the base station may request a CSI report. For example, the base station may command the UE to measure a configured CSI-RS resource and provide a CSI report relating to the measurements. For semi-persistent CSI reporting, the base station may configure the UE to transmit periodically, and selectively activate or deactivate the periodic reporting. The base station may configure the UE with a CSI-RS resource set and CSI reports using RRC signaling.

The CSI-RS configuration may comprise one or more parameters indicating, for example, up to 32 antenna ports. The UE may be configured to employ the same OFDM symbols for a downlink CSI-RS and a control resource set (CORESET) when the downlink CSI-RS and CORESET are spatially QCLed and resource elements associated with the downlink CSI-RS are outside of the physical resource blocks (PRBs) configured for the CORESET. The UE may be configured to employ the same OFDM symbols for downlink CSI-RS and SS/PBCH blocks when the downlink CSI-RS and SS/PBCH blocks are spatially QCLed and resource elements associated with the downlink CSI-RS are outside of PRBs configured for the SS/PBCH blocks.

Downlink DMRSs may be transmitted by a base station and used by a UE for channel estimation. For example, the downlink DMRS may be used for coherent demodulation of one or more downlink physical channels (e.g., PDSCH). An NR network may support one or more variable and/or configurable DMRS patterns for data demodulation. At least one downlink DMRS configuration may support a front-loaded DMRS pattern. A front-loaded DMRS may be mapped over one or more OFDM symbols (e.g., one or two adjacent OFDM symbols). A base station may semi-statically configure the UE with a number (e.g., a maximum number) of front-loaded DMRS symbols for PDSCH. A DMRS configuration may support one or more DMRS ports. For example, for single user-MIMO, a DMRS configuration may support up to eight orthogonal downlink DMRS ports per UE. For multiuser-MIMO, a DMRS configuration may support up to 4 orthogonal downlink DMRS ports per UE. A radio network may support (e.g., at least for CP-OFDM) a common DMRS structure for downlink and uplink, wherein a DMRS location, a DMRS pattern, and/or a scrambling sequence may be the same or different. The base station may transmit a downlink DMRS and a corresponding PDSCH using the same precoding matrix. The UE may use the one or more downlink DMRSs for coherent demodulation/channel estimation of the PDSCH.

In an example, a transmitter (e.g., a base station) may use a precoder matrices for a part of a transmission bandwidth. For example, the transmitter may use a first precoder matrix for a first bandwidth and a second precoder matrix for a second bandwidth. The first precoder matrix and the second precoder matrix may be different based on the first bandwidth being different from the second bandwidth. The UE may assume that a same precoding matrix is used across a set of PRBs. The set of PRBs may be denoted as a precoding resource block group (PRG).

A PDSCH may comprise one or more layers. The UE may assume that at least one symbol with DMRS is present on a layer of the one or more layers of the PDSCH. A higher layer may configure up to 3 DMRSs for the PDSCH.

Downlink PT-RS may be transmitted by a base station and used by a UE for phase-noise compensation. Whether a downlink PT-RS is present or not may depend on an RRC configuration. The presence and/or pattern of the downlink PT-RS may be configured on a UE-specific basis using a combination of RRC signaling and/or an association with one or more parameters employed for other purposes (e.g., modulation and coding scheme (MCS)), which may be indicated by DCI. When configured, a dynamic presence of a downlink PT-RS may be associated with one or more DCI parameters comprising at least MCS. An NR network may support a plurality of PT-RS densities defined in the time and/or frequency domains. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. Downlink PT-RS may be confined in the scheduled time/frequency duration for the UE. Downlink PT-RS may be transmitted on symbols to facilitate phase tracking at the receiver.

The UE may transmit an uplink DMRS to a base station for channel estimation. For example, the base station may use the uplink DMRS for coherent demodulation of one or more uplink physical channels. For example, the UE may transmit an uplink DMRS with a PUSCH and/or a PUCCH. The uplink DM-RS may span a range of frequencies that is similar to a range of frequencies associated with the corresponding physical channel. The base station may configure the UE with one or more uplink DMRS configurations. At least one DMRS configuration may support a front-loaded DMRS pattern. The front-loaded DMRS may be mapped over one or more OFDM symbols (e.g., one or two adjacent OFDM symbols). One or more uplink DMRSs may be configured to transmit at one or more symbols of a PUSCH and/or a PUCCH. The base station may semi-statically configure the UE with a number (e.g., maximum number) of front-loaded DMRS symbols for the PUSCH and/or the PUCCH, which the UE may use to schedule a single-symbol DMRS and/or a double-symbol DMRS. An NR network may support (e.g., for cyclic prefix orthogonal frequency division multiplexing (CP-OFDM)) a common DMRS structure for downlink and uplink, wherein a DMRS location, a DMRS pattern, and/or a scrambling sequence for the DMRS may be the same or different.

A PUSCH may comprise one or more layers, and the UE may transmit at least one symbol with DMRS present on a layer of the one or more layers of the PUSCH. In an example, a higher layer may configure up to three DMRSs for the PUSCH.

Uplink PT-RS (which may be used by a base station for phase tracking and/or phase-noise compensation) may or may not be present depending on an RRC configuration of the UE. The presence and/or pattern of uplink PT-RS may be configured on a UE-specific basis by a combination of RRC signaling and/or one or more parameters employed for other purposes (e.g., Modulation and Coding Scheme (MCS)), which may be indicated by DCI. When configured, a dynamic presence of uplink PT-RS may be associated with one or more DCI parameters comprising at least MCS. A radio network may support a plurality of uplink PT-RS densities defined in time/frequency domain. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. For example, uplink PT-RS may be confined in the scheduled time/frequency duration for the UE.

SRS may be transmitted by a UE to a base station for channel state estimation to support uplink channel dependent scheduling and/or link adaptation. SRS transmitted by the UE may allow a base station to estimate an uplink channel state at one or more frequencies. A scheduler at the base station may employ the estimated uplink channel state to assign one or more resource blocks for an uplink PUSCH transmission from the UE. The base station may semi-statically configure the UE with one or more SRS resource sets. For an SRS resource set, the base station may configure the UE with one or more SRS resources. An SRS resource set applicability may be configured by a higher layer (e.g., RRC) parameter. For example, when a higher layer parameter indicates beam management, an SRS resource in an SRS resource set of the one or more SRS resource sets (e.g., with the same/similar time domain behavior, periodic, aperiodic, and/or the like) may be transmitted at a time instant (e.g., simultaneously). The UE may transmit one or more SRS resources in SRS resource sets. An NR network may support aperiodic, periodic and/or semi-persistent SRS transmissions. The UE may transmit SRS resources based on one or more trigger types, wherein the one or more trigger types may comprise higher layer signaling (e.g., RRC) and/or one or more DCI formats. In an example, at least one DCI format may be employed for the UE to select at least one of one or more configured SRS resource sets. An SRS trigger type 0 may refer to an SRS triggered based on a higher layer signaling. An SRS trigger type 1 may refer to an SRS triggered based on one or more DCI formats. In an example, when PUSCH and SRS are transmitted in a same slot, the UE may be configured to transmit SRS after a transmission of a PUSCH and a corresponding uplink DMRS.

The base station may semi-statically configure the UE with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port is defined such that the channel over which a symbol on the antenna port is conveyed can be inferred from the channel over which another symbol on the same antenna port is conveyed. If a first symbol and a second symbol are transmitted on the same antenna port, the receiver may infer the channel (e.g., fading gain, multipath delay, and/or the like) for conveying the second symbol on the antenna port, from the channel for conveying the first symbol on the antenna port. A first antenna port and a second antenna port may be referred to as quasi co-located (QCLed) if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming require beam management. Beam management may comprise beam measurement, beam selection, and beam indication. A beam may be associated with one or more reference signals. For example, a beam may be identified by one or more beamformed reference signals. The UE may perform downlink beam measurement based on downlink reference signals (e.g., a channel state information reference signal (CSI-RS)) and generate a beam measurement report. The UE may perform the downlink beam measurement procedure after an RRC connection is set up with a base station.

FIG. 11B illustrates an example of channel state information reference signals (CSI-RSs) that are mapped in the time and frequency domains. A square shown in FIG. 11B may span a resource block (RB) within a bandwidth of a cell. A base station may transmit one or more RRC messages comprising CSI-RS resource configuration parameters indicating one or more CSI-RSs. One or more of the following parameters may be configured by higher layer signaling (e.g., RRC and/or MAC signaling) for a CSI-RS resource configuration: a CSI-RS resource configuration identity, a number of CSI-RS ports, a CSI-RS configuration (e.g., symbol and resource element (RE) locations in a subframe), a CSI-RS subframe configuration (e.g., subframe location, offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid*), and/or other radio resource parameters.

The three beams illustrated in FIG. 11B may be configured for a UE in a UE-specific configuration. Three beams are illustrated in FIG. 11B (beam #1, beam #2, and beam #3), more or fewer beams may be configured. Beam #1 may be allocated with CSI-RS 1101 that may be transmitted in one or more subcarriers in an RB of a first symbol. Beam #2 may be allocated with CSI-RS 1102 that may be transmitted in one or more subcarriers in an RB of a second symbol. Beam #3 may be allocated with CSI-RS 1103 that may be transmitted in one or more subcarriers in an RB of a third symbol. By using frequency division multiplexing (FDM), a base station may use other subcarriers in a same RB (for example, those that are not used to transmit CSI-RS 1101) to transmit another CSI-RS associated with a beam for another UE. By using time domain multiplexing (TDM), beams used for the UE may be configured such that beams for the UE use symbols from beams of other UEs.

CSI-RSs such as those illustrated in FIG. 11B (e.g., CSI-RS 1101, 1102, 1103) may be transmitted by the base station and used by the UE for one or more measurements. For example, the UE may measure a reference signal received power (RSRP) of configured CSI-RS resources. The base station may configure the UE with a reporting configuration and the UE may report the RSRP measurements to a network (for example, via one or more base stations) based on the reporting configuration. In an example, the base station may determine, based on the reported measurement results, one or more transmission configuration indication (TCI) states comprising a number of reference signals. In an example, the base station may indicate one or more TCI states to the UE (e.g., via RRC signaling, a MAC CE, and/or a DCI). The UE may receive a downlink transmission with a receive (Rx) beam determined based on the one or more TCI states. In an example, the UE may or may not have a capability of beam correspondence. If the UE has the capability of beam correspondence, the UE may determine a spatial domain filter of a transmit (Tx) beam based on a spatial domain filter of the corresponding Rx beam. If the UE does not have the capability of beam correspondence, the UE may perform an uplink beam selection procedure to determine the spatial domain filter of the Tx beam. The UE may perform the uplink beam selection procedure based on one or more sounding reference signal (SRS) resources configured to the UE by the base station. The base station may select and indicate uplink beams for the UE based on measurements of the one or more SRS resources transmitted by the UE.

In a beam management procedure, a UE may assess (e.g., measure) a channel quality of one or more beam pair links, a beam pair link comprising a transmitting beam transmitted by a base station and a receiving beam received by the UE. Based on the assessment, the UE may transmit a beam measurement report indicating one or more beam pair quality parameters comprising, e.g., one or more beam identifications (e.g., a beam index, a reference signal index, or the like), RSRP, a precoding matrix indicator (PMI), a channel quality indicator (CQI), and/or a rank indicator (RI).

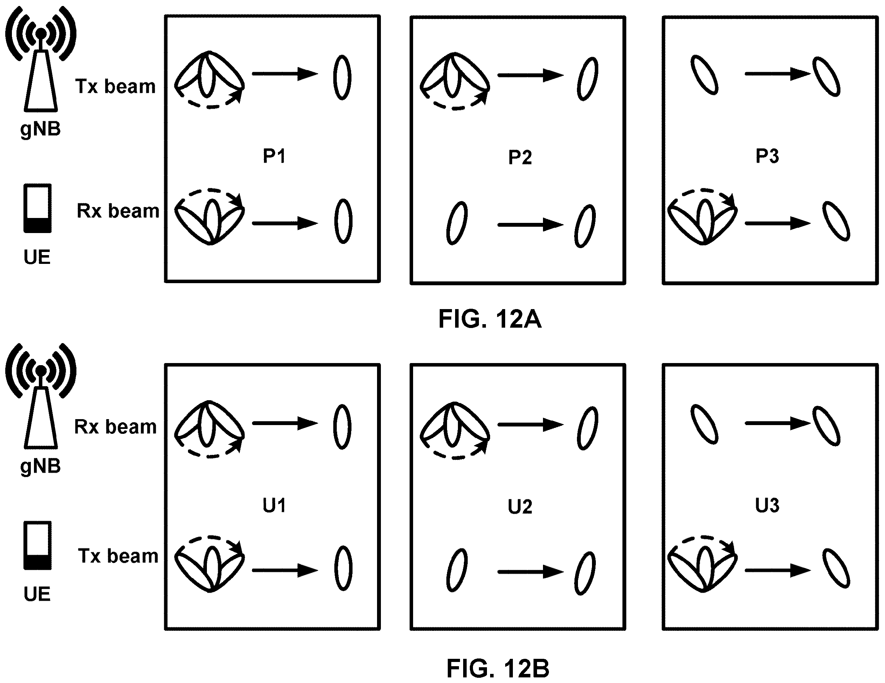

FIG. 12A illustrates examples of three downlink beam management procedures: P1, P2, and P3. Procedure P1 may enable a UE measurement on transmit (Tx) beams of a transmission reception point (TRP) (or multiple TRPs), e.g., to support a selection of one or more base station Tx beams and/or UE Rx beams (shown as ovals in the top row and bottom row, respectively, of P1). Beamforming at a TRP may comprise a Tx beam sweep for a set of beams (shown, in the top rows of P1 and P2, as ovals rotated in a counterclockwise direction indicated by the dashed arrow). Beamforming at a UE may comprise an Rx beam sweep for a set of beams (shown, in the bottom rows of P1 and P3, as ovals rotated in a clockwise direction indicated by the dashed arrow). Procedure P2 may be used to enable a UE measurement on Tx beams of a TRP (shown, in the top row of P2, as ovals rotated in a counterclockwise direction indicated by the dashed arrow). The UE and/or the base station may perform procedure P2 using a smaller set of beams than is used in procedure P1, or using narrower beams than the beams used in procedure P1. This may be referred to as beam refinement. The UE may perform procedure P3 for Rx beam determination by using the same Tx beam at the base station and sweeping an Rx beam at the UE.

FIG. 12B illustrates examples of three uplink beam management procedures: U1, U2, and U3. Procedure U1 may be used to enable a base station to perform a measurement on Tx beams of a UE, e.g., to support a selection of one or more UE Tx beams and/or base station Rx beams (shown as ovals in the top row and bottom row, respectively, of U1). Beamforming at the UE may include, e.g., a Tx beam sweep from a set of beams (shown in the bottom rows of U1 and U3 as ovals rotated in a clockwise direction indicated by the dashed arrow). Beamforming at the base station may include, e.g., an Rx beam sweep from a set of beams (shown, in the top rows of U1 and U2, as ovals rotated in a counterclockwise direction indicated by the dashed arrow). Procedure U2 may be used to enable the base station to adjust its Rx beam when the UE uses a fixed Tx beam. The UE and/or the base station may perform procedure U2 using a smaller set of beams than is used in procedure P1, or using narrower beams than the beams used in procedure P1. This may be referred to as beam refinement The UE may perform procedure U3 to adjust its Tx beam when the base station uses a fixed Rx beam.

A UE may initiate a beam failure recovery (BFR) procedure based on detecting a beam failure. The UE may transmit a BFR request (e.g., a preamble, a UCI, an SR, a MAC CE, and/or the like) based on the initiating of the BFR procedure. The UE may detect the beam failure based on a determination that a quality of beam pair link(s) of an associated control channel is unsatisfactory (e.g., having an error rate higher than an error rate threshold, a received signal power lower than a received signal power threshold, an expiration of a timer, and/or the like).

The UE may measure a quality of a beam pair link using one or more reference signals (RSs) comprising one or more SS/PBCH blocks, one or more CSI-RS resources, and/or one or more demodulation reference signals (DMRSs). A quality of the beam pair link may be based on one or more of a block error rate (BLER), an RSRP value, a signal to interference plus noise ratio (SINR) value, a reference signal received quality (RSRQ) value, and/or a CSI value measured on RS resources. The base station may indicate that an RS resource is quasi co-located (QCLed) with one or more DM-RSs of a channel (e.g., a control channel, a shared data channel, and/or the like). The RS resource and the one or more DMRSs of the channel may be QCLed when the channel characteristics (e.g., Doppler shift, Doppler spread, average delay, delay spread, spatial Rx parameter, fading, and/or the like) from a transmission via the RS resource to the UE are similar or the same as the channel characteristics from a transmission via the channel to the UE.

A network (e.g., a gNB and/or an ng-eNB of a network) and/or the UE may initiate a random access procedure. A UE in an RRC_IDLE state and/or an RRC_INACTIVE state may initiate the random access procedure to request a connection setup to a network. The UE may initiate the random access procedure from an RRC_CONNECTED state. The UE may initiate the random access procedure to request uplink resources (e.g., for uplink transmission of an SR when there is no PUCCH resource available) and/or acquire uplink timing (e.g., when uplink synchronization status is non-synchronized). The UE may initiate the random access procedure to request one or more system information blocks (SIBs) (e.g., other system information such as SIB2, SIB3, and/or the like). The UE may initiate the random access procedure for a beam failure recovery request. A network may initiate a random access procedure for a handover and/or for establishing time alignment for an SCell addition.

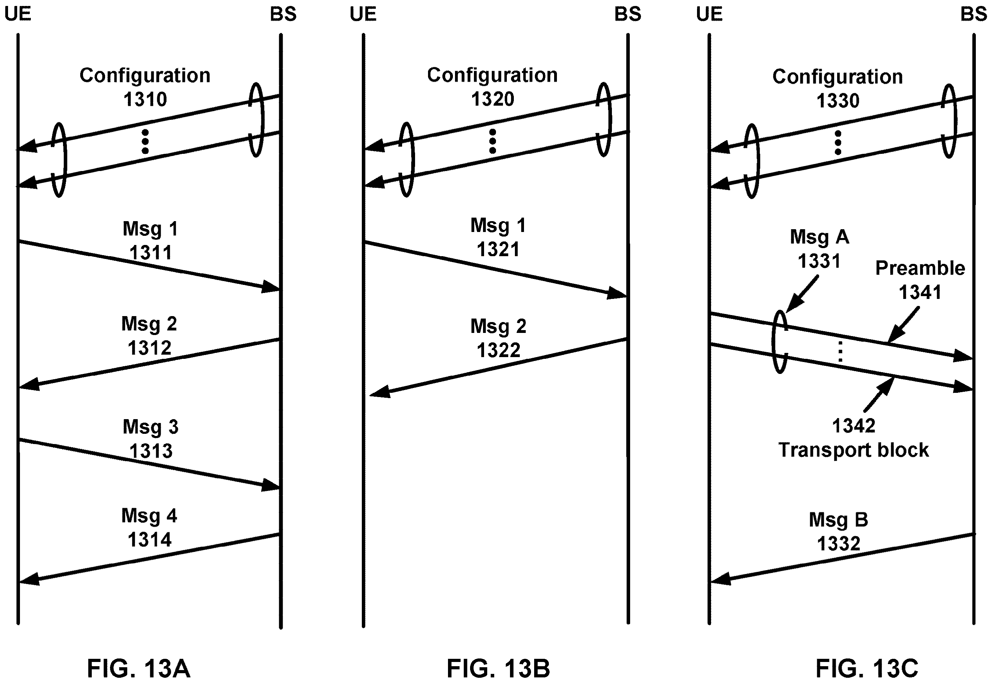

FIG. 13A illustrates a four-step contention-based random access procedure. Prior to initiation of the procedure, a base station may transmit a configuration message 1310 to the UE. The procedure illustrated in FIG. 13A comprises transmission of four messages: a Msg 1 1311, a Msg 2 1312, a Msg 3 1313, and a Msg 4 1314. The Msg 1 1311 may include and/or be referred to as a preamble (or a random access preamble). The Msg 2 1312 may include and/or be referred to as a random access response (RAR).

The configuration message 1310 may be transmitted, for example, using one or more RRC messages. The one or more RRC messages may indicate one or more random access channel (RACH) parameters to the UE. The one or more RACH parameters may comprise at least one of following: general parameters for one or more random access procedures (e.g., *RACH-configGeneral*); cell-specific parameters (e.g., *RACH-ConfigCommon);* and/or dedicated parameters (e.g., *RACH-configDedicated).* The base station may broadcast or multicast the one or more RRC messages to one or more UEs. The one or more RRC messages may be UE-specific (e.g., dedicated RRC messages transmitted to a UE in an RRC_CONNECTED state and/or in an RRC_INACTIVE state). The UE may determine, based on the one or more RACH parameters, a time-frequency resource and/or an uplink transmit power for transmission of the Msg 1 1311 and/or the Msg 3 1313. Based on the one or more RACH parameters, the UE may determine a reception timing and a downlink channel for receiving the Msg 2 1312 and the Msg 4 1314.

The one or more RACH parameters provided in the configuration message 1310 may indicate one or more Physical RACH (PRACH) occasions available for transmission of the Msg 1 1311. The one or more PRACH occasions may be predefined. The one or more RACH parameters may indicate one or more available sets of one or more PRACH occasions (e.g., *prach-Configlndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. For example, the one or more RACH parameters may indicate a number of SS/PBCH blocks mapped to a PRACH occasion and/or a number of preambles mapped to a SS/PBCH blocks.

The one or more RACH parameters provided in the configuration message 1310 may be used to determine an uplink transmit power of Msg 1 1311 and/or Msg 3 1313. For example, the one or more RACH parameters may indicate a reference power for a preamble transmission (e.g., a received target power and/or an initial power of the preamble transmission). There may be one or more power offsets indicated by the one or more RACH parameters. For example, the one or more RACH parameters may indicate: a power ramping step; a power offset between SSB and CSI-RS; a power offset between transmissions of the Msg 1 1311 and the Msg 3 1313; and/or a power offset value between preamble groups. The one or more RACH parameters may indicate one or more thresholds based on which the UE may determine at least one reference signal (e.g., an SSB and/or CSI-RS) and/or an uplink carrier (e.g., a normal uplink (NUL) carrier and/or a supplemental uplink (SUL) carrier).

The Msg 1 1311 may include one or more preamble transmissions (e.g., a preamble transmission and one or more preamble retransmissions). An RRC message may be used to configure one or more preamble groups (e.g., group A and/or group B). A preamble group may comprise one or more preambles. The UE may determine the preamble group based on a pathloss measurement and/or a size of the Msg 3 1313. The UE may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS).* The UE may select at least one preamble associated with the one or more reference signals and/or a selected preamble group, for example, if the association between the one or more preambles and the at least one reference signal is configured by an RRC message.

The UE may determine the preamble based on the one or more RACH parameters provided in the configuration message 1310. For example, the UE may determine the preamble based on a pathloss measurement, an RSRP measurement, and/or a size of the Msg 3 1313. As another example, the one or more RACH parameters may indicate: a preamble format; a maximum number of preamble transmissions; and/or one or more thresholds for determining one or more preamble groups (e.g., group A and group B). A base station may use the one or more RACH parameters to configure the UE with an association between one or more preambles and one or more reference signals (e.g., SSBs and/or CSI-RSs). If the association is configured, the UE may determine the preamble to include in Msg 1 1311 based on the association. The Msg 1 1311 may be transmitted to the base station via one or more PRACH occasions. The UE may use one or more reference signals (e.g., SSBs and/or CSI-RSs) for selection of the preamble and for determining of the PRACH occasion. One or more RACH parameters (e.g., *ra-ssb-OccasionMskindex* and/or *ra-OccasionList*) may indicate an association between the PRACH occasions and the one or more reference signals.

The UE may perform a preamble retransmission if no response is received following a preamble transmission. The UE may increase an uplink transmit power for the preamble retransmission. The UE may select an initial preamble transmit power based on a pathloss measurement and/or a target received preamble power configured by the network. The UE may determine to retransmit a preamble and may ramp up the uplink transmit power. The UE may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The UE may ramp up the uplink transmit power if the UE determines a reference signal (e.g., SSB and/or CSI-RS) that is the same as a previous preamble transmission. The UE may count a number of preamble transmissions and/or retransmissions (e.g., *PREAMBLE*_*TRANSMISSION*_*COUNTER*)*.* The UE may determine that a random access procedure completed unsuccessfully, for example, if the number of preamble transmissions exceeds a threshold configured by the one or more RACH parameters (e.g., *preamble TransMax).*

The Msg 2 1312 received by the UE may include an RAR. In some scenarios, the Msg 2 1312 may include multiple RARs corresponding to multiple UEs. The Msg 2 1312 may be received after or in response to the transmitting of the Msg 1 1311. The Msg 2 1312 may be scheduled on the DL-SCH and indicated on a PDCCH using a random access RNTI (RA-RNTI). The Msg 2 1312 may indicate that the Msg 1 1311 was received by the base station. The Msg 2 1312 may include a time-alignment command that may be used by the UE to adjust the UE's transmission timing, a scheduling grant for transmission of the Msg 3 1313, and/or a Temporary Cell RNTI (TC-RNTI). After transmitting a preamble, the UE may start a time window (e.g., *ra-ResponseWindow*) to monitor a PDCCH for the Msg 2 1312. The UE may determine when to start the time window based on a PRACH occasion that the UE uses to transmit the preamble. For example, the UE may start the time window one or more symbols after a last symbol of the preamble (e.g., at a first PDCCH occasion from an end of a preamble transmission). The one or more symbols may be determined based on a numerology. The PDCCH may be in a common search space (e.g., a Type1-PDCCH common search space) configured by an RRC message. The UE may identify the RAR based on a Radio Network Temporary Identifier (RNTI). RNTIs may be used depending on one or more events initiating the random access procedure. The UE may use random access RNTI (RA-RNTI). The RA-RNTI may be associated with PRACH occasions in which the UE transmits a preamble. For example, the UE may determine the RA-RNTI based on: an OFDM symbol index; a slot index; a frequency domain index; and/or a UL carrier indicator of the PRACH occasions. An example of RA-RNTI may be as follows:

RA-RNTI= 1 + s_id + 14 × t_id + 14 × 80 × f_id + 14 × 80 × 8 × ul_carrier_id, where s_id may be an index of a first OFDM symbol of the PRACH occasion (e.g., 0 ≤ s_id < 14), t_id may be an index of a first slot of the PRACH occasion in a system frame (e.g., 0 ≤ t_id < 80), f_id may be an index of the PRACH occasion in the frequency domain (e.g., 0 ≤ f_id < 8), and ul_carrier_id may be a UL carrier used for a preamble transmission (e.g., 0 for an NUL carrier, and 1 for an SUL carrier).

The UE may transmit the Msg 3 1313 in response to a successful reception of the Msg 2 1312 (e.g., using resources identified in the Msg 2 1312). The Msg 3 1313 may be used for contention resolution in, for example, the contention-based random access procedure illustrated in FIG. 13A. In some scenarios, a plurality of UEs may transmit a same preamble to a base station and the base station may provide an RAR that corresponds to a UE. Collisions may occur if the plurality of UEs interpret the RAR as corresponding to themselves. Contention resolution (e.g., using the Msg 3 1313 and the Msg 4 1314) may be used to increase the likelihood that the UE does not incorrectly use an identity of another the UE. To perform contention resolution, the UE may include a device identifier in the Msg 3 1313 (e.g., a C-RNTI if assigned, a TC-RNTI included in the Msg 2 1312, and/or any other suitable identifier).

The Msg 4 1314 may be received after or in response to the transmitting of the Msg 3 1313. If a C-RNTI was included in the Msg 3 1313, the base station will address the UE on the PDCCH using the C-RNTI. If the UE's unique C-RNTI is detected on the PDCCH, the random access procedure is determined to be successfully completed. If a TC-RNTI is included in the Msg 3 1313 (e.g., if the UE is in an RRC_IDLE state or not otherwise connected to the base station), Msg 4 1314 will be received using a DL-SCH associated with the TC-RNTI. If a MAC PDU is successfully decoded and a MAC PDU comprises the UE contention resolution identity MAC CE that matches or otherwise corresponds with the CCCH SDU sent (e.g., transmitted) in Msg 3 1313, the UE may determine that the contention resolution is successful and/or the UE may determine that the random access procedure is successfully completed.

The UE may be configured with a supplementary uplink (SUL) carrier and a normal uplink (NUL) carrier. An initial access (e.g., random access procedure) may be supported in an uplink carrier. For example, a base station may configure the UE with two separate RACH configurations: one for an SUL carrier and the other for an NUL carrier. For random access in a cell configured with an SUL carrier, the network may indicate which carrier to use (NUL or SUL). The UE may determine the SUL carrier, for example, if a measured quality of one or more reference signals is lower than a broadcast threshold. Uplink transmissions of the random access procedure (e.g., the Msg 1 1311 and/or the Msg 3 1313) may remain on the selected carrier. The UE may switch an uplink carrier during the random access procedure (e.g., between the Msg 1 1311 and the Msg 3 1313) in one or more cases. For example, the UE may determine and/or switch an uplink carrier for the Msg 1 1311 and/or the Msg 3 1313 based on a channel clear assessment (e.g., a listen-before-talk).

FIG. 13B illustrates a two-step contention-free random access procedure. Similar to the four-step contention-based random access procedure illustrated in FIG. 13A, a base station may, prior to initiation of the procedure, transmit a configuration message 1320 to the UE. The configuration message 1320 may be analogous in some respects to the configuration message 1310. The procedure illustrated in FIG. 13B comprises transmission of two messages: a Msg 1 1321 and a Msg 2 1322. The Msg 1 1321 and the Msg 2 1322 may be analogous in some respects to the Msg 1 1311 and a Msg 2 1312 illustrated in FIG. 13A, respectively. As will be understood from FIGS. 13A and 13B, the contention-free random access procedure may not include messages analogous to the Msg 3 1313 and/or the Msg 4 1314.

The contention-free random access procedure illustrated in FIG. 13B may be initiated for a beam failure recovery, other SI request, SCell addition, and/or handover. For example, a base station may indicate or assign to the UE the preamble to be used for the Msg 1 1321. The UE may receive, from the base station via PDCCH and/or RRC, an indication of a preamble (e.g., *ra-Preambleindex*).

After transmitting a preamble, the UE may start a time window (e.g., *ra-ResponseWindow*) to monitor a PDCCH for the RAR. In the event of a beam failure recovery request, the base station may configure the UE with a separate time window and/or a separate PDCCH in a search space indicated by an RRC message (e.g., *recoverySearchSpaceId*)*.* The UE may monitor for a PDCCH transmission addressed to a Cell RNTI (C-RNTI) on the search space. In the contention-free random access procedure illustrated in FIG. 13B, the UE may determine that a random access procedure successfully completes after or in response to transmission of Msg 1 1321 and reception of a corresponding Msg 2 1322. The UE may determine that a random access procedure successfully completes, for example, if a PDCCH transmission is addressed to a C-RNTI. The UE may determine that a random access procedure successfully completes, for example, if the UE receives an RAR comprising a preamble identifier corresponding to a preamble transmitted by the UE and/or the RAR comprises a MAC sub-PDU with the preamble identifier. The UE may determine the response as an indication of an acknowledgement for an SI request.

FIG. 13C illustrates another two-step random access procedure. Similar to the random access procedures illustrated in FIGS. 13A and 13B, a base station may, prior to initiation of the procedure, transmit a configuration message 1330 to the UE. The configuration message 1330 may be analogous in some respects to the configuration message 1310 and/or the configuration message 1320. The procedure illustrated in FIG. 13C comprises transmission of two messages: a Msg A 1331 and a Msg B 1332.

Msg A 1331 may be transmitted in an uplink transmission by the UE. Msg A 1331 may comprise one or more transmissions of a preamble 1341 and/or one or more transmissions of a transport block 1342. The transport block 1342 may comprise contents that are similar and/or equivalent to the contents of the Msg 3 1313 illustrated in FIG. 13A. The transport block 1342 may comprise UCI (e.g., an SR, a HARQ ACK/NACK, and/or the like). The UE may receive the Msg B 1332 after or in response to transmitting the Msg A 1331. The Msg B 1332 may comprise contents that are similar and/or equivalent to the contents of the Msg 2 1312 (e.g., an RAR) illustrated in FIGS. 13A and 13B and/or the Msg 4 1314 illustrated in FIG. 13A.

The UE may initiate the two-step random access procedure in FIG. 13C for licensed spectrum and/or unlicensed spectrum. The UE may determine, based on one or more factors, whether to initiate the two-step random access procedure. The one or more factors may be: a radio access technology in use (e.g., LTE, NR, and/or the like); whether the UE has valid TA or not; a cell size; the UE's RRC state; a type of spectrum (e.g., licensed vs. unlicensed); and/or any other suitable factors.

The UE may determine, based on two-step RACH parameters included in the configuration message 1330, a radio resource and/or an uplink transmit power for the preamble 1341 and/or the transport block 1342 included in the Msg A 1331. The RACH parameters may indicate a modulation and coding schemes (MCS), a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the UE to determine a reception timing and a downlink channel for monitoring for and/or receiving Msg B 1332.

The transport block 1342 may comprise data (e.g., delay-sensitive data), an identifier of the UE, security information, and/or device information (e.g., an International Mobile Subscriber Identity (IMSI)). The base station may transmit the Msg B 1332 as a response to the Msg A 1331. The Msg B 1332 may comprise at least one of following: a preamble identifier; a timing advance command; a power control command; an uplink grant (e.g., a radio resource assignment and/or an MCS); a UE identifier for contention resolution; and/or an RNTI (e.g., a C-RNTI or a TC-RNTI). The UE may determine that the two-step random access procedure is successfully completed if: a preamble identifier in the Msg B 1332 is matched to a preamble transmitted by the UE; and/or the identifier of the UE in Msg B 1332 is matched to the identifier of the UE in the Msg A 1331 (e.g., the transport block 1342).

A UE and a base station may exchange control signaling. The control signaling may be referred to as L1/L2 control signaling and may originate from the PHY layer (e.g., layer 1) and/or the MAC layer (e.g., layer 2). The control signaling may comprise downlink control signaling transmitted from the base station to the UE and/or uplink control signaling transmitted from the UE to the base station.

The downlink control signaling may comprise: a downlink scheduling assignment; an uplink scheduling grant indicating uplink radio resources and/or a transport format; a slot format information; a preemption indication; a power control command; and/or any other suitable signaling. The UE may receive the downlink control signaling in a payload transmitted by the base station on a physical downlink control channel (PDCCH). The payload transmitted on the PDCCH may be referred to as downlink control information (DCI). In some scenarios, the PDCCH may be a group common PDCCH (GC-PDCCH) that is common to a group of UEs.

A base station may attach one or more cyclic redundancy check (CRC) parity bits to a DCI in order to facilitate detection of transmission errors. When the DCI is intended for a UE (or a group of the UEs), the base station may scramble the CRC parity bits with an identifier of the UE (or an identifier of the group of the UEs). Scrambling the CRC parity bits with the identifier may comprise Modulo-2 addition (or an exclusive OR operation) of the identifier value and the CRC parity bits. The identifier may comprise a 16-bit value of a radio network temporary identifier (RNTI).

DCls may be used for different purposes. A purpose may be indicated by the type of RNTI used to scramble the CRC parity bits. For example, a DCI having CRC parity bits scrambled with a paging RNTI (P-RNTI) may indicate paging information and/or a system information change notification. The P-RNTI may be predefined as "FFFE" in hexadecimal. A DCI having CRC parity bits scrambled with a system information RNTI (SI-RNTI) may indicate a broadcast transmission of the system information. The SI-RNTI may be predefined as "FFFF" in hexadecimal. A DCI having CRC parity bits scrambled with a random access RNTI (RA-RNTI) may indicate a random access response (RAR). A DCI having CRC parity bits scrambled with a cell RNTI (C-RNTI) may indicate a dynamically scheduled unicast transmission and/or a triggering of PDCCH-ordered random access. A DCI having CRC parity bits scrambled with a temporary cell RNTI (TC-RNTI) may indicate a contention resolution (e.g., a Msg 3 analogous to the Msg 3 1313 illustrated in FIG. 13A). Other RNTIs configured to the UE by a base station may comprise a Configured Scheduling RNTI (CS-RNTI), a Transmit Power Control-PUCCH RNTI (TPC-PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C-RNTI), and/or the like.

Depending on the purpose and/or content of a DCI, the base station may transmit the DCls with one or more DCI formats. For example, DCI format 0_0 may be used for scheduling of PUSCH in a cell. DCI format 0_0 may be a fallback DCI format (e.g., with compact DCI payloads). DCI format 0_1 may be used for scheduling of PUSCH in a cell (e.g., with more DCI payloads than DCI format 0_0). DCI format 1_0 may be used for scheduling of PDSCH in a cell. DCI format 1_0 may be a fallback DCI format (e.g., with compact DCI payloads). DCI format 1_1 may be used for scheduling of PDSCH in a cell (e.g., with more DCI payloads than DCI format 1_0). DCI format 2_0 may be used for providing a slot format indication to a group of UEs. DCI format 2_1 may be used for notifying a group of UEs of a physical resource block and/or OFDM symbol where the UE may assume no transmission is intended to the UE. DCI format 2_2 may be used for transmission of a transmit power control (TPC) command for PUCCH or PUSCH. DCI format 2_3 may be used for transmission of a group of TPC commands for SRS transmissions by one or more UEs. DCI format(s) for new functions may be defined in future releases. DCI formats may have different DCI sizes, or may share the same DCI size.

After scrambling a DCI with a RNTI, the base station may process the DCI with channel coding (e.g., polar coding), rate matching, scrambling and/or QPSK modulation. A base station may map the coded and modulated DCI on resource elements used and/or configured for a PDCCH. Based on a payload size of the DCI and/or a coverage of the base station, the base station may transmit the DCI via a PDCCH occupying a number of contiguous control channel elements (CCEs). The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

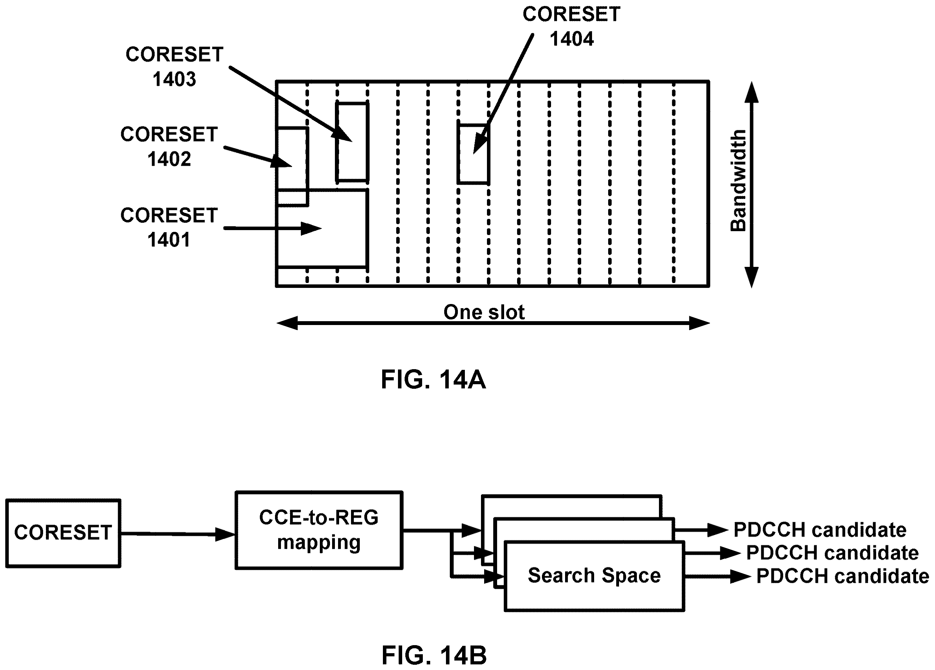

FIG. 14A illustrates an example of CORESET configurations for a bandwidth part. The base station may transmit a DCI via a PDCCH on one or more control resource sets (CORESETs). A CORESET may comprise a time-frequency resource in which the UE tries to decode a DCI using one or more search spaces. The base station may configure a CORESET in the time-frequency domain. In the example of FIG. 14A, a first CORESET 1401 and a second CORESET 1402 occur at the first symbol in a slot. The first CORESET 1401 overlaps with the second CORESET 1402 in the frequency domain. A third CORESET 1403 occurs at a third symbol in the slot. A fourth CORESET 1404 occurs at the seventh symbol in the slot. CORESETs may have a different number of resource blocks in frequency domain.

FIG. 14B illustrates an example of a CCE-to-REG mapping for DCI transmission on a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping by RRC configuration. A CORESET may be configured with an antenna port quasi co-location (QCL) parameter. The antenna port QCL parameter may indicate QCL information of a demodulation reference signal (DMRS) for PDCCH reception in the CORESET.

The base station may transmit, to the UE, RRC messages comprising configuration parameters of one or more CORESETs and one or more search space sets. The configuration parameters may indicate an association between a search space set and a CORESET. A search space set may comprise a set of PDCCH candidates formed by CCEs at a given aggregation level. The configuration parameters may indicate: a number of PDCCH candidates to be monitored per aggregation level; a PDCCH monitoring periodicity and a PDCCH monitoring pattern; one or more DCI formats to be monitored by the UE; and/or whether a search space set is a common search space set or a UE-specific search space set. A set of CCEs in the common search space set may be predefined and known to the UE. A set of CCEs in the UE-specific search space set may be configured based on the UE's identity (e.g., C-RNTI).

As shown in FIG. 14B, the UE may determine a time-frequency resource for a CORESET based on RRC messages. The UE may determine a CCE-to-REG mapping (e.g., interleaved or non-interleaved, and/or mapping parameters) for the CORESET based on configuration parameters of the CORESET. The UE may determine a number (e.g., at most 10) of search space sets configured on the CORESET based on the RRC messages. The UE may monitor a set of PDCCH candidates according to configuration parameters of a search space set. The UE may monitor a set of PDCCH candidates in one or more CORESETs for detecting one or more DCls. Monitoring may comprise decoding one or more PDCCH candidates of the set of the PDCCH candidates according to the monitored DCI formats. Monitoring may comprise decoding a DCI content of one or more PDCCH candidates with possible (or configured) PDCCH locations, possible (or configured) PDCCH formats (e.g., number of CCEs, number of PDCCH candidates in common search spaces, and/or number of PDCCH candidates in the UE-specific search spaces) and possible (or configured) DCI formats. The decoding may be referred to as blind decoding. The UE may determine a DCI as valid for the UE, in response to CRC checking (e.g., scrambled bits for CRC parity bits of the DCI matching a RNTI value). The UE may process information contained in the DCI (e.g., a scheduling assignment, an uplink grant, power control, a slot format indication, a downlink preemption, and/or the like).

The UE may transmit uplink control signaling (e.g., uplink control information (UCI)) to a base station. The uplink control signaling may comprise hybrid automatic repeat request (HARQ) acknowledgements for received DL-SCH transport blocks. The UE may transmit the HARQ acknowledgements after receiving a DL-SCH transport block. Uplink control signaling may comprise channel state information (CSI) indicating channel quality of a physical downlink channel. The UE may transmit the CSI to the base station. The base station, based on the received CSI, may determine transmission format parameters (e.g., comprising multi-antenna and beamforming schemes) for a downlink transmission. Uplink control signaling may comprise scheduling requests (SR). The UE may transmit an SR indicating that uplink data is available for transmission to the base station. The UE may transmit a UCI (e.g., HARQ acknowledgements (HARQ-ACK), CSI report, SR, and the like) via a physical uplink control channel (PUCCH) or a physical uplink shared channel (PUSCH). The UE may transmit the uplink control signaling via a PUCCH using one of several PUCCH formats.

There may be five PUCCH formats and the UE may determine a PUCCH format based on a size of the UCI (e.g., a number of uplink symbols of UCI transmission and a number of UCI bits). PUCCH format 0 may have a length of one or two OFDM symbols and may include two or fewer bits. The UE may transmit UCI in a PUCCH resource using PUCCH format 0 if the transmission is over one or two symbols and the number of HARQ-ACK information bits with positive or negative SR (HARQ-ACK/SR bits) is one or two. PUCCH format 1 may occupy a number between four and fourteen OFDM symbols and may include two or fewer bits. The UE may use PUCCH format 1 if the transmission is four or more symbols and the number of HARQ-ACK/SR bits is one or two. PUCCH format 2 may occupy one or two OFDM symbols and may include more than two bits. The UE may use PUCCH format 2 if the transmission is over one or two symbols and the number of UCI bits is two or more. PUCCH format 3 may occupy a number between four and fourteen OFDM symbols and may include more than two bits. The UE may use PUCCH format 3 if the transmission is four or more symbols, the number of UCI bits is two or more and PUCCH resource does not include an orthogonal cover code. PUCCH format 4 may occupy a number between four and fourteen OFDM symbols and may include more than two bits. The UE may use PUCCH format 4 if the transmission is four or more symbols, the number of UCI bits is two or more and the PUCCH resource includes an orthogonal cover code.

The base station may transmit configuration parameters to the UE for a plurality of PUCCH resource sets using, for example, an RRC message. The plurality of PUCCH resource sets (e.g., up to four sets) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*), and/or a number (e.g., a maximum number) of UCI information bits the UE may transmit using one of the plurality of PUCCH resources in the PUCCH resource set. When configured with a plurality of PUCCH resource sets, the UE may select one of the plurality of PUCCH resource sets based on a total bit length of the UCI information bits (e.g., HARQ-ACK, SR, and/or CSI). If the total bit length of UCI information bits is two or fewer, the UE may select a first PUCCH resource set having a PUCCH resource set index equal to "0". If the total bit length of UCI information bits is greater than two and less than or equal to a first configured value, the UE may select a second PUCCH resource set having a PUCCH resource set index equal to "1". If the total bit length of UCI information bits is greater than the first configured value and less than or equal to a second configured value, the UE may select a third PUCCH resource set having a PUCCH resource set index equal to "2". If the total bit length of UCI information bits is greater than the second configured value and less than or equal to a third value (e.g., 1406), the UE may select a fourth PUCCH resource set having a PUCCH resource set index equal to "3".

After determining a PUCCH resource set from a plurality of PUCCH resource sets, the UE may determine a PUCCH resource from the PUCCH resource set for UCI (HARQ-ACK, CSI, and/or SR) transmission. The UE may determine the PUCCH resource based on a PUCCH resource indicator in a DCI (e.g., with a DCI format 1_0 or DCI for 1_1) received on a PDCCH. A three-bit PUCCH resource indicator in the DCI may indicate one of eight PUCCH resources in the PUCCH resource set. Based on the PUCCH resource indicator, the UE may transmit the UCI (HARQ-ACK, CSI and/or SR) using a PUCCH resource indicated by the PUCCH resource indicator in the DCI.

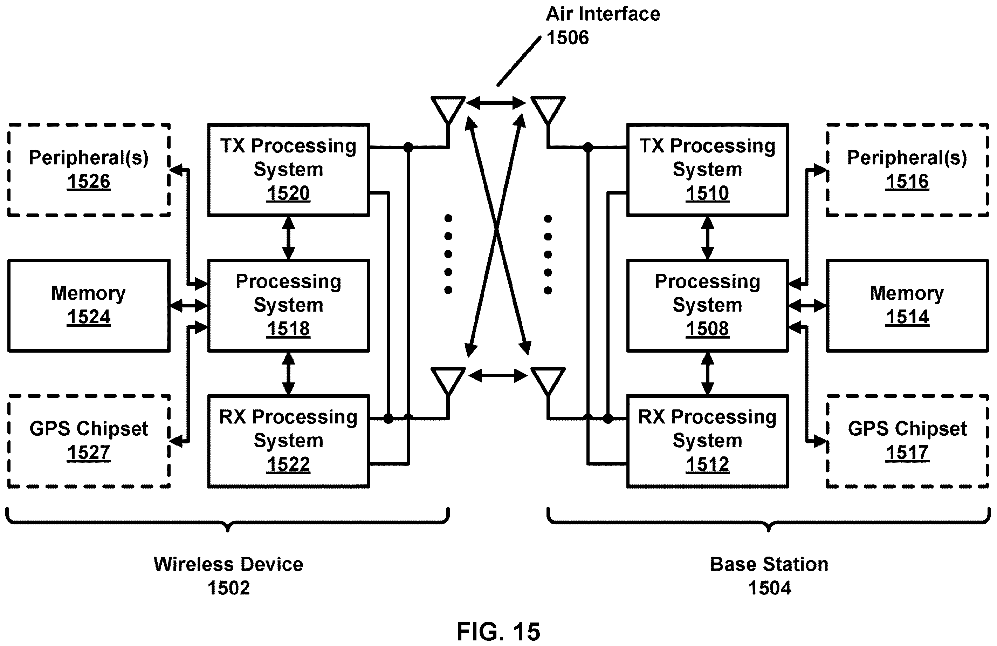

FIG. 15 illustrates an example of a wireless device 1502 in communication with a base station 1504 in accordance with embodiments of the present disclosure. The wireless device 1502 and base station 1504 may be part of a mobile communication network, such as the mobile communication network 100 illustrated in FIG. 1A, the mobile communication network 150 illustrated in FIG. 1B, or any other communication network. Only one wireless device 1502 and one base station 1504 are illustrated in FIG. 15, but it will be understood that a mobile communication network may include more than one UE and/or more than one base station, with the same or similar configuration as those shown in FIG. 15.

The base station 1504 may connect the wireless device 1502 to a core network (not shown) through radio communications over the air interface (or radio interface) 1506. The communication direction from the base station 1504 to the wireless device 1502 over the air interface 1506 is known as the downlink, and the communication direction from the wireless device 1502 to the base station 1504 over the air interface is known as the uplink. Downlink transmissions may be separated from uplink transmissions using FDD, TDD, and/or some combination of the two duplexing techniques.

In the downlink, data to be sent to the wireless device 1502 from the base station 1504 may be provided to the processing system 1508 of the base station 1504. The data may be provided to the processing system 1508 by, for example, a core network. In the uplink, data to be sent to the base station 1504 from the wireless device 1502 may be provided to the processing system 1518 of the wireless device 1502. The processing system 1508 and the processing system 1518 may implement layer 3 and layer 2 OSI functionality to process the data for transmission. Layer 2 may include an SDAP layer, a PDCP layer, an RLC layer, and a MAC layer, for example, with respect to FIG. 2A, FIG. 2B, FIG. 3, and FIG. 4A. Layer 3 may include an RRC layer as with respect to FIG. 2B.

After being processed by processing system 1508, the data to be sent to the wireless device 1502 may be provided to a transmission processing system 1510 of base station 1504. Similarly, after being processed by the processing system 1518, the data to be sent to base station 1504 may be provided to a transmission processing system 1520 of the wireless device 1502. The transmission processing system 1510 and the transmission processing system 1520 may implement layer 1 OSI functionality. Layer 1 may include a PHY layer with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

At the base station 1504, a reception processing system 1512 may receive the uplink transmission from the wireless device 1502. At the wireless device 1502, a reception processing system 1522 may receive the downlink transmission from base station 1504. The reception processing system 1512 and the reception processing system 1522 may implement layer 1 OSI functionality. Layer 1 may include a PHY layer with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

As shown in FIG. 15, a wireless device 1502 and the base station 1504 may include multiple antennas. The multiple antennas may be used to perform one or more MIMO or multi-antenna techniques, such as spatial multiplexing (e.g., single-user MIMO or multi-user MIMO), transmit/receive diversity, and/or beamforming. In other examples, the wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518 to carry out one or more of the functionalities discussed in the present application. Although not shown in FIG. 15, the transmission processing system 1510, the transmission processing system 1520, the reception processing system 1512, and/or the reception processing system 1522 may be coupled to a memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and the base station 1504 to operate in a wireless environment.

The processing system 1508 and/or the processing system 1518 may be connected to one or more peripherals 1516 and one or more peripherals 1526, respectively. The one or more peripherals 1516 and the one or more peripherals 1526 may include software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive user input data from and/or provide user output data to the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 and/or the processing system 1518 may be connected to a GPS chipset 1517 and a GPS chipset 1527, respectively. The GPS chipset 1517 and the GPS chipset 1527 may be configured to provide geographic location information of the wireless device 1502 and the base station 1504, respectively.

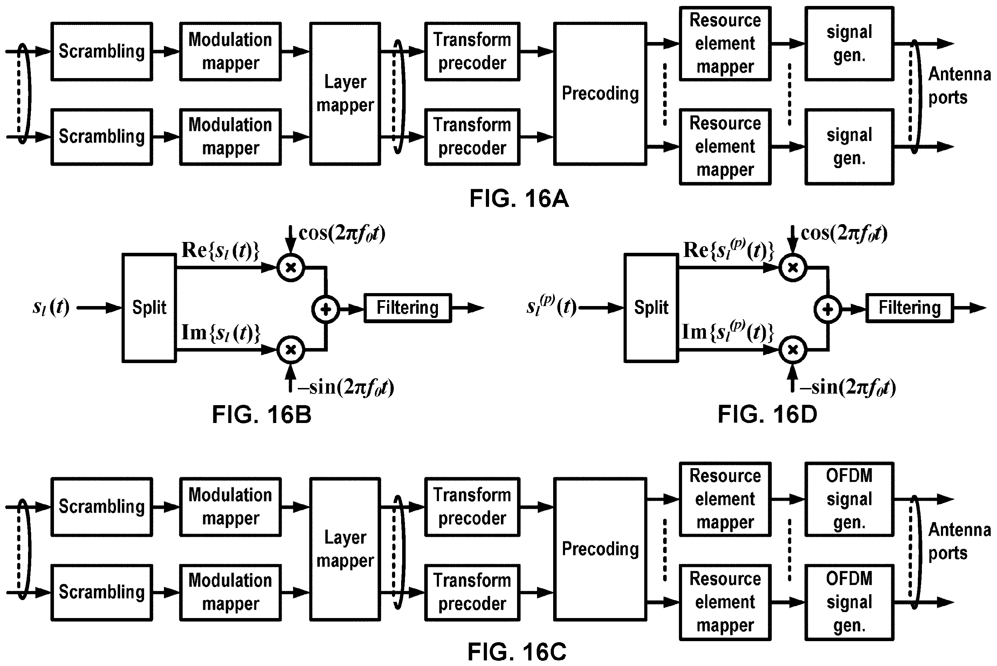

FIG. 16A illustrates an example structure for uplink transmission. A baseband signal representing a physical uplink shared channel may perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA) or CP-OFDM signal for an antenna port; and/or the like. In an example, when transform precoding is enabled, a SC-FDMA signal for uplink transmission may be generated. In an example, when transform precoding is not enabled, a CP-OFDM signal for uplink transmission may be generated by FIG. 16A. These functions are illustrated as examples and it is anticipated that other mechanisms may be implemented in various embodiments.

FIG. 16B illustrates an example structure for modulation and up-conversion of a baseband signal to a carrier frequency. The baseband signal may be a complex-valued SC-FDMA or CP-OFDM baseband signal for an antenna port and/or a complex-valued Physical Random Access Channel (PRACH) baseband signal. Filtering may be employed prior to transmission.

FIG. 16C illustrates an example structure for downlink transmissions. A baseband signal representing a physical downlink channel may perform one or more functions. The one or more functions may comprise: scrambling of coded bits in a codeword to be transmitted on a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are illustrated as examples and it is anticipated that other mechanisms may be implemented in various embodiments.

FIG. 16D illustrates another example structure for modulation and up-conversion of a baseband signal to a carrier frequency. The baseband signal may be a complex-valued OFDM baseband signal for an antenna port. Filtering may be employed prior to transmission.

A wireless device may receive from a base station one or more messages (e.g., RRC messages) comprising configuration parameters of a plurality of cells (e.g., primary cell, secondary cell). The wireless device may communicate with at least one base station (e.g., two or more base stations in dual connectivity) via the plurality of cells. The one or more messages (e.g., as a part of the configuration parameters) may comprise parameters of physical, MAC, RLC, PCDP, SDAP, RRC layers for configuring the wireless device. For example, the configuration parameters may comprise parameters for configuring physical and MAC layer channels, bearers, etc. For example, the configuration parameters may comprise parameters indicating values of timers for physical, MAC, RLC, PCDP, SDAP, RRC layers, and/or communication channels.

A timer may begin running once it is started and continue running until it is stopped or until it expires. A timer may be started if it is not running or restarted if it is running. A timer may be associated with a value (e.g., the timer may be started or restarted from a value or may be started from zero and expire once it reaches the value). The duration of a timer may not be updated until the timer is stopped or expires (e.g., due to BWP switching). A timer may be used to measure a time period/window for a process. When the specification refers to an implementation and procedure related to one or more timers, it will be understood that there are multiple ways to implement the one or more timers. For example, it will be understood that one or more of the multiple ways to implement a timer may be used to measure a time period/window for the procedure. For example, a random access response window timer may be used for measuring a window of time for receiving a random access response. In an example, instead of starting and expiry (or expiration) of a random access response window timer, the time difference between two time stamps may be used. When a timer is restarted, a process for measurement of time window may be restarted. Other example implementations may be provided to restart a measurement of a time window.

A base station may support subband full duplex (SBFD) in a cell. The SBFD (or an SBFD configuration or SBFD parameters) may include one or more uplink subbands and one or more downlink subbands.

A downlink subband may comprise one or more frequency resources, e.g., one or more resource blocks (RBs). An uplink subband may comprise one or more frequency resources, e.g., one or more resource blocks (RBs), one or more subcarriers, etc. A resource block (RB) may also be referred to as a physical resource block (PRB) or a virtual resource block (VRB). In another example, the PRB may also be referred to as the RB or the VRB. The one or more frequency resources comprised in the downlink subband may also be referred to as downlink frequency resources (e.g., DL RBs or DL PRBs, etc.). The one or more frequency resources comprised in the uplink subband may also be referred to as uplink frequency resources (e.g., UL RBs or UL PRBs, etc.).

In an example, one or more uplink subbands and one or more downlink subbands may be comprised in an SBFD time resource, e.g., an SBFD symbol, an SBFD slot, an SBFD subframe, etc. In an example, the one or more uplink subbands, the one or more downlink subbands, and/or one or more SBFD time resources may be referred to as an SBFD resource. In another example, frequency resources in the one or more uplink subbands and frequency resources in the one or more downlink subbands may also be referred to as an SBFD resource.

At least during the same SBFD symbol, no frequency resource among frequency resources in an uplink subband may overlap with any frequency resource among frequency resources in a downlink subband. At least during the same SBFD symbol, no frequency resource among frequency resources in a downlink subband may overlap with any frequency resource among frequency resources in an uplink subband.

The SBFD (or an SBFD configuration or SBFD parameters) may include one or more SBFD time resources (e.g., one or more SBFD symbols) during a time period. The time period comprising the one or more SBFD time resources may also be referred to as an SBFD time period, a time period of the SBFD, or a periodicity of the SBFD. During the same SBFD symbol, a base station may simultaneously (e.g., at the same time) transmit a downlink signal in a downlink subband and receive an uplink signal in an uplink subband.

A base station may perform (or apply or execute) an SBFD operation in a cell based on the SBFD (or an SBFD configuration, or SBFD parameters). For example, the SBFD operation may be associated with a cell (e.g., a cell associated with or identified by a cell ID). The SBFD operation may also be referred to as an SBFD mode, an SBFD scheme, an SBFD technique, an SBFD procedure, or a subband nonoverlapping full duplex operation. At the same time in the SBFD operation, the base station may simultaneously (e.g., at the same time) transmit a downlink (DL) signal on a DL subband and receive an uplink (UL) signal on an UL subband. For example, in the same SBFD symbol in the SBFD operation, the base station may simultaneously (e.g., at the same time) transmit a DL signal on a DL subband and receive an UL signal on an UL subband.

In an example, in the SBFD operation, the DL signal on the DL subband and the UL signal on the UL subband may be associated with (or related to) different wireless devices, e.g., the DL signal may be associated with a first wireless device and the UL signal may be associated with a second wireless device. In another example, in the SBFD operation, the DL signal on the DL subband and the UL signal on the UL subband may be associated with (or related to) the same wireless device.

A wireless device may transmit and/or receive a signal (e.g., a reference signal, a channel, etc.) in a cell. The cell may be associated with a base station. The cell may be a serving cell or a non-serving cell of the wireless device. The serving cell may also be referred to as a special cell (spCell), a primary cell (PCell), a secondary cell (SCell), or a primary secondary cell (PSCell). The non-serving cell may also be referred to as a neighboring cell or a neighbor cell. The cell may be identified by an identifier e.g., a cell identifier. In an example, the cell identifier may be referred to as a physical cell identifier (PCI) or a cell global identifier (CGI). In example, the CGI may be a unique identifier of a cell. For example, a CGI associated with a cell may uniquely (or globally) identify the cell.

In an example, a wireless device may transmit a signal (e.g., an uplink signal) in an uplink subband during an SBFD symbol. In another example, a wireless device may receive a signal (e.g., a downlink signal) in a downlink subband during an SBFD symbol.

In an example, the signal (e.g., a downlink signal and/or an uplink signal) may be a physical signal. For example, a physical signal may not include higher layer information (e.g., user and/or control data). An example of a physical signal is a reference signal. In another example, a signal may be referred to as a channel. For example, a channel may include (or carry) higher layer information (e.g., user and/or control data). A channel may be a data channel and/or a control channel. A channel may be an uplink channel and/or a downlink channel.

In an example, an uplink channel may also be referred to as an uplink physical channel. In an example, the downlink channel may also be referred to as a downlink physical channel. In an example, a downlink physical channel (or a downlink channel) may be a Physical Downlink Shared Channel (PDSCH), a Physical Downlink Control Channel (PDCCH), a Physical Broadcast Channel (PBCH), etc. In an example, an uplink physical channel (or an uplink channel) may be a Physical Uplink Shared Channel (PUSCH), a Physical Uplink Control Channel (PUCCH), a Physical Random Access Channel (PRACH), etc.

In an example, the reference signal may be a downlink reference signal, e.g., transmitted by a base station. For example, the reference signal may be transmitted in one or more cells, e.g., in a serving cell and one or more neighbor cells of the wireless device. The one or more cells may be operated, managed, or served by one or more network nodes, e.g., one or more base stations.

Examples of the downlink reference signals may be a synchronization signal/physical broadcast channel block (SSB), a CSI-RS, a positioning reference signal (PRS), a radio link monitoring reference signal (RLM-RS) (e.g., a SSB, a CSI-RS, etc), a tracking reference signal (TRS), a demodulation reference signal (DMRS), a SS/PBCH Block Measurement Timing Configuration (SMTC), etc. Each SSB may include a primary synchronization signal (PSS), a secondary synchronization signal (SSS) and a physical broadcast channel (PBCH) within 4 successive symbols. The SSB may be transmitted periodically. For example, the SSB may occur with a periodicity, e.g., every 5 ms, 10 ms, 20 ms, 40 ms, 80 ms, 160 ms, etc.

The SMTC configuration may be associated with one or more SMTC parameters, e.g. a SMTC index or identifier, a SMTC duration or window, a SMTC periodicity, a SMTC time offset, etc. One or multiple SSBs are comprised within a SMTC duration. For example, the SMTC occasion may occur with a periodicity, e.g., every 5 ms, 10 ms, 20 ms, 40 ms, 80 ms, 160 ms, etc.

In another example, the reference signal may be an uplink reference signal, e.g., transmitted by the wireless device. Examples of the uplink reference signal may be a sounding reference signal (SRS), a demodulation reference signal (DMRS), etc. For example, the wireless device may transmit the uplink reference signals (e.g., an SRS) in a serving cell of the wireless device.

A beam may be a reference signal (e.g., an SSB, a CSI-RS, a PRS, etc.) associated with a direction. The beam may also be referred to as a lobe. In an example, the beam may also be referred to as a receive beam (e.g., a beam received by a wireless device from a certain direction). In another example, the beam may also be referred to as a transmit beam (e.g., a beam transmitted by a base station towards a certain direction). A beam (e.g., an SSB) may cover (or serve) an area (e.g., a geographical area) within a cell. In an example, a cell may transmit between 1 and 64 beams, e.g., up to 64 SSBs. For example, a cell may transmit two beams e.g., a first SSB (SSB1) and a second SSB (SSB2). In an example, SSB1 may cover one part of the cell and SSB2 may cover another part of the cell.

In an example, the direction of a cell may be based on (or determined by or characterized by) an angle in an azimuth plane and/or an angle in a zenith plane. The azimuth plane may also be referred to as a horizontal plane. The zenith plane may also be referred to as an elevation plane or a vertical plane. The beam may be between the wireless device and a base station. The radio link and/or the beam may be related to a cell associated with the base station. The cell may be a serving cell such as a spCell, a PCell, a PSCell, or an SCell. The beam may also be referred to as a beam of a cell, a cell beam, or a serving cell beam, a spCell beam, a PCell beam, a PSCell beam, an SCell beam, etc.

In an example, a cell may be associated with a carrier frequency. The carrier frequency may be an uplink carrier frequency or a downlink carrier frequency. The carrier frequency may also be referred to as a carrier, a frequency, a component carrier (CC), a layer, a frequency layer, frequency channel, positioning frequency layer (PFL), etc. The carrier frequency may belong to a frequency band. The frequency band may include one or multiple carrier frequencies. The number of the carrier frequencies within a frequency band may depend on a passband (e.g., length of the band in frequency domain) and/or a bandwidth of the carrier frequencies and/or a raster (e.g., a point in frequency where a carrier frequency may be centered, etc.).

In an example, information about (or associated with) the carrier frequency may be indicated by a channel number or an identifier. In example, the channel number or the identifier may be pre-defined. For example, the channel number may be an absolute radio frequency channel number (ARFCN). Examples of the ARFCN may be E-UTRA ARFCN (EARFCN), NR ARFCN (NR-ARFCN), etc. For example, a base station may transmit (e.g., in a broadcast channel) a channel number (e.g., an ARFCN, an NR-ARFCN, etc.) associated with a cell.

A reference signal transmitted in a cell may also be associated with the channel number, e.g., an ARFCN. For example, a carrier frequency associated with a CSI-RS may be indicated by a CSI-RS ARFCN, e.g., in a measurement configuration. In another example, a carrier frequency associated with an SSB may be indicated by an SSB ARFCN, e.g., in a measurement configuration. For example, the SSB ARFCN may indicate a frequency location within a bandwidth of an SSB. For example, the SSB may include 20 resource blocks enumerated from a resource block # 0 to a resource block # 19. In an example, the indicated frequency location (e.g., a SSB ARFCN) may correspond to a resource element # 0 within a resource block # 0 of the resource blocks of the SSB.

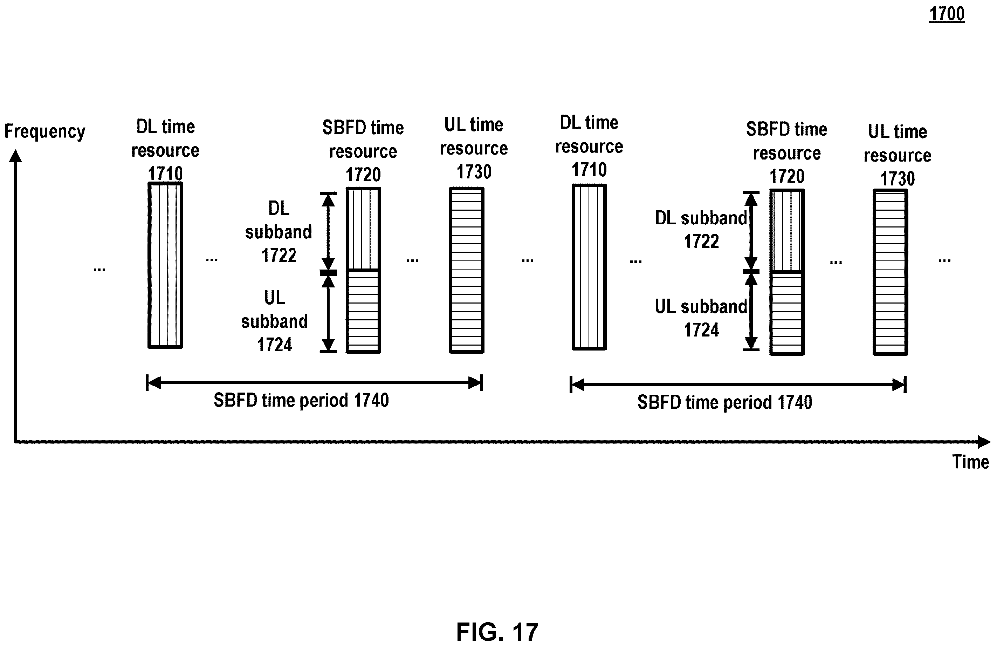

FIG. 17 illustrates an example of time-frequency resources 1700 per an aspect of the present disclosure. Time-frequency resources 1700 may be associated with a cell. A base station may serve, manage, or operate the cell.

In the example of FIG. 17, a time resource may be a downlink (DL) time resource 1710, a subband full duplex (SBFD) time resource 1720, or an uplink (UL) time resource 1730. In an example, an SBFD time period 1740 may include at least one SBFD time resource 1720. In another example, SBFD time period 1740 may include one or more DL time resources 1710 and one or more SBFD time resources 1720. In another example, SBFD time period 1740 may include one or more SBFD time resources 1720 and one or more UL time resources 1730. In another example, SBFD time period 1740 may include one or more DL time resources 1710, one or more SBFD time resources 1720, and one or more UL time resources 1730. In a frequency domain, SBFD time resource 1720 may include a DL subband 1722 and an UL subband 1724. In an example, in a frequency domain, SBFD time resource 1720 may include one or more DL subbands 1722 and one or more UL subbands 1724. DL time resource 1710 or UL time resource 1730 may also be referred to as a non-SBFD time resource.

A base station may transmit a signal in DL time resource 1710. A wireless device may receive a signal in DL time resource 1710. A base station may receive a signal in UL time resource 1730. A wireless device may transmit a signal in UL time resource 1730. A base station may transmit a signal in DL subband 1722 (e.g., DL subband 1722 of SBFD time resource 1720). A wireless device may receive a signal in DL subband 1722. A base station may receive a signal in UL subband 1724 (e.g., UL subband 1724 of SBFD time resource 1720). A wireless device may transmit a signal in UL subband 1724. The signal may be a reference signal and/or a channel (as described above).

DL time resource 1710 may be associated with a full duplex - frequency division duplexing (FD-FDD), a time division duplexing (TDD), a half-duplex - frequency division duplexing (HD-FDD), or supplemental downlink (SDL) operation (or mode). UL time resource 1730 may be associated with an FD-FDD, a TDD, a HD-FDD, or a supplemental uplink (SUL) operation (or mode).

At different times in a TDD operation, a wireless device may transmit an uplink (UL) signal and receive a downlink (DL) signal on the same carrier frequency. At different times in a TDD operation, a base station may transmit a DL signal and receive an UL signal on the same carrier frequency.

In an FD-FDD operation, a wireless device may simultaneously (e.g., at the same time) transmit an UL signal on an uplink carrier frequency and receive a downlink signal on a downlink carrier frequency. In an FD-FDD operation, a base station may simultaneously (e.g., at the same time) transmit a DL signal on a DL carrier frequency and receive an UL signal on an UL carrier frequency.

At different times in an HD-FDD operation, a wireless device may transmit an UL signal on an uplink carrier frequency and receive a downlink signal on a downlink carrier frequency. At different times in an HD-FDD operation, a base station may transmit a DL signal on a DL carrier frequency and receive an UL signal on an UL carrier frequency.

In a multicarrier operation, a wireless device may use an SDL band (and/or an SUL band) with an FDD-FDD, a HD-FDD, or a TDD band. Examples of the multicarrier operation may be carrier aggregation, multi-connectivity, dual connectivity, etc.

Referring to FIG. 17, DL subband 1722 may include one or more resource blocks. UL subband 1724 may include one or more resource blocks. In an example, the one or more resource blocks within DL subband 1722 may be consecutive (or adjacent) in a frequency domain. In an example, the one or more resource blocks within UL subband 1724 may be consecutive (or adjacent) in a frequency domain. In another example, DL subband 1722 and UL subband 1724 (belonging to a SBFD time resource 1720) may be within a bandwidth of a carrier frequency. In yet another example, one or more DL subbands 1722 and one or more UL subbands 1724 (belonging to a SBFD time resource 1720) may be within a bandwidth of a carrier frequency. The carrier frequency may also be referred to as a time division duplex (TDD) carrier frequency or a carrier frequency of a TDD operation (or a mode). For example, the bandwidth and the carrier frequency may be associated with a base station. In an example, a bandwidth of a carrier frequency may be 48 resource blocks (RBs). In another example, DL subband 1722 may include 8 RBs. In yet another example, UL subband 1724 may include 4 RBs. In yet another example, a base station may configure four DL subbands 1722 within the bandwidth (e.g., 48 RBs) of the carrier frequency. In yet another example, a base station may configure four UL subband 1724 within the bandwidth (e.g., 48 RBs) of the carrier frequency. In yet another example, a base station may configure five DL subbands 1722 within the bandwidth (e.g., 48 RBs) of the carrier frequency. In yet another example, a base station may configure two UL subband 1724 within the bandwidth (e.g., 48 RBs) of the carrier frequency.

A time resource may be referred to as a symbol, a slot, a subslot, a mini-slot, a subframe, or a frame. For example, the radio frame (e.g., 10 ms in length) may include 10 subframes (e.g., each of 1 ms in length). The time resource may be identified by a time resource number (e.g., a symbol number ranging from 0 to 13, a subframe number ranging from 0 to 9, etc.). A time resource may be a DL time resource (e.g., a DL symbol, a DL slot, a DL subframe, etc.) or an UL time resource (e.g., an UL symbol, an UL slot, an UL subframe, etc.). In an example, DL time resource 1710 may also be referred to as a DL symbol, a DL slot, a DL subframe, etc. In an example, UL time resource 1730 may also be referred to as a UL symbol, an UL slot, an UL subframe, etc. In an example, SBFD time resource 1720 may also be referred to an SBFD symbol, an SBFD slot, an SBFD subframe, etc. DL time resource 1710 or UL time resource 1730 may also be referred to as a non-SBFD symbol, a non-SBFD slot, a non-SBFD subframe, etc.

In an example, one or more DL time resources 1710, SBFD time resources 1720, and/or one or more UL time resources 1730 within SBFD time period 1740 may also be referred to as a pattern. The pattern may also be referred to as an SBFD pattern, an SBFD time resource pattern, an SBFD symbol pattern, an SBFD slot pattern, or an SBFD subframe pattern, etc. In an example, the pattern may be periodic (e.g., a periodic SBFD pattern) or aperiodic (e.g., an aperiodic SBFD pattern). In an example, a wireless device may receive one or more messages, from a base station, including the SBFD pattern. The one or more messages may be a radio resource control (RRC) message, a medium access control - control element (MAC-CE), or a downlink control information (DCI).

In an example, a periodicity of the periodic SBFD pattern may be based on (or correspond to) SBFD time period 1740. In an example, SBFD time period 1740 may be based on a periodicity of an uplink (UL) - downlink (DL) pattern periodicity.

In an example, an UL-DL pattern may be referred to as a time division duplex (TDD) UL-DL pattern, a TDD UL-DL subframe pattern, a TDD UL-DL configuration, or a TDD UL-DL slot configuration. In an example, an UL-DL pattern (e.g., an IE *TDD-UL-DL-Patter*n) may include a periodicity, a number of DL slots, a number of UL slots, a number of UL symbols, and a number of DL symbols. The periodicity of an UL-DL pattern (or a TDD UL-DL pattern) may also be referred to as a DL-UL transmission periodicity (e.g., an IE *dl-UL-TransmissionPeriodicity),* a DL-UL transmission period, or a DL-UL transmission repetition period. In an example, the DL-UL transmission periodicity of a TDD-UL-DL pattern may be 0.5ms, 0.625ms, 1ms, 1.25ms, 2ms, 2.5ms, 3ms, 4ms, 5ms, 10ms, 20ms, 40ms, 60ms, 80ms, 100ms, 120ms, 140ms, 160ms, or any other reasonable time duration. A wireless device may receive, from a base station, a UL-DL pattern (e.g., an IE *TDD-UL-DL-Patter*n) including a DL-UL transmission periodicity (e.g., *dl-UL-TransmissionPeriodicity)* in a radio resource control (RRC) message. For example, the RRC message may be referred to as a TDD UL-DL common configuration (e.g., *TDD-UL-DL-ConfigCommon)* or a TDD UL-DL dedicated configuration (e.g., *TDD-UL-DL-ConfigDedicated*)*.* The TDD UL-DL common configuration may be a cell specific RRC message (e.g., transmitted in a broadcast message in a cell, e.g., for multiple UEs in the cell). The TDD UL-DL dedicated configuration may be a UE specific RRC message (e.g., transmitted to the UE). In an example, a wireless device may receive, from a base station, one UL-DL pattern. In an example, a wireless device may receive, from a base station, two or more UL-DL patterns.

In an example, SBFD time period 1740 may be based on a DL-UL transmission periodicity of a TDD-UL-DL pattern. For example, SBFD time period 1740 may correspond to the DL-UL transmission periodicity of a TDD-UL-DL pattern. In another example, SBFD time period 1740 may correspond to a sum of two or more DL-UL transmission periodicities. For example, a wireless device may receive two or more TDD-UL-DL patterns. In this example, each one of the two or more DL-UL transmission periodicities may be associated with (or related to) one of the two or more TDD-UL-DL patterns. For example, a wireless device may receive, from a base station, one TDD-UL-DL pattern with a periodicity corresponding to 5 ms, and another TDD-UL-DL pattern with a periodicity corresponding to 10 ms. In this example, SBFD time period 1740 may correspond to 15 ms.

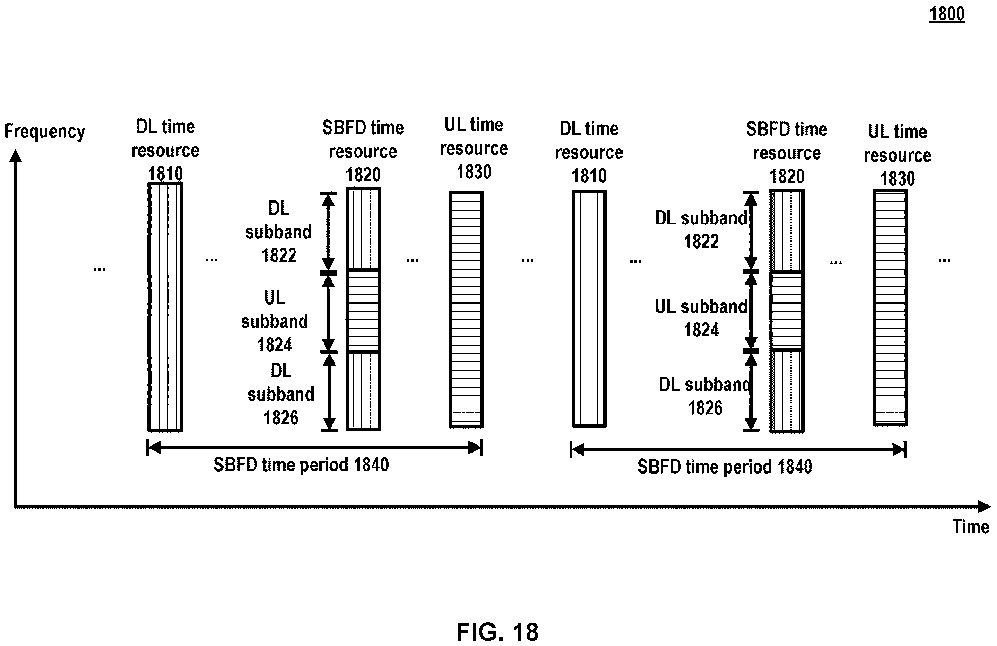

FIG. 18 illustrates an example of time-frequency resources 1800 per an aspect of the present disclosure. Time-frequency resources 1800 may be associated with a cell. A base station may serve, manage, or operate the cell.

In the example of FIG. 18, a downlink (DL) time resource 1810, a subband full duplex (SBFD) time resource 1820, and an uplink (UL) time resource 1830 are included in an SBFD time period 1840. DL time resource 1810, SBFD time resource 1820, UL time resource 1830, and SBFD time period 1840 are according to the example embodiments in FIG. 17 (e.g., DL time resource 1710, SBFD time resource 1720, UL time resource 1730, and SBFD time period 1740).

As illustrated in FIG. 18, SBFD time resource 1820 may include a downlink (DL) subband 1822, an uplink (UL) subband 1824, and a downlink (DL) subband 1826. DL subband 1822 and DL subband 1826 are according to the example embodiments in FIG. 17 (e.g., DL subband 1722). UL subband 1824 is according to the example embodiments in FIG. 17 (e.g., UL subband 1724). In an example, a number of frequency resources in DL subband 1822 and a number of frequency resources in DL subband 1826 may be different, e.g., 24 physical resource blocks (PRBs) in DL subband 1822 and 48 PRBs in DL subband 1826. In another example, a number of frequency resources in DL subband 1822 and a number of frequency resources in DL subband 1826 may be the same, e.g., 48 PRBs in DL subband 1822 and 48 PRBs in DL subband 1826.

One or more DL time resources, of one or more DL time resources 1810, one or more SBFD time resources, of one or more SBFD time resources 1820, and/or one or more UL time resources, of one or more UL time resources 1830, within SBFD time period 1840 may also be referred as a pattern or an SBFD pattern as described in FIG. 17 (e.g., the SBFD pattern).

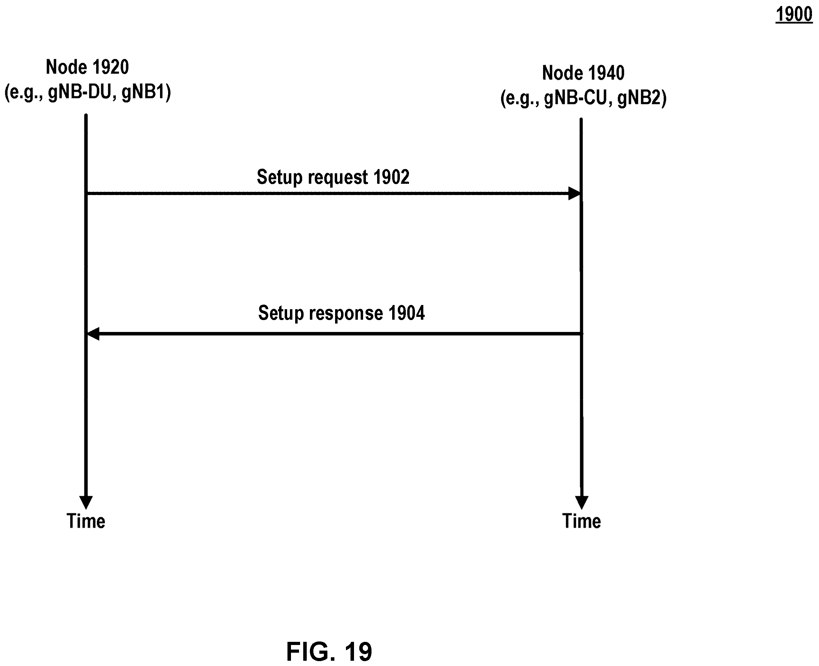

FIG. 19 illustrates an example of a procedure for an interface setup 1900 between a node 1920 and a node 1940 per an aspect of the present disclosure. The procedure for interface setup 1900 may also be referred to as a signaling flow for an interface setup, an interface setup procedure, an interface management procedure, or a procedure to setup (or establish) an interface. Interface setup 1900 may setup an interface, such as an Xn interface, an F1 interface, or a next generation (NG) interface. Interface setup 1900 may be referred to as an Xn interface setup, an F1 interface setup, or an NG interface setup.

Interface setup 1900 may be performed by node 1920. During interface setup 1900, node 1920 may communicate with node 1940. In an example, node 1920 may be a RAN node. In an example, node 1940 may be another RAN node, or a core network node. The RAN node may also be referred to as a next generation RAN (NG-RAN) node. Examples of the RAN node may be a base station (e.g., a gNB), a base station distributed unit (e.g., a gNB distributed unit (gNB-DU)), a base station central unit (e.g., a gNB central unit (gNB-CU)), etc. An example of the core network node may be an access and mobility management function (AMF). Node 1920 may communicate with the node 1940 over the interface that is setup based on interface setup 1900. Examples of an interface between the node 1920 and the node 1940 may be an Xn interface, an F1 interface, or an NG interface.

In an example of FIG.19, node 1920 may setup, establish, or configure an interface (e.g., Xn, F1, NG, etc.) between node 1920 and node 1940 based on interface setup 1900. For example, node 1920 and node 1940 may exchange configuration data based on interface setup 1900. The configuration data may also be referred to as application-level data or application-level configuration data. For example, node 1920 and node 1940 may interoperate over the interface (e.g., Xn, F1, NG, etc.) based on the configuration data.

As shown in FIG. 19, node 1920 may transmit to node 1940, a setup request 1902. Setup request 1902 may be an Xn application protocol (XnAP), an F1 application protocol (F1AP), or a next generation application protocol (NGAP) message. Setup request 1902 may comprise configuration data associated with node 1920. The configuration data may also be referred to as a capability of (or associated with) node 1920.

In an example, the configuration data may comprise an identifier of node 1920, e.g., an identifier of a gNB-DU, etc. For example, node 1940 may uniquely identify node 1920 based on the identifier of node 1920. In an example, the identifier of node 1920 may be an integer value between 0 and (2³⁶-1). In another example, the identifier of node 1920 may be a bit string of size, e.g., 18 bits, 20 bits, 22 bits, 32, etc.

In an example, the configuration data may comprise a list of one or more cells associated with node 1920. In an example, the one or more cells may be associated with one or more wireless devices. The one or more cells may also be referred to as serving cells, such as, e.g., a special cell (spCell), a primary cell (PCell), a primary secondary cell (PSCell), a secondary cell (SCell), etc. The one or more cells may be associated with (or belong to) a cell group (CG) of a wireless device. Examples of the CG may be a master (or main) cell group (MCG), a secondary cell group (SCG), etc. For example, a PCell, and one or more SCells may belong to an MCG. In another example, a PSCell, and one or more SCells may belong to an SCG. The MCG and SCG may be associated with (or belong to) a dual connectivity (DC).

The list of the one or more cells may further include information associated with the one or more cells. The information may also be referred to as cell information, serving cell information, or served cell information. Examples of the information associated with the one or more cells may be a transmission bandwidth, reference signals, a bandwidth of a reference signal, an antenna configuration, a numerology, a beam, a frequency band, a carrier frequency, a cell identifier (e.g., a physical cell ID (PCI)), a cell global ID (CGI), etc. A cell identifier (or a cell ID) may also be referred to as a next generation radio (NR) cell ID. A PCI may also be referred to as an NR PCI. A CGI may also be referred to as an NR GCI.

The numerology, indicated by the information, may comprise one or more of a subcarrier spacing, a slot duration, a symbol duration, a subframe duration, or a cyclic prefix (CP) length (in time). Examples of the reference signals, indicated by the information, may be a positioning reference signal (PRS), a sounding reference signal, a channel state information reference signal (CSI-RS), a primary synchronization signal (SSS), a secondary synchronization signal (SSS), a demodulation reference signal (DM-RS), a tracking reference signal (TRS), a signal in a synchronization signal/physical broadcast channel (SSB), etc.

The carrier frequency (or simply a carrier), indicated by the information, may also be referred to as a carrier, a frequency, a component carrier (CC), a layer, a frequency layer, a frequency channel, a positioning frequency layer (PFL), a positioning frequency, a positioning layer, etc. The carrier frequency may belong to a frequency band. The frequency band may comprise one or multiple carrier frequencies. The number of the carrier frequencies within a frequency band may depend on a passband (e.g., length of the band in frequency domain) and/or a bandwidth of the carrier frequencies and/or a raster (e.g., a point in frequency where a carrier frequency may be centered) etc.

A channel number, or a channel identifier may indicate a carrier frequency in the information. In example, the channel number or the channel identifier may be pre-defined. For example, the channel number may comprise an absolute radio frequency channel number (ARFCN). Examples of the ARFCN are E-UTRA ARFCN (EARFCN), NR ARFCN (NR-ARFCN) etc. For example, the carrier frequency associated with SSB based measurements (e.g., SS-RSRP, SS-RSRQ, SS-SINR, etc.) may be indicated by an SSB ARFCN, in, e.g., the measurement configuration. For example, the SSB ARFCN may indicate a frequency location within a bandwidth of an SSB. For example, an SSB comprises 20 resource blocks enumerated from resource block # 0 to resource block # 19. In an example, the indicated frequency location (e.g., a SSB ARFCN) may correspond to a resource element # 0 within a resource block # 0 of the resource blocks of the SSB.

The beam, indicated by the information, may be a reference signal (e.g., an SSB, a CSI-RS, a PRS, an SRS, etc.) associated with a direction. The beam may also be referred to as a lobe. In an example, the beam may also be referred to as a receive beam (e.g., a beam received by a wireless device from a certain direction). In another example, the beam may also be referred to as a transmit beam (e.g., a beam transmitted by a base station towards a certain direction). A beam (e.g., an SSB) may cover (or serve) an area (e.g., a geographical area) within a cell. In an example, a cell may transmit between 1 and 64 beams, e.g., up to 64 SSBs. For example, a cell may transmit two beams e.g., a first SSB (SSB1) and a second SSB (SSB2). In an example, SSB1 may cover one part of the cell and SSB2 may cover another part of the cell.

In an example, the direction of a cell may be based on (or determined by or characterized by) an angle in an azimuth plane and/or an angle in a zenith plane. The azimuth plane may also be referred to as a horizontal plane. The zenith plane may also be referred to as an elevation plane or a vertical plane. The beam may be between the wireless device and a base station. The radio link and/or the beam may be related to a cell associated with the base station. The cell may be a serving cell such as a spCell, a PCell, a PSCell, or an SCell. The beam may also be referred to as a beam of a cell, a cell beam, or a serving cell beam, a spCell beam, a PCell beam, a PSCell beam, an SCell beam, etc.

Returning to FIG. 19, node 1920 may receive from node 1940, a setup response 1904. Setup response 1904 may be in response to setup request 1902. Setup response 1904 may be, e.g., an XnAP, an F1AP, or an NGAP message. The reception of setup response 1904 may indicate successful configuration of the interface (e.g., Xn, F1, or NG) between node 1920 and node 1940. For example, node 1920 may determine (e.g., assume), based on the reception of setup response 1904, that the interface between node 1920 and node 1940 is (e.g., has been) successfully configured (e.g., by interface setup 1900).

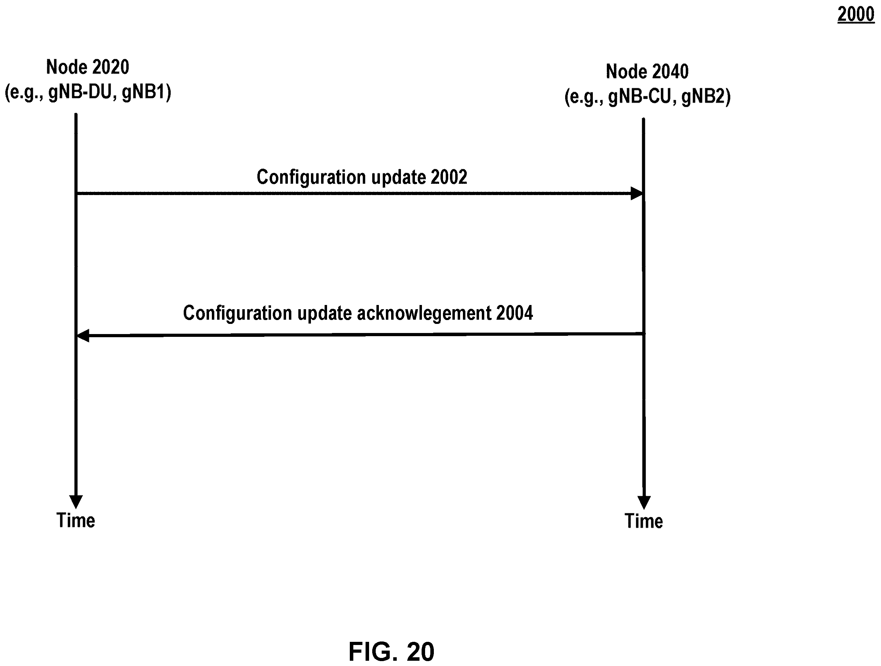

FIG. 20 illustrates an example of a configuration update procedure 2000 between a node 2020 and a node 2040 per an aspect of the present disclosure. Configuration update procedure 2000 may also be referred to as a signaling flow for configuration update, an interface configuration update procedure, an interface management procedure, or a procedure to update, upgrade, modify, or enhance an interface.

Configuration update procedure 2000 may update the configuration associated with an interface, such as an Xn interface, an F1 interface, or a next generation (NG) interface. Configuration update procedure 2000 may be referred to as an Xn configuration update procedure, an F1 configuration update procedure, or an NG configuration update procedure. In another example, configuration update procedure 2000 may update the configuration associated with node 2020. For example, configuration update procedure 2000 may also be referred to as a node 2020 configuration update procedure, a gNB-DU configuration update procedure, a gNB configuration update procedure, NG-RAN node configuration update procedure, or a RAN (or RAN node) configuration update procedure.

Configuration update procedure 2000 may be performed by node 2020. During the configuration update procedure 2000, node 2020 may communicate with a node 2040. In an example, node 2020 may be a RAN node. In an example, node 2040 may be another RAN node, or a core network node (as discussed above in FIG. 19). The RAN node may also be referred to as an NG-RAN node. Examples of the RAN node may be a base station (e.g., a gNB), a base station distributed unit (e.g., a gNB-DU), a base station central unit (e.g., a gNB-CU), etc., (as discussed above in FIG. 19). An example of the core network node may be an AMF (as discussed above in FIG. 19). Node 2020 may communicate with node 2040 over an interface that is updated based on configuration update procedure 2000. Examples of an interface between node 2020 and node 2040 may be referred to as an Xn interface, an F1 interface, an NG interface etc., (as discussed above in FIG. 19).

In an example of FIG. 20, node 2020 may update or modify configuration data associated with node 2020. For example, node 2020 and node 2040 may exchange configuration data based on configuration update procedure 2000. As shown in FIG. 20, node 2020 may transmit, to node 2040, a configuration update 2002. Configuration update 2002 may be an XnAP, an F1AP, or an NGAP message (as discussed above in FIG. 19). Configuration update 2002 may comprise configuration data associated with node 2020. For example, the configuration data may comprise a list of one or more cells associated with node 2020. For example, the one or more cells may be referred to as a spCell, a PCell, a PSCell, a SCell etc., (as discussed above in FIG. 19). The configuration data may also be referred to as a cell information, or a serving cell information (as discussed above in FIG. 19).

Returning to FIG. 20, node 2020 may receive, from node 2040, a configuration update acknowledgement 2004. Configuration update acknowledgement 2004 may be in response to configuration update 2002. Configuration update acknowledgement 2004 may be, e.g., an XnAP, an F1AP, or an NGAP message. The reception of configuration update acknowledgement 2004 may indicate successful update of the configuration data associated with node 2020. For example, node 2020 may determine (e.g., assume), based on the reception of configuration update acknowledgement 2004, that node 2040 has successfully received the updated configuration data associated with node 2020 (e.g., by configuration update procedure 2000).

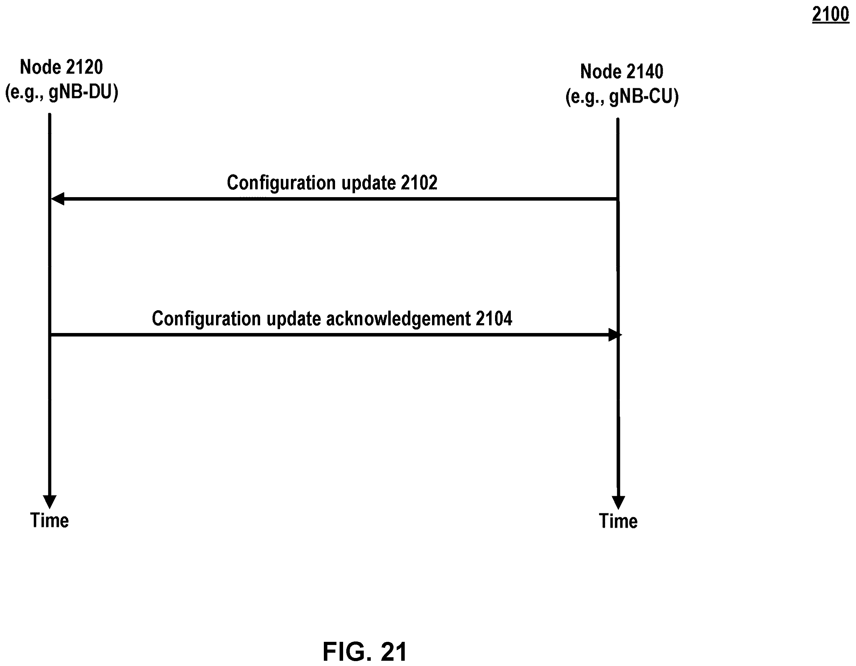

FIG. 21 illustrates an example of a configuration update procedure 2100 between a node 2120 and a node 2140 per an aspect of the present disclosure. Configuration update procedure 2100 may also be referred to as a signaling flow for configuration update, an interface configuration update procedure, an interface management procedure, or a procedure to update, upgrade, modify, or enhance an interface.

Configuration update procedure 2100 may update the configuration associated with an interface, such as an F1 interface or a next generation (NG) interface. Configuration update procedure 2100 may be referred to as an F1 configuration update procedure, or an NG configuration update procedure. In another example, configuration update procedure 2100 may update the configuration associated with node 2140. For example, configuration update procedure 2100 may also be referred to as a node 2140 configuration update procedure (or a configuration update procedure of node 2040), a gNB-CU configuration update procedure, or a RAN (or RAN node) configuration update procedure.

Configuration update procedure 2100 may be performed by (or initiated by) node 2140. During the configuration update procedure 2100, node 2140 may communicate with a node 2120. In an example, node 2140 may be a RAN node. In an example, node 2120 may be another RAN node, or a core network node (as discussed above in FIG. 19 and/or in FIG. 20). The RAN node may also be referred to as an NG-RAN node. Examples of the RAN node may be a base station (e.g., a gNB), a base station distributed unit (e.g., a gNB-DU), a base station central unit (e.g., a gNB-CU), etc., (as discussed above in FIG. 19 and/or in FIG. 20). An example of the core network node may be an AMF (as discussed above in FIG. 19 and/or in FIG. 20). Node 2140 may communicate with node 2120 over an interface that is updated based on configuration update procedure 2100. Examples of an interface between node 2120 and node 2140 may be referred to as an F1 interface or an NG interface etc., (as discussed above in FIG. 19 and/or in FIG. 20).

In an example of FIG. 21, node 2140 may update or modify configuration data associated with node 2140. For example, node 2140 and node 2120 may exchange configuration data based on configuration update procedure 2100. As shown in FIG. 21, node 2140 may transmit, to node 2140, a configuration update 2002. Configuration update 2002 may be an F1AP or an NGAP message (as discussed above in FIG. 19 and/or in FIG. 20). Configuration update 2002 may comprise configuration data associated with node 2140. For example, the configuration data may comprise a list of one or more cells associated with (or managed by or controlled by or supported by) node 2140. For example, the one or more cells may be referred to as a neighbor cell, a spCell, a PCell, a PSCell, a SCell etc., (as discussed above in FIG. 19 and/or in FIG. 20). The configuration data may also be referred to as a cell information, a served cell information, a serving cell information, or a neighbor cell information (as discussed above in FIG. 19 and/or in FIG. 20).

Returning to FIG. 21, node 2140 may receive from node 2120, a configuration update acknowledgement 2104. Configuration update acknowledgement 2104 may be in response to configuration update 2102. Configuration update acknowledgement 2104 may be, e.g., an F1AP or an NGAP message. The reception of configuration update acknowledgement 2104 may indicate successful update of the configuration data associated with node 2140. For example, node 2140 may determine (e.g., assume), based on the reception of configuration update acknowledgement 2104, that node 2120 has successfully received the updated configuration data associated with node 2140 (e.g., by (or based on) configuration update procedure 2100).

A cell may support (or be capable of) a subband full duplex (SBFD). The SBFD (or an SBFD mode, or an SBFD operation) may be associated with (or may operate based on) an SBFD configuration of the cell. The SBFD configuration of the cell may comprise (or indicate) at least one DL subband (e.g., DL subband 1722 in FIG. 17, and DL subband 1822 and DL subband 1826 in FIG. 18) and at least one UL subband (e.g., UL subband 1724 in FIG. 17 and UL subband 1824 in FIG. 18). The at least one DL subband and the at least one UL subband may be comprised in the same time resource (e.g., SBFD time resource 1720 in FIG. 17 and SBFD time resource 1820 in FIG. 18). The SBFD configuration of the cell may further comprise (or indicate) a size of a DL subband and/or a size of an UL subband in frequency domain (e.g., the size in terms of a number of resource blocks (RBs)).

A base station distributed unit (e.g., a gNB-DU) may manage, serve, control, or operate the cell (e.g., supporting or capable of the SBFD). For example, the base station distributed unit may schedule one or more wireless devices in the cell. In an example, the base station distributed unit may transmit DL signals (e.g., a CSI-RS, a PDSCH, a PDCCH, etc.) in a DL subband of a cell during an SBFD symbol. In another example, the base station distributed unit may receive (e.g., from a wireless device) UL signals (e.g., an SRS, a PUSCH, a PUCCH, a PRACH, etc.) in an UL subband of the cell during the SBFD symbol.

A base station central unit (e.g., a gNB-CU) may manage, serve, control, or operate one or more base station distributed units (e.g., one or more gNB-DUs). For example, the base station central unit may manage, serve, control, or operate one or more base station distributed units via an X1AP messages.

One or more wireless devices may operate in (or belong to) a cell. A base station distributed unit may serve or manage the cell, e.g., schedule the one or more wireless devices via a DCI or a MAC-CE. The base station distributed unit may support the SBFD. For example, the base station distributed unit may transmit and/or receive signals in SBFD symbols, e.g., based on a SBFD configuration of the cell.

A base station central unit may configure the one or more wireless devices via one or more radio resource control (RRC) messages. In an example, an RRC message may be a broadcast message (e.g., a master information block (MIB), one or more system information blocks (SIBs)), etc. In an example, an RRC message may be a dedicated message (e.g., dedicated to or associated with a wireless device). For example, the base station central unit may provide configuration data (or parameters or system parameters) associated with the cell via RRC messages. In an example, the configuration data may comprise a transmission bandwidth, a frequency band, a reference signal configuration, etc. The one or more wireless devices may communicate in the cell with the base station distributed unit based on the configuration data.

In the existing technologies, a base station central unit (e.g., a gNB-CU) may not be aware of whether a base station distributed unit (e.g., a gNB-DU) supports (or is capable of) an SBFD for a cell. The base station central unit may also not be aware of an SBFD configuration (e.g., a number of DL subbands, a number of UL subbands, RBs in DL subbands, or RBs in UL subbands, etc.) of a cell. The SBFD configuration may also change over time. For example, a base station distributed unit may modify (or change or reconfigure) the SBFD configuration of a cell, e.g., based on cell load, interference, etc.

Interference within a cell and/or across cells may be based on (or depend on) the SBFD configuration in cells. For example, transmission of signals in a DL subband and an UL subband in the same symbol may cause cross-link interference, e.g., at a base station and/or a wireless device. A base station central unit may reduce interference based on one or more techniques, e.g., load balancing, a handover, an admission control, etc. Lack of awareness in a base station central unit (e.g., a gNB-CU) about an SBFD capability or configuration of a base station distributed unit may cause misalignment between the base station central unit and the base station distributed unit. For example, the base station central unit may not identify (or detect) a cause of the interference, e.g., due to a lack of information about existing SBFD configuration. Due to the lack of information related to the SBFD configuration of cells, the base station central unit may not adequately manage or reduce interference in the network.

Different base station distributed units may operate cells in the same geographical area. The base station distributed units may be served or managed by the same base station central unit or different base station central units. One or more cells, of the cells may support and operate the SBFD.

In the existing technologies, a base station distributed unit may not be aware of an SBFD configuration supported in a cell managed (or served or operated) by another base station distributed unit. Based on the existing technologies, base station distributed units may not align SBFD configurations with each other in their respective cells. A lack of alignment of the SBFD configurations across the cells may increase interference (e.g., cross link interference). The increase in interference may decrease user bit rate, lower system throughput, and reduce capacity of a cell.

In the existing technologies, a base station central unit (e.g., a gNB-CU) may not be aware of whether a base station distributed unit (e.g., a gNB-DU) supports (or is capable of) an SBFD for a cell. The base station central unit may also not be aware of an SBFD configuration of a cell. The SBFD configuration of a cell may also change over time.

In the existing technologies, a base station distributed unit may not be aware of an SBFD configuration supported in a cell managed (or served or operated) by another base station distributed unit. For example, base station distributed units may not align SBFD configurations with each other in their respective cells.

A cell operating the SBFD may cause interference in a network, e.g., across cells, between wireless devices, etc. The interference may further increase based on misaligned SBFD configurations across cells, e.g., cells closely located with respect to each other.

The base station central unit may not identify a cause of interference. For example, the base station central may not adequately mitigate interference in the network. The increase in interference may decrease user bit rate, lower system throughput, and reduce capacity of a cell.

Embodiments of the present disclosure are related to an approach for solving the problems described above. These and other features of the present disclosure are described further below.

In an example embodiment, distributed unit (DU) of a base station may transmit to a central unit (CU) of the base station, a configuration message indicating a subband full duplex (SBFD) configuration to be used in a cell of the DU. The SBFD configuration may indicate at least one of a time location of one or more SBFD symbols, a frequency location of an uplink subband of the one or more SBFD symbols, or a frequency location of a downlink subband of the one or more SBFD symbols. The DU may receive from the CU, an acknowledgement message in response to the configuration message.

In an example embodiment, a central unit (CU) of a base station may receive from a distributed unit (DU) of the base station, a configuration message indicating a subband full duplex (SBFD) configuration to be used in a cell of the DU. The SBFD configuration may indicate at least one of a time location of one or more SBFD symbols, a frequency location of an uplink subband of the one or more SBFD symbols, or a frequency location of a downlink subband of the one or more SBFD symbols. The CU may transmit to the DU, an acknowledgement message in response to the configuration message.

By receiving an SBFD configuration to be used in a cell of a DU of the base station, the CU of the base station may become aware of the SBFD configuration to be used in the cell. The CU of the base station may efficiently mitigate, manage, or reduce interference in a network based on the SBFD configuration to be used in the cell. An efficient mitigation of the interference may improve system perform, increase system capacity, and enhance user bit rate.

In an example embodiment, a first distributed unit of a first base station may receive from a central unit (CU) of the first base station, a configuration message indicating a subband full duplex (SBFD) configuration to be used in a second cell of a second distributed unit. The SBFD configuration may indicate at least one of a time location of one or more SBFD symbols, a frequency location of an uplink subband of the one or more SBFD symbols, or a frequency location of a downlink subband of the one or more SBFD symbols. The first distributed unit may transmit to the CU, an acknowledgement message in response to the configuration message.

By receiving an SBFD configuration to be used in a second cell of a second distributed unit, a first distributed unit may align an SBFD configuration of a first cell of the first distributed unit with the SBFD configuration to be used in the second cell. An alignment of SBFD configurations across cells (e.g., between the first cell and the second cell) may reduce interference across the cells. A reduction in interference may improve system performance, increase system capacity, and enhance user bit rate.

In an example embodiment, a central unit (CU) of a base station may receive from a first distributed unit of the base station, a configuration message indicating a subband full duplex (SBFD) configuration to be used in a cell of the first distributed unit. The SBFD configuration may indicate at least one of a time location of one or more SBFD symbols, a frequency location of an uplink subband of the one or more SBFD symbols, or a frequency location of a downlink subband of the one or more SBFD symbols. The CU may transmit the SBFD configuration to one or more wireless devices, or to a second distributed unit. The CU may perform interference mitigation based on the SBFD configuration.

By receiving an SBFD configuration to be used in a cell of a DU of the base station, the CU of the base station may become aware of the SBFD configuration to be used in the cell. The CU may transmit the SBFD configuration to one or more wireless devices in the cell, and one or more distributed units. The one or more wireless devices may communicate with the distributed unit in the cell based on the SBFD configuration to be used in the cell. The one or more distributed units may align SBFD configurations in their respective cells based on the SBFD configuration to be used in the cell of the DU. An alignment of the SBFD configurations across cells may reduce interference across the cells. A reduction in interference may improve system performance, increase system capacity, and enhance user bit rate.

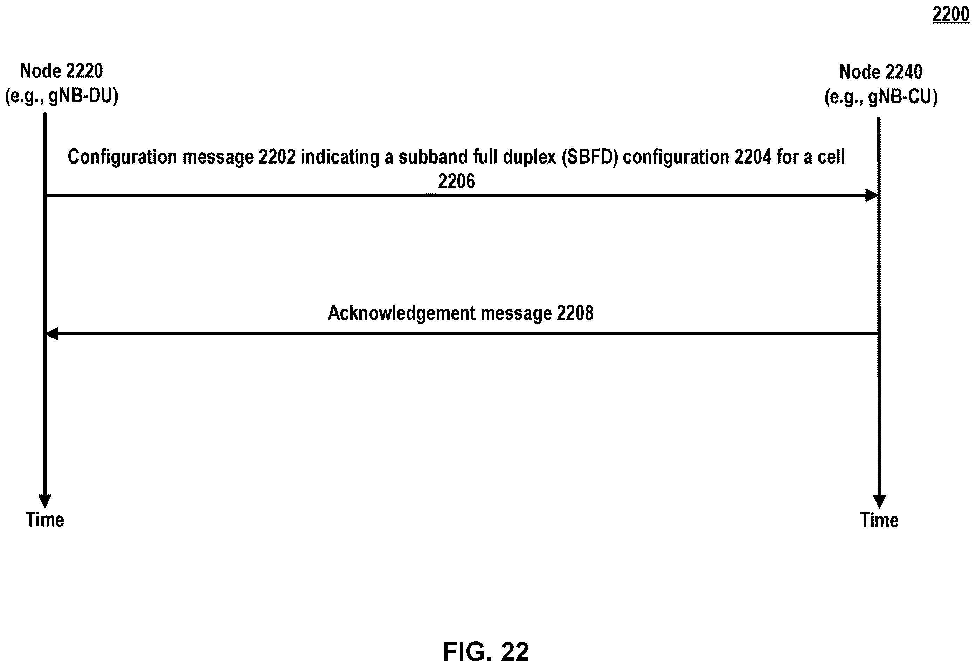

FIG. 22 illustrates an example of a configuration exchange procedure 2200 between a node 2220 and a node 2240 per an aspect of the present disclosure. Configuration exchange procedure 2200 may be used by node 2220, to provide node 2240, a subband full duplex (SBFD) configuration to be used in a cell of node 2220. The features illustrated in FIG. 22 may be combined with the features previously discussed with reference to FIGs. 17, 18, 19, 20, and/or 21.

As shown in FIG. 22, node 2220 may transmit to node 2240, a configuration message 2202 indicating a subband full duplex (SBFD) configuration 2204 for a cell 2206. Node 2220 may receive from node 2240, an acknowledgement message 2208.

Configuration exchange procedure 2200 may be associated with cell 2206. Node 2220 may serve, manage, operate, or host cell 2206. Cell 2206 may serve one or more one or more wireless devices. For example, node 2220 may schedule (e.g., via a DCI, a MAC-CE, etc.) the one or more wireless devices in cell 2206.

In an example, node 2220 may be a RAN node, e.g., a distributed unit of a base station (e.g., a gNB distributed unit (gNB-DU)). In an example, node 2240 may be another RAN node, e.g., a central unit of the base station (e.g., a gNB central unit (gNB-CU)). For example, node 2220 may be connected to node 2240 via an interface (e.g., an F1 interface. In an example, node 2240 may manage (or control) one or more functions (or procedures) associated with node 2220. The RAN node may also be referred to as a next generation RAN (NG-RAN) node, a base station, or a gNB.

During configuration exchange procedure 2200, node 2220 may communicate with node 2240 over an interface (e.g., an F1 interface). For example, communications between node 2220 and node 2240 may comprise (or be based on) F1AP messages. For example, configuration message 2202 and acknowledgement message 2208 may be F1AP messages.

In an example, configuration exchange procedure 2200 may be an interface setup procedure (e.g., an F1 interface setup as described above) or a configuration update procedure (e.g., a gNB-DU configuration update procedure as described above). Configuration exchange procedure 2200 is according to the example embodiments in FIG. 19 (e.g., interface setup 1900) and/or in FIG. 20 (e.g., configuration update procedure 2000). Configuration message 2202 is according to the example embodiments in FIG. 19 (e.g., setup request 1902) and/or FIG. 20 (e.g., configuration update 2002). Acknowledgement message 2208 is according to the example embodiments in FIG. 19 (e.g., setup response 1904) and/or FIG. 20 (e.g., configuration update acknowledgement 2004).

As shown in FIG. 22, node 2220 (e.g., a gNB-DU) may transmit configuration message 2202 indicating SBFD configuration 2204 for cell 2206. Node 2220 may support (or be capable of) an SBFD operation (e.g., the SBFD operation as described above) in cell 2206.

In an example, SBFD configuration 2204 may indicate at least one of: a time location of one or more SBFD time resources (e.g., SBFD symbols), a frequency location of an uplink subband of the one or more SBFD time resources (e.g., SBFD symbols), a frequency location of a downlink subband of the one or more SBFD time resources (e.g., SBFD symbols), a multicarrier configuration, a beam configuration, a cell configuration, or a frequency band. The one or more SBFD time resources, the uplink subband of the one or more SBFD time resources, and the downlink subband of the one or more SBFD time resources are according to the example embodiments in FIG. 17 (e.g., DL time resource 1710, UL subband 1724, and DL subband 1722) and/or in FIG. 18 (e.g., DL time resource 1810, UL subband 1824, DL subband 1822, and DL subband 1826).
In an example, the time location of the one or more SBFD time resources (e.g., SBFD symbols) may comprise (or indicate) at least one of: an index of a starting time slot, an index of a starting SBFD time symbol within the starting time slot, an index of an ending time slot, an index of an ending SBFD symbol within the ending time slot, an index of a time slot containing all SBFD symbols, an index of a time slot containing one or more downlink symbols and one or more SBFD symbols, an index of a time slot containing one or more uplink symbols and one or more SBFD symbols, a number of SBFD symbols in a time slot, a number of downlink symbols in a time slot containing one or more downlink symbols and one or more SBFD symbols, a location of one or more downlink symbols in the time slot containing one or more downlink symbols and one or more SBFD symbols, a location of one or more SBFD symbols in the time slot containing one or more downlink symbols and one or more SBFD symbols, a number of uplink symbols in a time slot containing one or more uplink symbols and one or more SBFD symbols, a location of one or more uplink symbols in the time slot containing one or more uplink symbols and one or more SBFD symbols, a location of one or more SBFD symbols in the time slot containing one or more uplink symbols and one or more SBFD symbols, or an indication of a guard period.

In an example, the index of the starting time slot may be an integer. For example, the index of the starting time slot may have a value between 0 and K11. In example, K11 may be 5119 (e.g., up to 5120 slots in total). In an example, K11 may depend on a numerology of a signal, e.g., a subcarrier spacing, a slot length, a CP length, etc. The starting time slot may also be referred to as a starting SBFD slot or a first SBFD slot. A starting SBFD time resource (e.g., a starting SBFD symbol) of the one or more SBFD time resources (e.g., SBFD symbols) in an SBFD time period may be comprised (or located in) in the starting time slot. The starting SBFD time resource may also be referred to as a first SBFD time resource (e.g., a first SBFD symbol) of the one or more SBFD time resources e.g., SBFD symbols) in the SBFD time period. The SBFD time period is according to the example embodiments in FIG. 17 (e.g., SBFD time period 1740) and/or in FIG. 18 (e.g., SBFD time period 1840).

In an example, the index of the starting SBFD symbol within the starting time slot may be an integer. For example, the index of the starting SBFD symbol may have a value between 0 and K12. In example, K12 may be 13 (e.g., up to 14 symbols in a time slot). For example, an index of 0 may indicate that the starting SBFD symbol is the first symbol within the starting time slot. In another example, an index of 13 may indicate that the starting SBFD symbol is the last symbol within the starting time slot. The starting SBFD time symbol may also be referred to as the first SBFD symbol of the one or more SBFD symbols (as described above). The starting SBFD symbol may also be referred to as the first SBFD symbol of the one or more SBFD symbols in the SBFD time period. The SBFD time period is according to the example embodiments in FIG. 17 (e.g., SBFD time period 1740) and/or in FIG. 18 (e.g., SBFD time period 1840).

In an example, the index of the ending time slot may be an integer. For example, the index of the ending time slot may have a value between 0 and K11 (K11 as described above). An ending SBFD time resource (e.g., an ending SBFD symbol) of the one or more SBFD time resources (e.g., SBFD symbols) in an SBFD time period may be comprised (or located in) in the ending time slot. The ending SBFD time resource (e.g., the ending SBFD symbol) may also be referred to as a last SBFD time resource (e.g., a last SBFD symbol) of the one or more SBFD time resources (e.g., SBFD symbols) in the SBFD time period.

In an example, the index of the ending SBFD symbol within the ending time slot may be an integer. For example, the index of the starting SBFD symbol may have a value between 0 and K12 (K12 as described above). For example, an index of 0 may indicate that the ending SBFD symbol is the first symbol within the ending time slot. In another example, an index of 13 may indicate that the ending SBFD symbol is the last symbol within the ending time slot. The ending SBFD time symbol may also be referred to as the last SBFD symbol (as described above).

In an example, the index of a time slot containing all SBFD symbols may be an integer. For example, the index of the time slot may have a value between 0 and K11 (K11 as described above). In an example, the index of a time slot may indicate that all symbols (e.g., 14 symbols) in the time slot are SBFD symbols.

In an example, the index of a time slot containing one or more downlink symbols and one or more SBFD symbols may be an integer. For example, the index of the time slot may have a value between 0 and K11 (K11 as described above). In an example, the time slot containing the one or more downlink symbols and the one or more SBFD symbols may also be referred to as a mixed time slot, a mixed downlink-SBFD time slot, or a mixed downlink/SBFD time slot.

In an example, the index of a time slot containing one or more uplink symbols and one or more SBFD symbols may be an integer. For example, the index of the time slot may have a value between 0 and K11 (K11 as described above). In an example, the time slot containing the one or more uplink symbols and the one or more SBFD symbols may also be referred to as a mixed time slot, a mixed uplink-SBFD time slot, or a mixed uplink/SBFD time slot.

In an example, the number of SBFD symbols in a time slot containing one or more SBFD symbols and one or more downlink symbols, may be an integer. In an example, the time slot may be indicated by an index of the time slot. The index of the time slot may have a value between 0 and K11 (K11 as described above). The number of SBFD symbols in a time slot may have a value between 0 and K14. In an example, K14 may depend on a numerology of a signal, e.g., a subcarrier spacing, a slot length, a CP length, etc. For example, K14 may be 13 symbols for a normal CP and 11 symbols for an extended CP, e.g., a duration of the extended CP is larger than a duration of the normal CP.

In an example, the number of downlink symbols in a time slot containing one or more downlink symbols and one or more SBFD symbols, may be an integer. In an example, the time slot may be indicated by an index of the time slot. The index of the time slot may have a value between 0 and K11 (K11 as described above). The number of downlink symbols in a time slot may have a value between 0 and K14 (K14 as described above).

In an example, the location of one or more SBFD symbols in the time slot containing one or more downlink symbols and one or more SBFD symbols may be indicated by (or determined based on or identified by) a first permutation parameter. The location of one or more SBFD symbols in the time slot may also be referred to as a position of the one or more SBFD symbols in the time slot or a starting location (or position) of the one or more SBFD symbols in the time slot. For example, the first permutation parameter may indicate an order (or a sequence) of an occurrence of the one or more downlink symbols and the one or more SBFD symbols, in the time slot.

In an example, the location of one or more downlink symbols in the time slot containing one or more downlink symbols and one or more SBFD symbols may also be indicate by (or determined based on) the first permutation parameter. The location of one or more downlink symbols in the time slot may also be referred to as a position of the one or more downlink symbols in the time slot or a starting location (or position) of the one or more downlink symbols in the time slot.

In an example, the first permutation parameter may indicate the location of one or more SBFD symbols in the time slot with respect to (or in relation to) the location of one or more downlink symbols in the time slot.

In an example, the first permutation parameter may indicate that the one or more SBFD symbols may be located in (or may start from) the beginning of the time slot. In another example, the first permutation parameter may indicate that the one or more SBFD symbols may be located after (or may start after) the end of the last downlink symbols, of the one or more downlink symbols in the time slot. In another example, the first permutation parameter may indicate that the one or more SBFD symbols may start immediately after the end of the last downlink symbols, of the one or more downlink symbols in the time slot.

In an example, the first permutation parameter may have one of two possible values, e.g., a downlink first (DF) or an SBFD first (SF). In another example, the DF may be referred to as a downlink first then SBFD (DFS) and the SF may be referred to as an SBFD first then DL (SFD). For example, the DF and the SF may be indicated by bit 0 and bit 1 respectively, or vice versa.

In an example, the value SF may indicate that the one or more SBFD symbols are located in (or start from) the beginning of the time slot. In another example, the value SF may indicate that the first SBFD symbol, of the one or more SBFD symbols, is located in (or start from) the beginning of the time slot. In yet another example, the value SF may indicate that the one or more downlink symbols are located after (or start after) the end of the one or more SBFD symbols in the time slot. In yet another example, the value SF may indicate that the one or more downlink symbols may start immediately after the end of the last SBFD symbol, of the one or more SBFD symbols in the time slot.

In another example, the value DF may indicate that the one or more downlink symbols are located in (or start from) the beginning of the time slot. In yet another example, the value DF may indicate that the first downlink symbol, of the one or more downlink symbols, is located in (or start from) the beginning of the time slot. In yet another example, the value DF may indicate that the one or more SBFD symbols are located after (or start after) the end of the last SBFD symbol, of the one or more SBFD symbols in the time slot. In yet another example, the value SF may indicate that the one or SBFD downlink symbols may start immediately after the end of the last downlink symbol, of the one or more SBFD symbols in the time slot.

In an example, the first permutation parameter may be optional, e.g., may not be included in configuration message 2202. For example, the first permutation parameter may have a default value (e.g., may be used or applied based on absence of the first permutation parameter). In an example, the default value of the first permutation parameter may be DF. In another example, the default value of the first permutation parameter may be SF.

In an example, the number of SBFD symbols in a time slot containing one or more SBFD symbols and one or more uplink symbols, may be an integer. In an example, the time slot may be indicated by an index of the time slot. The index of the time slot may have a value between 0 and K11 (K11 as described above). The number of SBFD symbols in a time slot may have a value between 0 and K14 (K14 as described above).

In an example, the number of uplink symbols in a time slot containing one or more uplink symbols and one or more SBFD symbols, may be an integer. In an example, the time slot may be indicated by an index of the time slot. The index of the time slot may have a value between 0 and K11 (K11 as described above). The number of uplink symbols in a time slot may have a value between 0 and K14 (K14 as described above).

In an example, the location of one or more SBFD symbols in the time slot containing one or more uplink symbols and one or more SBFD symbols, may be indicated by (or determined based on or identified by) a second permutation parameter. The location of one or more SBFD symbols in the time slot may also be referred to as a position of the one or more SBFD symbols in the time slot or a starting location (or position) of the one or more SBFD symbols in the time slot. For example, the second permutation parameter may indicate an order (or a sequence) of an occurrence of the one or more uplink symbols and the one or more SBFD symbols, in the time slot.

In an example, the location of one or more uplink symbols in the time slot containing one or more uplink symbols and one or more SBFD symbols may also be indicated by (or determined based on or identified by) the second permutation parameter. The location of one or more uplink symbols in the time slot may also be referred to as a position of the one or more uplink symbols in the time slot or a starting location (or position) of the one or more uplink symbols in the time slot.

In an example, the second permutation parameter may indicate the location of one or more SBFD symbols in the time slot with respect to (or in relation to) the location of one or more uplink symbols in the time slot.

In an example, the second permutation parameter may indicate that the one or more SBFD symbols may be located in (or may start from) the beginning of the time slot. In another example, the second permutation parameter may indicate that the one or more SBFD symbols may be located after (or may start after) the end of the last uplink symbols, of the one or more uplink symbols in the time slot. In another example, the second permutation parameter may indicate that the one or more SBFD symbols may start immediately after the end of the last uplink symbols, of the one or more uplink symbols in the time slot.

In an example, the second permutation parameter may have one of two possible values, e.g., a first uplink first (FU) or a first SBFD (FS). In another example, the UF may be referred to as a first uplink then SBFD (FUS) and the FS may be referred to as a first SBFD then UL (FSU). For example, the FU and the FS may be indicated by bit 0 and bit 1 respectively, or vice versa.

In an example, the value FS may indicate that the one or more SBFD symbols are located in (or start from) the beginning of the time slot. In another example, the value FS may indicate that the first SBFD symbol, of the one or more SBFD symbols, is located in (or start from) the beginning of the time slot. In yet another example, the value FS may indicate that the one or more uplink symbols are located after (or start after) the end of the one or more SBFD symbols in the time slot. In yet another example, the value FS may indicate that the one or more uplink symbols may start immediately after the end of the last SBFD symbol, of the one or more SBFD symbols in the time slot.

In another example, the value FU may indicate that the one or more uplink symbols are located in (or start from) the beginning of the time slot. In yet another example, the value FU may indicate that the first uplink symbol, of the one or more uplink symbols, is located in (or start from) the beginning of the time slot. In yet another example, the value FU may indicate that the one or more SBFD symbols are located after (or start after) the end of the last SBFD symbol, of the one or more SBFD symbols in the time slot. In yet another example, the value FU may indicate that the one or SBFD uplink symbols may start immediately after the end of the last uplink symbol, of the one or more SBFD symbols in the time slot.

In an example, the second permutation parameter may be optional, e.g., may not be included in configuration message 2202. For example, the second permutation parameter may have a default value (e.g., may be used or applied based on absence of the second permutation parameter). In an example, the default value of the second permutation parameter may be FU. In another example, the default value of the second permutation parameter may be FS.

In an example, the indication of a guard period may indicate a time period between an SBFD symbol and a DL symbol, or between an SBFD symbol and an UL symbol. During the guard period node 2220 may not transmit a DL signal or receive an UL signal. For example, node 2220 may not transit the DL signal over (or using) a DL frequency resource (e.g., a DL PRB, a DL subcarrier, etc.). In another example, node 2220 may not receive the UL signal over (or using) an UL frequency resource (e.g., an UL PRB, an UL subcarrier, etc.). In another example, during the guard period, a wireless device may may not transmit a DL signal or receive an UL signal. For example, the wireless device may not transit a DL signal over (or using) a DL frequency resource (e.g., a DL PRB, a DL subcarrier, etc.). In another example, the wireless device may not receive the UL signal over (or using) an UL frequency resource (e.g., an UL PRB, an UL subcarrier, etc.).

The guard period may also be referred to as an unused time duration, a guard time, a guard duration, a switching time, a transition time, etc. For example, node 2220 may switch (or change or transition) between a DL symbol and an SBFD symbol, or between an UL symbol and an SBFD symbol. In an example, the guard period may be expressed in (or defined in) terms of a time unit (e.g., L11 µs). In another example, the guard period may be expressed in (or defined in) terms of a time resource (e.g., L12 symbols, L13 slots, L14 subframes, etc.).

In an example, the guard period may occur (or located in time) before the starting SBFD symbol (or the first SBFD symbol as described above). For example, the guard period may end before the start of the starting SBFD symbol. In another example, the guard period may end immediately before the start of the starting SBFD symbol.

In an example, the guard period may occur (or located in time) after the ending SBFD symbol (or the last SBFD symbol as described above). For example, the guard period may start after the end of the ending SBFD symbol. In another example, the guard period may start immediately after the end of the ending SBFD symbol.

In an example, the indication of a guard period may indicate a duration of the guard period. For example, a value of the guard period may be pre-defined (e.g., X15 µs or X16 symbols). Node 2220 may or may not support (or require) the guard period. The indication may be comprised in a field (e.g., an F1AP message). In an example, a presence of the field may indicate the guard period. An absence of the field may indicate that node 2220 may not support (or require) the guard period. In another example, the indication may comprise a bit. For example, bit 0 may indicate that node 2220 may not support (or require) the guard period. For example, bit 1 may indicate or referred to the value of the guard period, e.g., the pre-defined value.

In another example, two or more values of the guard period may be pre-defined. For example, the indication of the guard period may comprise one or more bits. In an example the pre-defined values may be expressed in terms of time units, e.g., X11 µs, X12 µs, etc. In this example, the indication of the guard period may indicate (or correspond to) one of the pre-defined values, e.g., X11 µs or X12 µs. For example, bit 0 and bit 1 may correspond to (or indicate) X11 µs and X12 µs respectively. In another example the pre-defined values may be expressed in terms of time resources, e.g., X13 symbols, X14 symbols, etc. In this example, the indication of the guard period may indicate one of the pre-defined values, e.g., X13 symbols or X14 symbols. For example, bit 0 and bit 1 may correspond to (or indicate) X13 symbols and X14 symbols respectively.

In an example, the indication of the guard period may be an optional parameter. In one example, an absence of the indication of the guard period may indicate that node 2220 may not support (or require) the guard period. In another example, one of the pre-defined values of the indication of the guard period may be referred to as a default value. For example, an absence of the indication may indicate the default value.

In an example, the guard period (e.g., the value of the guard band) may depend on (or associated with) a frequency band, e.g., the frequency band of cell 2206. For example, node 2220 may transmit a signal or receive a signal in cell 2206 based on the frequency band.

In an example, the guard period (e.g., the value of the guard band) may depend on (or associated with) a numerology of a signal, e.g., a subcarrier spacing, a duration of a cyclic prefix (CP), a duration of a symbol, a duration of a time slot, etc. For example, node 2220 may transmit a signal or receive a signal in cell 2206 based on the numerology.

In an example, the guard period (e.g., the value of the guard band) may depend on a number of UL subbands in an SBFD symbol and/or a number of DL subbands in an SBFD symbols.

In an example, the guard period (e.g., the value of the guard band) may depend on a bandwidth (or a transmission bandwidth). The bandwidth may be referred to as a bandwidth of cell 2206, a bandwidth of the UL subband, or a bandwidth of the DL subband.

In an example, the frequency location of the uplink subband of the one or more SBFD time resources (e.g., SBFD symbols) may comprise at least one of: a number of uplink subbands, a bandwidth of the uplink subband, a subcarrier spacing, a frequency of the uplink subband, or an indication of a guard band of an UL subband.

The number of uplink subbands may be referred to as a number of uplink subbands (or one or more uplink subbands) belonging to (or comprised in) a SBFD time resource (e.g., an SBFD symbol). In an example, the number of uplink subbands may be an integer of a value between 1 and K21. In an example, K21 may be 4. In another example, K21 may be 2. In yet another example, K21 may be 1, e.g., one uplink subband.

In an example, the number of uplink subbands may depend on (or associated with) a frequency (e.g., a carrier frequency) or a frequency range (FR). For example, the FR may be a frequency range 1 (FR1) or a frequency range 2 (FR2). Frequencies in FR1 may be lower than frequencies in FR2. The frequency or the FR may be associated with cell 2206. In another example, the number of uplink subbands may depend on (or associated with) a bandwidth (or a transmission bandwidth or a radio frequency (RF) bandwidth) of cell 2206. In yet another example, the number of uplink subbands may depend on (or associated with) a numerology (e.g., an SCS, a CP length, a duration of a time slot, a duration of a symbol, etc.) of a signal. Node 2220 may transmit and/or receive the signal in cell 2206. In yet another example, the number of uplink subbands may depend on (or associated with) a frequency band of cell 2206. For example, node 2220 may indicate two uplink subbands for a frequency band A and one uplink subbands for a frequency band B.

In an example, the bandwidth of the uplink subband may also be referred to as a transmission bandwidth, a channel bandwidth, an operating bandwidth, a radio frequency (RF) bandwidth, or an uplink subband bandwidth. In an example, the bandwidth of the uplink subband may comprise (or indicate or correspond to) one or more frequency resources. In another example, the bandwidth of the uplink subband may be indicated by an uplink bandwidth parameter. In this example, the uplink bandwidth parameter may comprise (or indicate or correspond to) the one or more frequency resources. The one or more frequency resources may be expressed in terms of frequency units (e.g., Y11 MHz) or in a number of resource blocks (RBs) (e.g., Y12 RBs). Examples of the bandwidth of the uplink subband may be 11 RBs, 15 RBs, 18 RBs, 24 RBs, 25 RBs, 32 RBs, 52 RBs, 106 RBs, 124 RBs, 148 RBs, 188 RBs, 248 RBs, 273 RBs, or any reasonable value.

In an example, the subcarrier spacing (SCS) may be associated with the one or more frequency resources comprised in the uplink subband. In another example, the SCS may be associated with a signal. The signal may be transmitted based on (or over or using) the one or more frequency resources. The one or more frequency resources may be comprised in (or belong to) the uplink subband. The SCS may also be referred to as an SCS of the uplink subband. In an example, the bandwidth of the uplink subband may be associated with (or depend on or based on) the SCS. The SCS may be expressed in terms of frequency units (e.g., Y12 KHz). Examples of the SCS may be 15 kHz, 30 kHz, 60 kHz, 120 kHz, 480 kHz, 960 kHz, or any other reasonable value.

In an example, the frequency of the uplink subband may indicate (or comprise) a starting frequency, an ending frequency, or a center frequency of the uplink subband (or of frequencies comprised in the uplink subband). For example, the starting frequency may indicate (or correspond to) the lowest (or smallest) frequency of the uplink subband. In another example, the ending frequency may indicate (or correspond to) the highest frequency of the uplink subband. In another example, the uplink subband (or the bandwith of the uplink subband) may be centered around (or at) the center frequency of the uplink subband.

In an example, the frequency (e.g., the starting frequency, the ending frequency, or the center frequency) of the uplink subband may indicate (or comprise or correspond to) a frequency channel number or an UL subband offset. For example, the frequency of the uplink subband may be determined based on the frequency channel number or the UL subband offset.

In an example, the frequency channel number may be (or may comprise) an absolute channel number, e.g., an absolute frequency channel number (ARFCN), an NR-ARFCN, etc. In an example, the frequency channel number may be a downlink frequency channel number, e.g., a DL ARFCN, a DL NR-ARFCN, etc. In another example, the frequency channel number may be an uplink frequency channel number, e.g., an UL ARFCN, an UL NR-ARFCN, etc.

In an example, the UL subband offset may be relative to (or based on or from) a reference frequency. In an example, the reference frequency may also be referred to as a Point A, an absolute frequency Point A (e.g., an *absoluteFrequencyPointA),* or a common frequency. In an example, the UL subband offset may depend on the SCS, e.g., an SCS associated with the UL subband. The UL subband offset may also be referred to as an UL subband offset to the reference frequency, the UL subband offset to the Pont A, the UL subband offset to the absolute frequency Point A, an offset of the UL subband, an UL subband frequency offset, the UL subband offset to a carrier frequency (or a carrier), or simply an offset.

For example, the UL subband offset (e.g., in a frequency domain) may indicate an offset (or a difference or a separation) between the reference frequency (e.g., the Point A or the absolute frequency Point A) and a reference subcarrier of the uplink subband. In an example, the reference subcarrier of the uplink subband may belong to (or be comprised in) the frequency of the uplink subband. In another example, the reference subcarrier of the uplink subband may belong to (or be comprised in) the bandwidth of the uplink subband. In yet another example, the reference subcarrier of the uplink subband may be the lowest subcarrier (or the lowest usable subcarrier) of the frequency of the uplink subband. In yet another example, the reference subcarrier of the uplink subband may be a subcarrier of index 0 of a reference RB (e.g., RB of index or number 0) comprised in the uplink subband.

In an example, the UL subband offset may be expressed (or defined or indicated) in terms of a number of RBs (or PRBs). For example, the UL subband offset may have a value between 0 and Y13 RBs. In an example, Y13 may be 2199 RBs. In an example, Y13 may depend on a numerology, e.g., an SCS, a CP length (in time), a duration of a symbol, a duration of a time slot, etc.

In an example, the reference frequency may be indicated by (or based on or correspond to) a frequency channel number, e.g., an absolute frequency channel number (ARFCN), an NR-ARFCN, etc. In an example, the frequency channel number of the reference frequency may be a DL frequency channel number (e.g., a DL ARFCN, a DL NR-ARFCN, etc.). In an example, the frequency channel number of the reference frequency may be an UL frequency channel number (e.g., an UL ARFCN, an UL NR-ARFCN, etc.). In an example, the DL frequency channel number may correspond to (or associated with) a carrier frequency (e.g., a DL carrier frequency) of cell 2206. In another example, the UL frequency channel number may correspond to (or associated with) a carrier frequency (e.g., an UL carrier frequency) of cell 2206.

In another example, the reference frequency may be a reference subcarrier of a carrier frequency. The carrier frequency may be indicated by (or based on or correspond to) a frequency channel number, e.g., an absolute frequency channel number (ARFCN), an NR-ARFCN, etc. The carrier frequency may be (or based on or correspond to) a DL carrier frequency of cell 2206 or an UL carrier frequency of cell 2206. In an example, reference subcarrier may be the lowest subcarrier of a reference resource block (RB) of the carrier frequency (e.g., an *absoluteFrequencyPointA).* In an example, the reference subcarrier (e.g., the lowest subcarrier) may be (or correspond to) a subcarrier of index 0 (or the first subcarrier) within the reference RB. In an example, the reference RB may be (or correspond to) an RB of index 0 (or of number 0 or RB 0). The reference RB may also be referred to as a common RB 0. In an example, the reference subcarrier and/or the reference RB may belong to (or be comprised) in a bandwidth of cell 2206.

In an example, an indication of a guard band of an UL subband may indicate a guard band associated with (or related to) the UL subband. The guard band of the UL subband may comprise one or more frequencies (in a frequency domain). Frequencies of the UL subband may not overlap with frequencies of the guard band of the UL subband in a frequency domain. In another example, the frequencies of the guard band of the UL subband may not overlap with frequencies of a DL subband in a frequency domain. For example, the guard band, the UL subband, and the DL subband may be comprised in an SBFD symbol.

The guard band of the UL subband may also be referred to as restricted frequencies, unused frequencies, or unusable frequencies.

A size (or length) of the guard band of the UL subband in a frequency domain may be expressed (or defined) in terms of one or more frequency resources, e.g., Z11 PRB, Z12 subcarriers, etc. In another example, the size of the guard band of the UL subband in a frequency domain may be expressed (or defined) in terms of one or more frequency units, e.g., Z13 MHz, etc.

The guard band of the UL subband may be comprised in an SBFD symbol (in a time domain). During the SBFD symbol, node 2220 may not transmit a DL signal or receive an UL signal over frequencies within (or comprised in or belong to) the guard band of the UL subband. In another example, during the SBFD symbol, a wireless device may not transmit a DL signal or receive an UL signal over frequencies within (or comprised in or belong to) the guard band of the UL subband.

In an example, the frequencies of the guard band of the UL subband may be located (in frequency domain) before (or below) the lowest frequency of the frequencies of the UL subband. For example, the highest (or largest) frequency of the frequencies of the guard band of the UL subband may occur (in frequency domain) immediately after the lowest or smallest) frequency of the frequencies of the UL subband.

In another example, frequencies of the guard band of the UL subband may be located (in frequency domain) after (or above) the highest frequency of the frequencies of the UL subband. For example, the lowest (or smallest) frequency of the frequencies of the guard band of the UL subband may occur (in frequency domain) immediately before the highest (or largest) frequency of the frequencies of the UL subband.

In another example, the guard band of the UL subband may be referred to as a guard band, a guard band of an SBFD, a guard band of the UL subband and the DL subband, a guard band between the UL subband and the DL subband, a guard band between a pair of successive UL subband and DL subband (in a frequency domain). For example, frequencies of the guard band of the DL subband (or guard band of an SBFD) may be comprised between frequencies of a DL subband and frequencies of an UL subband (as described below).

For example, frequencies of the guard band of the UL subband may be located (in frequency domain) after (or above) the highest (or largest) frequency of the frequencies of the UL subband and below the lowest (or smallest) frequency of the frequencies of the DL subband.

In another example, frequencies of the guard band of the UL subband may be located (in frequency domain) below the lowest (or smallest) frequency of the frequencies of the UL subband and above the highest (or largest) frequency of the frequencies of the DL subband.

In an example, the indication of the guard band of the UL subband may indicate the size of the guard band (e.g., in one or more frequency resources or in frequency units, etc.). For example, two or more values of the guard band of the UL subband may be pre-defined, e.g., Y21 PRBs, Y22 PRBs, etc. For example, the indication of the guard band of the UL subband may comprise a field (e.g., an F1AP message) of one or more bits. For example, the field may be of one bit. For example, bit 0 and bit 1 may indicate the size of the guard band of Y21 PRBs and Y22 PRBs respectively.

In an example, one of the two or more pre-defined values of the guard band of the UL subband may be referred to as a default value. For example, an absence of the indication of the guard band of the UL subband may indicate the default value.

In another example, an absence of the indication of the guard band of the UL subband may indicate that node 2220 may not support (or require) the guard band of the UL subband.

In an example, the frequency location of the downlink subband of the one or more SBFD time resources (e.g., SBFD symbols) may comprise at least one of: a number of downlink subbands, a bandwidth of the downlink subband, a subcarrier spacing, a frequency of the downlink subband, or an indication of a guard band of a DL subband.

The number of downlink subbands may be referred to as a number of downlink subbands (or one or more downlink subbands) belonging to (or comprised in) a SBFD time resource (e.g., an SBFD symbol). In an example, the number of downlink subbands may be an integer of a value between 1 and K22. In an example, K22 may be 4. In another example, K22 may be 2. In yet another example, K22 may be 1, e.g., one downlink subband.

In an example, the number of downlink subbands may depend on (or associated with) a frequency (e.g., a carrier frequency) or the FR (as described above). For example, the FR may be FR1 or FR2 (as described above). The frequency or the FR may be associated with cell 2206. In another example, the number of downlink subbands may depend on (or associated with) a bandwidth (or a transmission bandwidth or a RF bandwidth) of cell 2206. In yet another example, the number of downlink subbands may depend on (or associated with) a numerology (e.g., an SCS, a CP length, a duration of a time slot, a duration of a symbol, etc.) of a signal. Node 2220 may transmit and/or receive the signal in cell 2206. In yet another example, the number of downlink subbands may depend on (or associated with) a frequency band of cell 2206. For example, node 2220 may indicate two downlink subbands for a frequency band A and one downlink subbands for a frequency band B.

In an example, the bandwidth of the downlink subband may also be referred to as a transmission bandwidth, a channel bandwidth, an operating bandwidth, an RF bandwidth, or a downlink subband bandwidth. In an example, the bandwidth of the downlink subband may comprise (or indicate or correspond to) one or more frequency resources. In another example, the bandwidth of the downlink subband may be indicated by a downlink bandwidth parameter. In this example, the downlink bandwidth parameter may comprise (or indicate or correspond to) the one or more frequency resources. The one or more frequency resources may be expressed in terms of frequency units (e.g., Y14 MHz) or in a number of resource blocks (RBs) (e.g., Y15 RBs). Examples of the bandwidth of the downlink subband (e.g., in RBs) may be 11 RBs, 15 RBs, 18 RBs, 24 RBs, 25 RBs, 32 RBs, 52 RBs, 106 RBs, 124 RBs, 148 RBs, 188 RBs, 248 RBs, 273 RBs, or any reasonable value.

In an example, the subcarrier spacing (SCS) may be associated with the one or more frequency resources (e.g., RBs) comprised in the downlink subband. In another example, the SCS may be associated with a signal. The signal may be transmitted based on (or over or using) the one or more frequency resources. The one or more frequency resources may be comprised in (or belong to) the downlink subband. The SCS may also be referred to as an SCS of the downlink subband. In an example, the bandwidth of the downlink subband may be associated with (or depend on or based on) the SCS. The SCS may be expressed in terms of frequency units (e.g., Y16 KHz). Examples of the SCS may be 15 kHz, 30 kHz, 60 kHz, 120 kHz, 480 kHz, 960 kHz, or any other reasonable value.

In an example, the frequency of the downlink subband may indicate (or comprise) a starting frequency, an ending frequency, or a center frequency of the downlink subband (or of frequencies comprised in the downlink subband). For example, the starting frequency may indicate (or correspond to) the lowest (or smallest) frequency of the downlink subband. In another example, the ending frequency may indicate (or correspond to) the highest frequency of the downlink subband. In another example, the downlink subband (or the bandwidth of the downlink subband) may be centered around (or at) the center frequency of the downlink subband.

In an example, the frequency (e.g., the starting frequency, the ending frequency, or the center frequency) of the downlink subband may indicate (or comprise or correspond to) a frequency channel number or a downlink (DL) subband offset. For example, the frequency of the downlink subband may be determined based on the frequency channel number or the UL subband offset.

In an example, the frequency channel number may be (or may comprise) an absolute channel number, e.g., an absolute frequency channel number (ARFCN), an NR-ARFCN, etc. In an example, the frequency channel number may be a downlink frequency channel number, e.g., a DL ARFCN, a DL NR-ARFCN, etc. In another example, the frequency channel number may be an uplink frequency channel number, e.g., an UL ARFCN, an UL NR-ARFCN, etc.

In an example, the DL subband offset may be relative to (or based on or from) a reference frequency. In an example, the reference frequency may also be referred to as a Point A, an absolute frequency Point A (e.g., an *absoluteFrequencyPointA),* or a common frequency. In an example, the DL subband offset may depend on the SCS, e.g., an SCS associated with the DL subband. The DL subband offset may also be referred to as an DL subband offset to the reference frequency, the DL subband offset to the Pont A, the DL subband offset to the absolute frequency Point A, an offset of the DL subband, an DL subband frequency offset, the DL subband offset to a carrier frequency (or a carrier), or simply an offset.

For example, the DL subband offset (e.g., in a frequency domain) may indicate an offset (or a difference or a separation) between the reference frequency (e.g., the Point A or the absolute frequency Point A) and a reference subcarrier of the downlink subband. In an example, the reference subcarrier of the downlink subband may belong to (or be comprised in) the frequency of the downlink subband. In another example, the reference subcarrier of the downlink subband may belong to (or be comprised in) the bandwidth of the downlink subband. In yet another example, the reference subcarrier of the downlink subband may be the lowest subcarrier (or the lowest usable subcarrier) of the frequency of the downlink subband. In yet another example, the reference subcarrier of the downlink subband may be a subcarrier of index 0 of a reference RB (e.g., RB of index or number 0) comprised in the downlink subband.

In an example, the DL subband offset may be expressed (or defined or indicated) in terms of a number of RBs (or PRBs). For example, the DL subband offset may have a value between 0 and Y13 RBs (Y13 as described above).

In an example, the reference frequency may be indicated by (or based on or correspond to) a frequency channel number, e.g., an absolute frequency channel number (ARFCN), an NR-ARFCN, etc. In an example, the frequency channel number of the reference frequency may be a DL frequency channel number (e.g., a DL ARFCN, a DL NR-ARFCN, etc.). In an example, the frequency channel number of the reference frequency may be an UL frequency channel number (e.g., an UL ARFCN, an UL NR-ARFCN, etc.). In an example, the DL frequency channel number may correspond to (or associated with) a carrier frequency (e.g., a DL carrier frequency) of cell 2206. In another example, the UL frequency channel number may correspond to (or associated with) a carrier frequency (e.g., an UL carrier frequency) of cell 2206.

In another example, the reference frequency may be a reference subcarrier of a carrier frequency. The carrier frequency may be indicated by (or based on or correspond to) a frequency channel number, e.g., an absolute frequency channel number (ARFCN), an NR-ARFCN, etc. The carrier frequency may be (or based on or correspond to) a DL carrier frequency of cell 2206 or an UL carrier frequency of cell 2206. In an example, reference subcarrier may be the lowest subcarrier of a reference resource block (RB) of the carrier frequency (e.g., an *absoluteFrequencyPointA).* In an example, the reference subcarrier (e.g., the lowest subcarrier) may be (or correspond to) a subcarrier of index 0 (or the first subcarrier) within the reference RB. In an example, the reference RB may be (or correspond to) an RB of index 0 (or of number 0 or RB 0). The reference RB may also be referred to as a common RB 0. In an example, the reference subcarrier and/or the reference RB may belong to (or be comprised) in a bandwidth of cell 2206.

In an example, an indication of a guard band of a DL subband may indicate a guard band associated with (or related to) the DL subband. The guard band of the DL subband may comprise one or more frequencies (in a frequency domain). Frequencies of the DL subband may not overlap with frequencies of the guard band of the DL subband in a frequency domain. In another example, the frequencies of the guard band of the DL subband may not overlap with frequencies of an UL subband in a frequency domain. For example, the guard band, the UL subband, and the DL subband may be comprised in an SBFD symbol.

The guard band of the DL subband may also be referred to as restricted frequencies, unused frequencies, or unusable frequencies.

A size (or length) of the guard band of the DL subband in a frequency domain may be expressed (or defined) in terms of one or more frequency resources, e.g., Z14 PRB, Z15 subcarriers, etc. In another example, the size of the guard band of the DL subband in a frequency domain may be expressed (or defined) in terms of one or more frequency units, e.g., Z16 MHz, etc.

The guard band of the DL subband may be comprised in an SBFD symbol (in a time domain). During the SBFD symbol, node 2220 may not transmit a DL signal or receive an UL signal over frequencies within (or comprised in or belong to) the guard band of the DL subband. In another example, during the SBFD symbol, a wireless device may not transmit a DL signal or receive an UL signal over frequencies within (or comprised in or belong to) the guard band of the DL subband.

In an example, the frequencies of the guard band of the DL subband may be located (in frequency domain) before (or below) the lowest frequency of the frequencies of the UL subband. For example, the highest (or largest) frequency of the frequencies of the guard band of the DL subband may occur (in frequency domain) immediately after the lowest (or smallest) frequency of the frequencies of the DL subband.

In another example, frequencies of the guard band of the DL subband may be located (in frequency domain) after (or above) the highest frequency of the frequencies of the UL subband. For example, the lowest (or smallest) frequency of the frequencies of the guard band of the DL subband may occur (in frequency domain) immediately before the highest (or largest) frequency of the frequencies of the DL subband.

In another example, the guard band of the DL subband may be referred to as a guard band, a guard band of an SBFD, a guard band of the UL subband and the DL subband, a guard band between the UL subband and the DL subband, a guard band between a pair of successive UL subband and DL subband (in a frequency domain). For example, frequencies of the guard band of the DL subband (or guard band of an SBFD) may be comprised between frequencies of a DL subband and frequencies of an UL subband (as described below).

For example, frequencies of the guard band of the DL subband may be located (in frequency domain) after (or above) the highest (or largest) frequency of the frequencies of the DL subband and below the lowest (or smallest) frequency of the frequencies of the UL subband.

In another example, frequencies of the guard band of the DL subband may be located (in frequency domain) below the lowest (or smallest) frequency of the frequencies of the UL subband and above the highest (or largest) frequency of the frequencies of the DL subband.

In an example, the indication of the guard band of the DL subband may indicate the size of the guard band (e.g., in one or more frequency resources or in frequency units, etc.). For example, two or more values of the guard band of the DL subband may be pre-defined, e.g., Y21 PRBs, Y22 PRBs, etc. For example, the indication of the guard band of the DL subband may comprise a field (e.g., an F1AP message) of one or more bits. For example, the field may be of one bit. For example, bit 0 and bit 1 may indicate the size of the guard band of Y21 PRBs and Y22 PRBs respectively.

In an example, one of the two or more pre-defined values of the guard band of the DL subband may be referred to as a default value. For example, an absence of the indication of the guard band of the DL subband may indicate the default value.

In another example, an absence of the indication of the guard band of the DL subband may indicate that node 2220 may not support (or require) the guard band of the DL subband.

In an example, the guard band (e.g., the guard band of the UL subband and/or the guard band of the DL subband) may depend on (or associated with) a frequency band, e.g., the frequency band of cell 2206. For example, node 2220 may transmit a signal or receive a signal in cell 2206 based on the frequency band.

In an example, the guard band (e.g., the guard band of the UL subband and/or the guard band of the DL subband) may depend on (or associated with) a numerology of a signal, e.g., a subcarrier spacing, a duration of a cyclic prefix (CP), a duration of a symbol, a duration of a time slot, etc. For example, node 2220 may transmit a signal or receive a signal in cell 2206 based on the numerology.

In an example, the guard band (e.g., the guard band of the UL subband and/or the guard band of the DL subband) may depend on a number of UL subbands in an SBFD symbol and/or a number of DL subbands in an SBFD symbols.

In an example, the guard band (e.g., the guard band of the UL subband and/or the guard band of the DL subband) may depend on a bandwidth (or a transmission bandwidth). The bandwidth may be referred to as a bandwidth of cell 2206, a bandwidth of the UL subband, or a bandwidth of the DL subband.

In an example, the multicarrier configuration (or multicarrier information) may indicate a configuration of a multicarrier operation. The multicarrier operation (or a multicarrier procedure) may be referred to as a carrier aggregation, multi-connectivity, or a dual connectivity. A wireless device may transmit and/or receive signals based on the multicarrier operation. Node 220 may receive signals from the wireless device and/or transmits signals to the wireless device based on the multicarrier operation.

The multicarrier operation may comprise two or more cells. The two or more cells may also be referred to as a serving cell, e.g., a spCell, a PCell, a PSCell, an SCell, etc. Each cell of the two or more cells may belong to (or operate on or associated with) a carrier frequency (or a carrier frequency of the serving cell). The carrier frequency may also be referred to as a component carrier or a serving carrier, e.g., a primary component carrier (PCC) of a PCell, a primary secondary component carrier (PSC) of a PSCell, a special cell component carrier (sPCC) of a spCell, or a secondary component carrier (SSC) of an SCell.

The configuration of the multicarrier operation may comprise (or indicate) two or more carrier frequencies. At least one of the two or more carrier frequencies may be associated with the SBFD. For example, the at least one of the two or more carrier frequencies may comprise a DL subband and an UL subband. The DL subband and the UL subband may be comprised within a bandwidth of the at least one of the two or more carrier frequencies. The configuration of the multicarrier operation may further comprise (or indicate) a type of carrier frequency associated with the SBFD. The type of carrier frequency may be referred to as a PCC, a PSC, an SCC, or an sPCC. The configuration of the multicarrier operation may further comprise (or indicate) a maximum number of the two or more carrier frequencies that may be associated with the SBFD.

In an example, the configuration of the multicarrier operation may further comprise (or indicate) a type of the multicarrier operation. The type of the multicarrier operation may be an intra-band multicarrier or an inter-band multicarrier. In the intra-band multicarrier, two or more carrier frequencies may be comprised in (or belong to) the same frequency band. In the inter-band multicarrier, at least two of the two or more carrier frequencies may be comprised in (or belong to) different frequency bands. A frequency band may also be referred to as a band, an operating band, or an operating frequency band. For example, a PCC may belong to a band A1 and an SCC may belong to a band A2, or a PCell may belong to a band A3 and a PSCell may belong to a band A4. In another example, configuration of the multicarrier operation may further comprise (or indicate) a maximum number of frequency bands for the inter-band multicarrier operation.

In an example, the configuration of the multicarrier operation may further comprise (or indicate) a list of frequency bands associated with the multicarrier operation. An indication indicating the list of frequency bands may comprise identifiers of the frequency bands in the list of the frequency bands. An identifier of a frequency band may also be referred to as a band indicator, e.g., n1, n2, n3, etc. For example, node 2220 may indicate that node 2220 may support (or be capable of) the multicarrier operation in a band B1 and band B2. In another example, node 2220 may indicate that node 2220 may support (or be capable of) the intra-band multicarrier operation in any of bands B3, B4, and B5.

In an example, the configuration of the multicarrier operation may further comprise (or indicate) a guard band. The guard band may also be referred to as a guard band for the multicarrier operation with (or associated with) the SBFD, a guard band between a pair of carrier frequencies of an intra-band multicarrier with (or associated with) the SBFD, a guard band for intra-band carrier aggregation with (or associated with) the SBFD, etc. The guard band may also be referred to as restricted frequencies, unused frequencies, or unusable frequencies.

A size (or length) of the guard band in a frequency domain may be expressed (or defined) in terms of one or more frequency resources, e.g., Q11 PRB, Q12 subcarriers, etc. In another example, the size of the guard band in a frequency domain may be expressed (or defined) in terms of one or more frequency units, e.g., Q13 MHz, etc.

Node 2220 may not transmit a DL signal or receive an UL signal over frequencies within (or comprised in or belong to) the guard band for the multicarrier operation.

In an example, the frequencies of the guard band may be located (in frequency domain) before (or below) the lowest frequency of a first frequency. For example, the highest (or largest) frequency of the frequencies of the guard band of the UL subband may occur (in frequency domain) immediately after the lowest (or smallest) frequency of the frequencies of the UL subband.

For example, frequencies of the guard band for the multicarrier operation may be located (in frequency domain) after (or above) the highest (or largest) frequency of frequencies within a first carrier frequency and below the lowest (or smallest) frequency of frequencies within a second carrier frequency. The first carrier frequency and the second carrier frequency may belong to the multicarrier operation. The frequencies within the first carrier frequency are smaller (or lower) than the frequencies within the second carrier frequency.

In an example, node 2240 may determine (or calculate or identify or estimate) the guard band between a pair of carrier frequencies (e.g., a first carrier frequency and a second carrier frequency) (as described below).

The first carrier frequency (e.g., of a first cell) and the second carrier frequency (e.g., of a second cell) may belong to (or associated with) the multicarrier configuration (e.g., an intra-band carrier aggregation). In an example, frequencies within the first carrier frequency are lower (or smaller) than frequencies within the second carrier frequency. Frequency resources (e.g., PRBs) of the first carrier frequency may be comprised within a first bandwidth. Frequency resources (e.g., PRBs) of the second carrier frequency may be comprised within a second bandwidth. A first DL subband and a first UL subband may be comprised within the first bandwidth. A second DL subband and a second UL subband may be comprised within the second bandwidth.

For example, node 2240 may determine the guard band based on the first bandwidth and the second bandwidth. In an example, the guard band may be determined based on an ending PRB (e.g., a last PRB in a frequency domain) in the first bandwidth and a starting PRB (e.g., a first PRB in a frequency domain) in the second bandwidth. In another example, the guard band may be a difference between a frequency of the ending PRB in the first bandwidth and the frequency of the starting PRB in the second bandwidth. In yet another example, the guard band may be a difference between a frequency of the ending PRB in the first bandwidth and the frequency of the starting PRB in the second bandwidth. In yet another example, the guard band may be a magnitude of a difference between a frequency of the ending PRB in the first bandwidth and the frequency of the starting PRB in the second bandwidth.

In an example, node 2240 may determine a second guard band based on the guard band (e.g., as described above). For example, second guard band may be smaller than or equal to the guard band. Node 2240 may use the second guard band for one or more operational tasks. For example, node 2240 may transmit to one or more wireless devices, the second guard band, e.g., via RRC. In another example, node 2240 may mitigate interference (e.g., the CLI) based on the second guard band.

In an example, the beam configuration (or beam information) may indicate (or comprise or include) a configuration of a beam in an SBFD symbol. For example, the beam may be referred to as a DL beam (or a beam of a DL signal). In another example, the beam may be referred to as an UL beam (or a beam of an UL signal). The DL signal may be a reference signal (e.g., a CSI-RS, a DMRS, etc.) or a DL channel (e.g., a PDSCH, a PDCCH, etc.). The UL signal may be a reference signal (e.g., an SRS, a DMRS, etc.) or an UL channel (e.g., a PUSCH, a PUCCH, a PRACH, etc.). For example, a configuration of a beam may be referred to as a configuration of a DL beam or a configuration of an UL beam.

In an example, the configuration of the DL beam may indicate a spatial direction of the DL signal in an SBFD symbol (e.g., within the DL subband). The spatial direction of the DL signal may comprise an angle in an azimuth plane, an angle in a zenith plane, etc. The azimuth plane may also be referred to as a horizontal plane. The zenith plane may also be referred to as an elevation plane (or a vertical plane).

The angle in the azimuth plane may further comprise (or indicate) a coarse resolution (or granularity) and a finer (or fine) resolution (or granularity). For example, the coarse resolution (or granularity) of the angle in the azimuth plane may be an integer between 0 and 359 degrees (or 360 degrees). For example, the finer resolution (or granularity) of the angle in the azimuth plane may be an integer between 0 and 9 degrees.

The angle in the zenith plane may further comprise (or indicate) a coarse resolution (or granularity) and a finer (or fine) resolution (or granularity). For example, the coarse resolution (or granularity) of the angle in the zenith plane may be an integer between 0 and 180 degrees (or 179 degrees). For example, the finer resolution (or granularity) of the angle in the zenith plane may be an integer between 0 and 9 degrees.

In an example, the configuration of the UL beam may indicate a spatial relation of the UL signal in an SBFD symbol (e.g., within the UL subband). The spatial relation of the UL signal may comprise (or indicate) a DL reference signal. The UL signal may be associated with (e.g., spatially) with the DL reference signal. Examples of the DL reference signal are a CSI-RS, an SSB, etc. In an example, the DL reference signal may be comprised in an SBFD symbol (e.g., within a DL subband). In another example, the DL reference signal may be comprised in a DL symbol.

For example, the configuration of the UL beam may indicate an identifier of the DL reference signal (e.g., an SSB index, an ID of a CSI-RS, etc.), a PCI of a cell (e.g., a PCI of cell 2206), a transmit power of the DL reference signal, or a resource of the DL reference signal (e.g., a time resource and/or a frequency resource of the DL reference signal).

In an example, the beam information may indicate (or comprise or include) information of (or about or related to) a transmission configuration indicator (TCI) associated with cell 2206. The TCI may also be referred to as a TCI state. For example, the TCI may indicate a beam of a signal (e.g., a PDSCH, a PDCCH, a CSI-RS, etc.). The TCI may be associated with a reference signal (e.g., a CSI-RS, an SSB, etc.). The TCI may further indicate a relation between the reference signal and a quasi-colocation (QCL) type. For example, the QCL type may indicate one or more radio channel properties (or characteristics), e.g., a Doppler shift, a Doppler spread, an average delay, a delay spread, etc. Depending on the one or more radio channel properties, the QCL type may also be referred to as a type A, a type B, a type C, or a type D. In an example, the reference signal and/or the beam of the signal may be in (or within) an SBFD symbol, e.g., in a DL subband.

The information of the TCI may comprise a TCI state ID. In an example, the TCI may be associated with a DL beam. For example, the TCI for the DL beam may be referred to as a DL TCI (or a DL TCI state). In an example, an ID of the DL TCI state may be an integer between 0 and 127. The ID of the DL TCI state may also be referred to as a DL TCI state ID.

In another example, the TCI may be associated with an UL beam. For example, the TCI for the UL beam may be referred to as an UL TCI (or an UL TCI state). In an example, an ID of the UL TCI state may be an integer between 0 and 63. The ID of the UL TCI state may also be referred to as an UL TCI state ID.

In another example, the TCI may be associated with a DL beam or an UL beam. The TCI associated with a DL beam or an UL beam, may be referred to as a unified TCI, a joint TCI, or a common TCI. For example, the unified TCI may be referred to as a unified TCI state. In an example, an ID of the unified TCI state may be an integer between 0 and 127. The ID of the unified TCI state may also be referred to as a unified TCI state ID.

In an example, the information of the TCI associated with cell 2206 may further be related to an L1-L2 triggered mobility (LTM) of a wireless device. For example, the wireless device may switch a cell (e.g., a handover to cell 2206) based on an LTM procedure. The wireless device may transmit a signal or receive a signal in cell 2206 after the LTM procedure. For example, node 2220 may indicate to node 2240, a DL TCI state, an UL TCI state, or a unified TCI state, for the wireless device in cell 2206. In an example, node 2240 may transmit to the wireless device (e.g., via an RRC), information of the DL TCI state, the UL TCI state, or the unified TCI state of cell 2206. The wireless device may transmit the signal or receive the signal in cell 2206 based on the information.

In an example, the cell configuration (of cell 2206) may indicate (or comprise) a cell type (or a type of a cell) or a base station class. For example, the cell configuration may indicate the cell type or the base station class of cell 2206 (e.g., a cell capable of or supporting the SBFD)

In an example, the cell type may be indicated by (or based on) a cell size (or a size of a cell). In an example, the cell size may be referred to as a small cell or a large cell. In another example, the cell size may be referred to as a small cell, a medium cell, or a larger cell. In yet another example, the cell size may be referred to as very small cell, a small cell, a medium cell, or a larger cell. In yet another example, the cell size may be referred to as a macro cell, a micro cell, a pico cell, or a femto cell.

In another example, the cell size may be based on (or determined based on) a distance parameter. In an example, the distance parameter may be a radius of a cell. The radius of a cell may be a distance between a center of the cell and the border of the cell. In another example, the distance parameter may be a distance between cells (e.g., distance between centers of a pair of cells). In an example, a cell may be small based on the radius of the cell being below a first radius threshold. In another example, a cell may be large based on the radius of the cell being above a second radius threshold.

In an example, the base station class may indicate (or comprise) a wide area base station, a medium area base station, a local area base station, or a home base station.

In an example, the base station class may be associated with a minimum distance, e.g., a minimum distance between a wireless device and a base station. For example, the base station class may be referred to as a wide area base station based on a minimum distance being equal to (or correspond) to a first distance value (e.g., 35 meters). In another example, the base station class may be referred to as a medium area base station based on a minimum distance being equal to (or correspond) to a second distance value (e.g., 5 meters). In yet another example, the base station class may be referred to as a local area base station based on a minimum distance being equal to (or correspond) to a third distance value (e.g., 2 meters). In yet another example, the base station class may be referred to as a home base station based on a minimum distance being equal to (or correspond) to a fourth distance value (e.g., 1 meter).

In another example, the base station class may be associated with a minimum coupling loss (MCL). For example, the MCL may be referred to as a minimum (or smallest) path loss between a wireless device and a base station. For example, the base station class may be referred to as a wide area base station based on a minimum coupling loss being equal to (or correspond) to a first MCL value (e.g., 70 dB). In another example, the base station class may be referred to as a medium area base station based on a minimum coupling loss being equal to (or correspond) to a second MCL value (e.g., 53 dB). In yet another example, the base station class may be referred to as a local area base station based on a minimum coupling loss being equal to (or correspond) to a third MCL value (e.g., 45 dB). In yet another example, the base station class may be referred to as a home base station based on a minimum coupling loss being equal to (or correspond) to a fourth MCL value (e.g., 30 dB).

The base station class may be associated with an outpower (or a maximum transmit power or a rated power) of a base station (e.g., node 2220, a gNB-DU, etc.). In an example, a base station class may be referred to as a wide area base station based on the output power being larger than or equal to a first power threshold. In another example, a base station class may be referred to as a medium area base station based on the output power being less than or equal to a second power threshold (e.g., 38 dBm). In yet another example, a base station class may be referred to as a local area base station based on the output power being less than or equal to a third power threshold (e.g., 24 dBm). In yet another example, a base station class may be referred to as a home base station based on the output power being less than or equal to a fourth power threshold (e.g., 20 dBm).

In an example, the base station class may be associated with (or serve or manage) a type of a cell. For example, a wide area base station may be associated with a macro cell. In another example, a medium range base station may be associated with a micro cell. In yet another example, a local area base station may be associated with a pico cell. In yet another example, a home base station may be associated with a femto cell.

In an example, the frequency band (of cell 2206) may comprise (or indicate) a list of frequency bands associated with (or supporting) the SBFD operation in cell 2206. An indication indicating the list of frequency bands may comprise identifiers of the frequency bands in the list of the frequency bands. An identifier of a frequency band (or a band) may also be referred to as a band indicator (or a frequency band indicator), e.g., n1, n2, n3, n4, etc. In an example, the identifier of the frequency band may be an integer between 1 and 1024. For example, node 2220 may indicate that node 2220 may support (or be capable of) the SBFD operation in cell 2206 in a band C1, a band C2, a band C3, etc.

In an example, the frequency band of (or supported by) cell 2206 may depend on (or be based on) a number of uplink subbands of (or supported by) cell 2206. In another example, the frequency band of (or supported by) cell 2206 may depend on (or be based on) a number of downlink subbands of (or supported by)) cell 2206. In yet another example, the frequency band of (or supported by) cell 2206 may depend on (or be based on) a number of downlink subbands and a number of uplink subbands of (or supported by)) cell 2206.

In an example, configuration message 2202 indicating SBFD configuration 2204 for cell 2206 may indicate that SBFD configuration 2204 may be used (or intended to be used) in cell 2206. For example, SBFD configuration 2204 may be referred to as a potential SBFD configuration, a candidate SBFD configuration, an intended SBFD configuration, or an SBFD configuration expected (or planned) to be used at a future time in cell 2206.

In an example, SBFD configuration 2204 (e.g., the time location of the one or more SBFD time resources (e.g., SBFD symbols), and/or the frequency location of the uplink subband and the downlink subband) may be comprised in (or included in or transmitted in) a TDD UL-DL pattern (e.g., the IE *TDD-UL-DL-Pattern* or the TDD UL-DL pattern as described above). The TDD UL-DL pattern may also be referred to as an intended TDD UL-DL pattern, an intended TDD UL-DL configuration, or an intended TDD UL-DL slot configuration. For example, the TDD UL-DL pattern may comprise (or include) the time location of the one or more the one or more SBFD symbols, the frequency location of the uplink subband of the one or more SBFD symbols, and/or the frequency location of the downlink subband of the one or more SBFD symbols.

In an example, SBFD configuration 2204 (e.g., the frequency location of the uplink subband) may indicate an intended number of PRBs within an uplink subband of SBFD configuration 2204. In an example, the intended number of the PRBs within the uplink subband of SBFD configuration 2204may be a subset of PRBs of the uplink subband of SBFD. For example, node 2220 may receive (or intend to receive) signals based on the intended number of the PRBs within the uplink subband of SBFD configuration 2204. For example, the uplink subband may comprise 100 PRBs, e.g., indicated by indices from 0 to 99. In an example, the intended number of the PRBs may comprise 88 PRBs, e.g., indicated by indices from 6 to 93.

In another example, SBFD configuration 2204 (e.g., the frequency location of the uplink subband) may indicate an intended number of PRBs within a downink subband of SBFD configuration 2204. In an example, the intended number of the PRBs within the downlink subband of SBFD configuration 2204 may be a subset of PRBs of the downlink subband of SBFD configuration 2204. For example, node 2220 may transmit (or intend to transmit) signals based on the intended number of the PRBs within the downlink subband of SBFD configuration 2204. For example, the downlink subband may comprise 48 PRBs, e.g., indicated by indices from 0 to 47. In an example, the intended number of the PRBs may comprise 40 PRBs, e.g., indicated by indices from 4 to 43.

In an example, node 2240 may perform (or apply) an interference mitigation based on the SBFD configuration comprised in configuration message 2202 (e.g., comprised in the TDD UL-DL configuration or in the intended TDD UL-DL slot configuration). In another example, node 2240 may perform (or apply) an interference mitigation based on the SBFD configuration comprised in configuration message 2202 (e.g., indicated by (or based on) the intended PRBs in the uplink subband). In another example, node 2240 may perform (or apply) an interference mitigation based on the SBFD configuration comprised in configuration message 2202 (e.g., indicated by (or based on) the intended PRBs in the downlink subband). For example, node 2240 may reduce interference in a network (e.g., in one or more cells) based on the interference mitigation. The interference mitigation may also be referred to as an interference management, an interference mitigation procedure, or an interference handling.

In an example, the interference may be referred to as a cross-link interference (CLI). The CLI may be referred to as (or include or comprise) radio emissions, out of band emissions, an intra-cell interference, or an inter-cell interference. For example, transmission of signals in a DL subband and in an UL subband may cause interference (e.g., out of band emissions, etc.) at a base station and/or at a wireless device. In another example, DL signals in the DL subband may interfere with a reception of the UL signals in the UL subband (e.g., at the base station). In yet another example, transmissions of the DL signals in a DL subband or in a DL symbol of a neighbor cell may cause interference in an UL subband of a serving cell of the wireless device.

In an example, node 2240 may perform the interference mitigation (or reduce the interference, e.g., CLI) based on a cell change (e.g., a handover, an RRC release with redirection) of one or more wireless device. For example, node 2240 may perform the cell change of the one or more wireless device in cell 2206, e.g., to reduce load in cell 2206. For example, node 2240 may handover (or perform cell change of) one or more wireless devices, of the one or more wireless devices in cell 2206, to a another cell (e.g., a target cell) based on a number of wireless devices in cell 2206 being above a first load threshold (LTH1).

In an example, SBFD configuration 2204 may be referred to as an SBFD configuration supported by node 2220 for cell 2206, e.g., for an SBFD operation in cell 2206. For example, SBFD configuration 2204 may be referred to as a capability of node 2220 for an SBFD operation (as described above) in cell 2206. For example, configuration message 2202 may indicate that node 2220 is capable of an SBFD operation in cell 2206 based on (or according to) SBFD configuration 2204. For example, SBFD configuration 2204 may be comprised in (or included in) information of (or associated with) a served cell (e.g., *Served Cell Information).* The information of (or associated with) a served cell may indicate configuration information (e.g., capabilities) of a cell (e.g., cell 2206 of node 2220).

In an example, configuration message 2202 indicating SBFD configuration 2204 for cell 2206 may indicate an SBFD configuration of an SBFD operation in cell 2206 (e.g., SBFD configuration 2204 being currently used for the SBFD operation in cell 2206).

In an example, configuration message 2202 indicating SBFD configuration 2204 for cell 2206 may indicate an SBFD configuration associated with (or included in or comprised in) a system information of cell 2206. For example, the system information of cell 2206 may comprise SBFD configuration 2204. The system information may also be referred to as broadcast information, common information, or cell specific information. The system information may be a master information block (MIB) or a system information block (SIB) (e.g., a first SIB, a second SIB, etc.).

For example, node 2240 (e.g., a gNB-CU) may transmit the system information of cell 2206 via an RRC signaling. In an example, SBFD configuration 2204 may be comprised in a TDD UL-DL common configuration (e.g., *tdd-UL-DL-ConfigurationCommon* IE). The TDD UL-DL common configuration may be associated with cell 2206. In another example, SBFD configuration 2204 may be comprised in a common configuration of a cell (or a serving cell) (e.g., *ServingCellConfigCommon* IE). Cell 2206 may be referred to as the serving cell. In yet another example, the common configuration of the cell (or the serving cell) (e.g., *ServingCellConfigCommon* IE) may comprise (or include) the TDD UL-DL configuration (e.g., *tdd-UL-DL-Configuration Common* IE).

In another example, SBFD configuration 2204 may be comprised in (or included in or related to) a dedicated message. The dedicated message may also be referred to as a UE specific message, e.g., an RRC message for the UE. For example, the dedicated message may be a TDD UL-DL dedicated configuration (e.g., *TDD-UL-DL-ConfigDedicated* IE). In another example, the dedicated message may be a serving cell configuration message (e.g., *ServingCellConfig* IE). The serving cell configuration message (e.g., *ServingCellConfig* IE) may be associated with cell 2206. For example, SBFD configuration 2204 may be comprised in the serving cell configuration message (e.g., *ServingCellConfig* IE). In yet another example, the TDD UL-DL dedicated configuration (e.g., *TDD-UL-DL-ConfigDedicated* IE) may be comprised in (or included in) the serving cell configuration message (e.g., *ServingCellConfig* IE).

For example, node 2240 may transmit to a wireless device, the TDD UL-DL dedicated configuration (e.g., *TDD-UL-DL-ConfigDedicated*) and/or the serving cell configuration message (e.g., *ServingCellConfig* IE).

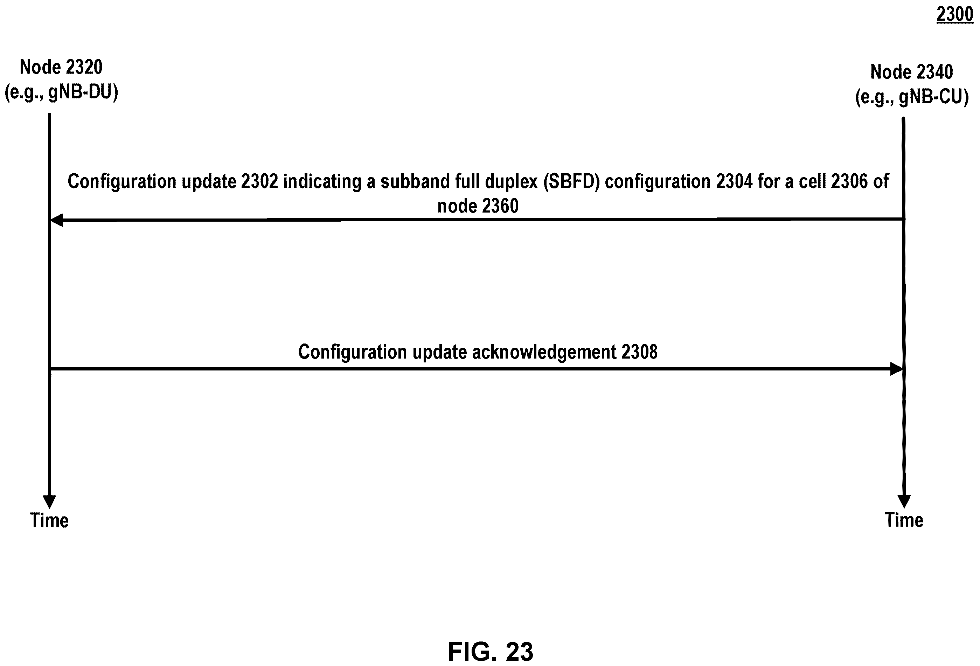

FIG. 23 illustrates an example of a configuration update procedure 2300 between a node 2320 and a node 2340 per an aspect of the present disclosure. Configuration update procedure 2300 may be used by node 2340, to provide node 2320, a subband full duplex (SBFD) configuration 2304 for a cell 2306 of a node 2360. The features illustrated in FIG. 23 may be combined with the features previously discussed with reference to FIGs. 17, 18, 19, 20, 21, and/or 22.

As shown in FIG. 23, node 2340 may transmit to node 2320, a configuration update 2302 indicating a subband full duplex (SBFD) configuration 2304 for cell 2306 of node 2360. Node 2340 may receive from node 2320, a configuration update acknowledgement 2308.

During configuration update procedure 2300, node 2340 may communicate with node 2320 over an interface (e.g., an F1 interface, an NG interface, etc.). For example, communications between node 2340 and node 2320 may comprise (or be based on) F1AP messages or NGAP messages. For example, configuration update 2302 and configuration update acknowledgement 2308 may be F1AP messages or NGAP messages.

Configuration update procedure 2300 may be associated with (or related to) cell 2306 and/or node 2340 (e.g., update of configuration data or information of node 2340). For example configuration update procedure 2300 may also be referred to as a gNB-CU configuration update, or a RAN configuration update. Configuration update procedure 2300 is according to the example embodiments in FIG. 21 (e.g., configuration update procedure 2100). Node 2340 and node 2320 are according to the example embodiments in FIG. 21 (e.g., node 2140 and node 2120 respectively).

In an example, node 2360 may serve, manage, or control cell 2306. In an example, node 2360 may be a RAN node, e.g., a second gNB-DU. For example, node 2360 may be referred to as a second gNB-DU. In an example, node 2340 (e.g., a first base station, a first gNB-CU, etc.) may control, serve, or manage node 2360. In this example, node 2340 may directly communicate with node 2360. For example, node 2340 and node 2360 may communicate (or exchange messages) via an F1 interface. For example, node 2340 and node 2360 may exchange F1AP messages. For example, node 2340 may obtain (or receive or acquire) SBFD configuration for cell 2306 based on the messages (e.g., XnAP messages) exchanged between node 2340 and 2360.

In another example, a second base station (e.g., a second gNB-CU) may control, serve or manage node 2360. In this example, node 2340 may communicate with node 2360 via the second base station. For example, node 2340 may communicate with the second base station over an Xn interface. For example, node 2340 and the second base station may exchange XnAP messages. For example, node 2340 may obtain (or receive or acquire) SBFD configuration for cell 2306 based on the messages (e.g., XnAP messages) exchanged between node 2340 and the second base station.

In an example of FIG. 23, cell 2306 may be referred to as a neighbor cell, a spCell, a PCell, a PSCell, a SCell etc., (as discussed above in FIG. 19, FIG. 20, and/or in FIG. 21). SBFD configuration 2304 for cell 2306 may also be referred to as a cell information, a served cell information, a serving cell information, or a neighbor cell information (as discussed above in FIG. 19, 20, and/or in FIG. 21).

In an example, SBFD configuration 2304 for cell 2306 may indicate at least one of: a time location of one or more SBFD time resources (e.g., SBFD symbols), a frequency location of an uplink subband of the one or more SBFD time resources (e.g., SBFD symbols), a frequency location of a downlink subband of the one or more SBFD time resources (e.g., SBFD symbols), a multicarrier configuration, a beam configuration, a cell configuration, or a frequency band.

The one or more SBFD time resources, the uplink subband of the one or more SBFD time resources, and the downlink subband of the one or more SBFD time resources are according to the example embodiments in FIG. 17 (e.g., DL time resource 1710, UL subband 1724, and DL subband 1722) and/or in FIG. 18 (e.g., DL time resource 1810, UL subband 1824, DL subband 1822, and DL subband 1826).

The time location of the one or more SBFD time resources (e.g., SBFD symbols) is according to the example embodiments in FIG. 22 (e.g., the time location of the one or more SBFD time resources (e.g., SBFD symbols)).

The frequency location of the uplink subband of the one or more SBFD time resources (e.g., SBFD symbols) is according to the example embodiments in FIG. 22 (e.g., the frequency location of the uplink subband of the one or more SBFD time resources (e.g., SBFD symbols)).

The frequency location of the downlink subband of the one or more SBFD time resources (e.g., SBFD symbols) is according to the example embodiments in FIG. 22 (e.g., the frequency location of the downlink subband of the one or more SBFD time resources (e.g., SBFD symbols)).

The multicarrier configuration associated with SBFD configuration 2304 for cell 2306 is according to the example embodiments in FIG. 22 (e.g., the multicarrier information).

The beam configuration associated with SBFD configuration 2304 for cell 2306is according to the example embodiments in FIG. 22 (e.g., the beam information).

The cell configuration associated with SBFD configuration 2304 for cell 2306is according to the example embodiments in FIG. 22 (e.g., the cell configuration).

The frequency bands associated with SBFD configuration 2304 for cell 2306 is according to the example embodiments in FIG. 22 (e.g., the frequency bands).

In an example, configuration update 2302 indicating SBFD configuration 2304 for cell 2306 may indicate that SBFD configuration 2304 may be used (or intended to be used) in cell 2306. For example, SBFD configuration 2304 may be referred to as a potential SBFD configuration, a candidate SBFD configuration, an intended SBFD configuration, or an SBFD configuration expected (or planned) to be used at a future time in cell 2306.

In an example, SBFD configuration 2304 (e.g., the time location of the one or more SBFD time resources (e.g., SBFD symbols), and/or the frequency location of the uplink subband and the downlink subband) may be comprised in (or included in or transmitted in) a TDD UL-DL pattern (e.g., the IE *TDD-UL-DL-Pattern* or the TDD UL-DL pattern as described above). The TDD UL-DL pattern may also be referred to as an intended TDD UL-DL pattern, an intended TDD UL-DL configuration, or an intended TDD UL-DL slot configuration.

In an example, SBFD configuration 2304 may indicate (or comprise) an intended number of PRBs within an uplink subband of SBFD configuration 2204. The intended number of PRBs within the uplink subband is according to the example embodiments in FIG. 22 (e.g., the intended number of PRBs within the uplink subband).

In an example, SBFD configuration 2304 may indicate (or comprise) an intended number of PRBs within a downlink subband of SBFD configuration 2204. The intended number of PRBs within the downlink subband is according to the example embodiments in FIG. 22 (e.g., the intended number of PRBs within the downlink subband).

In an example, node 2320 may perform (or apply) an interference mitigation based on the SBFD configuration comprised in configuration update 2302 (e.g., comprised in the TDD UL-DL configuration or in the intended TDD UL-DL slot configuration). For example, node 2320 may reduce interference in a network (e.g., in one or more cells of node 2320) based on the interference mitigation. In an example, the interference may be referred to as a cross-link interference (CLI). The interference mitigation and the CLI are according to the example embodiments in FIG. 22 (e.g., the interference mitigation and the CLI).

In an example, node 2320 may adapt (or modify or align or reconfigure configure or change or apply) an SBFD configuration of a cell of node 2320 based on SBFD configuration 2304 of cell 2306. In an example, node 2320 may adapt (or modify or align or reconfigure configure or change or apply) one or more parameters of the SBFD configuration of the cell. Examples of the one or more parameters may be a time location, a frequency location of an uplink subband, and/or a frequency location of a downlink subband (as described above). For example, node 2320 may configure or reconfigure the one or more parameters of the SBFD configuration in the cell based on one or more parameters of SBFD configuration 2304 of cell 2306.

In an example, node 2320 may cancel (or release or deconfigure or stop) an SBFD configuration (or an SBFD operation) of a cell of node 2320 based on SBFD configuration 2304 of cell 2306.

In another example, node 2320 may adapt (or modify or change) an allocation of resources in a cell associated with node 2320 based on SBFD configuration 2304 of cell 2306. An adaptation (or a modification or a change) of the allocation of resources in the cell may reduce interference in a network, e.g., across the cell and cell 2306. The allocation of resources may also be referred to as scheduling of resources (e.g., DL PRBs and/or UL PRBs). The allocation of resources may be associated with (or assigned to or related to or allocated to) one or more wireless devices in the cell associated with node 2320. For example, node 2320 may allocate DL PRBs in the cell which may not overlap in a time domain and/or in a frequency domain with an UL subband of cell 2306. In another example, node 2320 may allocate UL PRBs in the cell which may not overlap in a time domain and/or in a frequency domain with an DL subband of cell 2306.

In an example, SBFD configuration 2304 may be referred to as an SBFD configuration supported by node 2360 for cell 2306, e.g., for an SBFD operation in cell 2306. For example, SBFD configuration 2304 may be referred to as a capability of node 2360 for an SBFD operation (as described above) in cell 2306. For example, configuration update 2302 may indicate that node 2360 is capable of an SBFD operation in cell 2306 based on (or according to) SBFD configuration 2304. For example, SBFD configuration 2304 may be comprised in (or included in) information of (or associated with) a served cell (e.g., *Served Cell Information).* The information of (or associated with) a served cell may indicate configuration information (e.g., capabilities) of a cell (e.g., cell 2306 of node 2360).

In an example, configuration update 2302 indicating SBFD configuration 2304 for cell 2306 may indicate an SBFD configuration of an SBFD operation in cell 2306 (e.g., SBFD configuration 2304 being currently used for the SBFD operation in cell 2306).

In an example, configuration update 2302 indicating SBFD configuration 2304 for cell 2306 may indicate an SBFD configuration associated with (or included in or comprised in) a system information of cell 2306. For example, the system information of cell 2306 may comprise SBFD configuration 2304. The system information may also be referred to as broadcast information, common information, or cell specific information. The system information may be a master information block (MIB) or a system information block (SIB) (e.g., a first SIB, a second SIB, etc.).

For example, node 2340 (e.g., a gNB-CU) or the second base station may transmit (or broadcast) the system information of cell 2306 via an RRC signaling. In an example, SBFD configuration 2304 may be comprised in a TDD UL-DL common configuration (e.g., *tdd-UL-DL-ConfigurationCommon* IE). The TDD UL-DL common configuration may be associated with cell 2306, e.g., a cell specific configuration. In another example, SBFD configuration 2304 may be comprised in a common configuration of a cell (or a serving cell) (e.g., *ServingCellConfigCommon* IE). Cell 2306 may be referred to as the serving cell or a neighbor cell. In yet another example, the common configuration of the cell (or the serving cell) (e.g., *ServingCellConfigCommon* IE) may comprise (or include) the TDD UL-DL configuration (e.g., *tdd-UL-DL-Configuration Common* IE).

For example, the system information of cell 2306 may comprise the TDD UL-DL common configuration (e.g., *tdd-UL-DL-ConfigurationCommon* IE) and/or the common configuration of cell 2306 (e.g., *ServingCellConfigCommon* IE).

In another example, SBFD configuration 2304 may be comprised in (or included in or related to) a dedicated message. The dedicated message may also be referred to as a UE specific message, e.g., an RRC message for the UE. For example, the dedicated message may be a TDD UL-DL dedicated configuration (e.g., *TDD-UL-DL-ConfigDedicated* IE). The TDD UL-DL dedicated configuration (e.g., *TDD-UL-DL-ConfigDedicated* IE) may be associated with cell 2306. In an example, SBFD configuration 2304 may be comprised in the TDD UL-DL dedicated configuration. In another example, the dedicated message may be a serving cell configuration message (e.g., *ServingCellConfig* IE). The serving cell configuration message (e.g., *ServingCellConfig* IE) may be associated with cell 2306. For example, SBFD configuration 2304 may be comprised in the serving cell configuration message (e.g., *ServingCellConfig* IE). In yet another example, the TDD UL-DL dedicated configuration (e.g., *TDD-UL-DL-ConfigDedicated* IE) may be comprised in (or included in) the serving cell configuration message (e.g., *ServingCellConfig* IE).

For example, node 2340 (e.g., a gNB-CU) or the second base station may transmit to a wireless device, the TDD UL-DL dedicated configuration (e.g., *TDD-UL-DL-ConfigDedicated*) and/or the serving cell configuration message (e.g., *ServingCellConfig* IE).

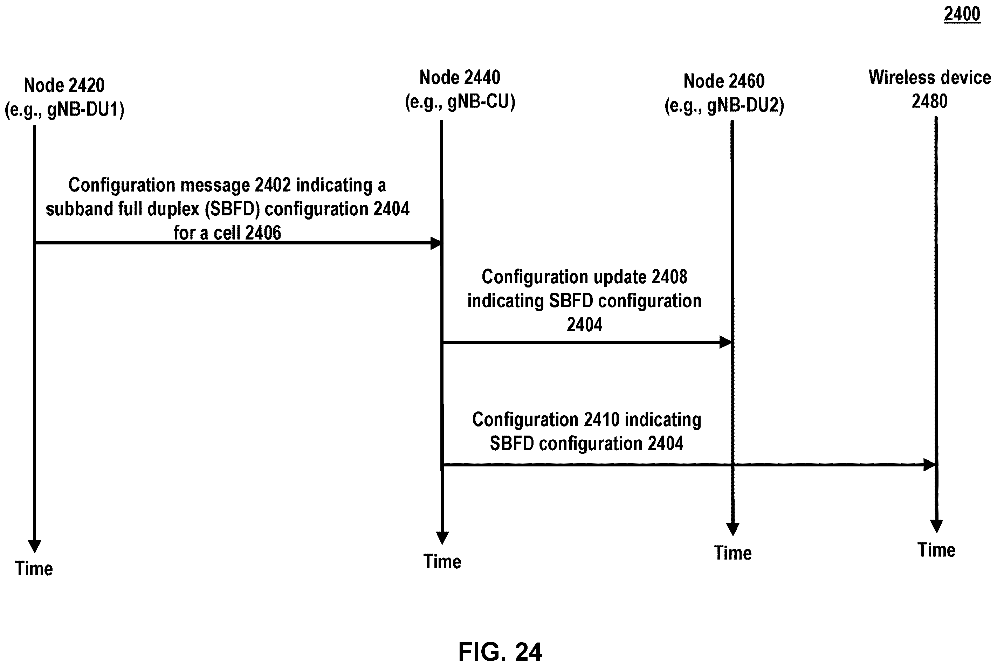

FIG. 24 illustrates an example of a configuration signaling procedure 2400 between a node 2440 and a node 2420, node 2440 and a node 2460, and node 2440 and a wireless device 2480 per an aspect of the present disclosure. Configuration signaling procedure 2400 may be used by node 2440, to provide node 2460 and wireless device 2480, a subband full duplex (SBFD) configuration 2404 for a cell 2406 of a node 2420. The features illustrated in FIG. 24 may be combined with the features previously discussed with reference to FIGs. 17, 18, 19, 20, 21, 22, and/or 23.

As shown in FIG. 24, node 2440 may receive from a node 2420, a configuration message 2402 indicating a subband full duplex (SBFD) configuration 2404 for cell 2406 of node 2420. Node 2440 may transmit to node 2460, a configuration update 2408 indicating SBFD configuration 2404. Node 2440 may transmit to wireless device 2480, a configuration 2410 indicating SBFD configuration 2404.

In an example, node 2420 may be a first distributed unit of a first base station (e.g., a first gNB-DU). Node 2420 is according to the example embodiments in FIG. 19 (e.g., node 1920), FIG. 20 (e.g., node 2020), and/or in FIG. 22 (e.g., node 2220).

In an example, node 2440 may be a central unit of a first base station (e.g., a first gNB-CU). Node 2440 is according to the example embodiments in FIG. 19 (e.g., node 1940), FIG. 20 (e.g., node 2040), in FIG. 21 (e.g., node 2140), FIG. 22 (e.g., node 2240), and/or in FIG. 23 (e.g., node 2340).

In an example, node 2460 may be a second distributed unit (e.g., a second gNB-DU). Node 2460 is according to the example embodiments in FIG. 21 (e.g., node 2120), and/or in FIG. 23 (e.g., node 2320). In an example, node 2460 may be served, controlled, or managed by node 2440 (e.g., the first base station). In another example, node 2460 may be served, controlled, or managed by a second base station (e.g., a second gNB-CU, or a second gNB).

Configuration message 2402 is according to the example embodiments in FIG. 19 (e.g., setup request 1902), FIG. 20 (e.g., configuration update 2002), and/or in FIG. 22 (e.g., configuration message 2202).

In an example, node 2440 may transmit to node 2420, an acknowledgement message in response to configuration message 2402. The acknowledgement message may also be referred to as a response message. The acknowledgement message is according to the example embodiments in FIG. 19 (e.g., setup response 1904), FIG. 20 (e.g., configuration update acknowledgement 2004), and/or in FIG. 22 (e.g., acknowledgement message 2208).

SBFD configuration 2404 is according to the example embodiments in FIG. 22 (e.g., SBFD configuration 2204) and/or in FIG. 23 (e.g., SBFD configuration 2304).

Cell 2406 is according to the example embodiments in FIG. 22 (e.g., cell 2206) and/or in FIG. 23 (e.g., cell 2306).

Configuration update 2408 is according to the example embodiments in FIG. 21 (e.g., configuration update 2102), and/or in FIG. 23 (e.g., configuration update 2302).

In an example, node 2440 may receive from node 2420, an acknowledgement message in response to configuration update 2408. The acknowledgement message may also be referred to as a response message. The acknowledgement message is according to the example embodiments in FIG. 21 (e.g., configuration update acknowledgement 2104), and/or in FIG. 23 (e.g., configuration update acknowledgement 2308).

Configuration 2410 may be an RRC message. Node 2440 may transmit to a wireless device, the RRC message (as described below).

In an example, configuration 2410 (e.g., the RRC message) may be a TDD UL-DL common configuration (e.g., *tdd-UL-DL-ConfigurationCommon* IE). In another example, configuration 2410 may be a cell specific message, e.g., a common configuration of a cell (or a serving cell) (e.g., *ServingCellConfigCommon* IE). The TDD UL-DL common configuration (e.g., *tdd-UL-DL-Configuration Common* IE) and/or common configuration of the cell (or the serving cell) (e.g., *ServingCellConfigCommon* IE) may comprise SBFD configuration 2404 of cell 2406. In an example, the TDD UL-DL common configuration (e.g., TDD-UL-DL-ConfigDedicated IE) may be comprised in (or included in) common configuration of the cell (or the serving cell) (e.g., *ServingCellConfigCommon* IE).

The TDD UL-DL common configuration and the common configuration of the cell (or the serving cell) are according to the example embodiments in FIG. 22 (e.g., the TDD UL-DL common configuration and the common configuration of the cell (or the serving cell)), and/or in FIG. 23 (e.g., the TDD UL-DL common configuration and the common configuration of the cell (or the serving cell)).

In an example, configuration 2410 (e.g., the RRC message) may be a dedicated message, e.g., a UE specific message or a message dedicated to a UE. For example, the dedicated message may be a TDD UL-DL dedicated configuration (e.g., TDD-UL-DL-ConfigDedicated IE). In another example, the dedicated message may be a serving cell configuration message (e.g., *ServingCellConfig* IE). For example, the TDD UL-DL dedicated configuration (e.g., TDD-UL-DL-ConfigDedicated IE) and/or the serving cell configuration message (e.g., *ServingCellConfig* IE) may comprise SBFD configuration 2404 of cell 2406. In an example, the TDD UL-DL dedicated configuration (e.g., TDD-UL-DL-ConfigDedicated IE) may be comprised in (or included in) the serving cell configuration message (e.g., *ServingCellConfig* IE).

The TDD UL-DL dedicated configuration and the serving cell configuration are according to the example embodiments in FIG. 22 (e.g., the TDD UL-DL dedicated configuration and the serving cell configuration), and/or in FIG. 23 (e.g., the TDD UL-DL dedicated configuration and the serving cell configuration).

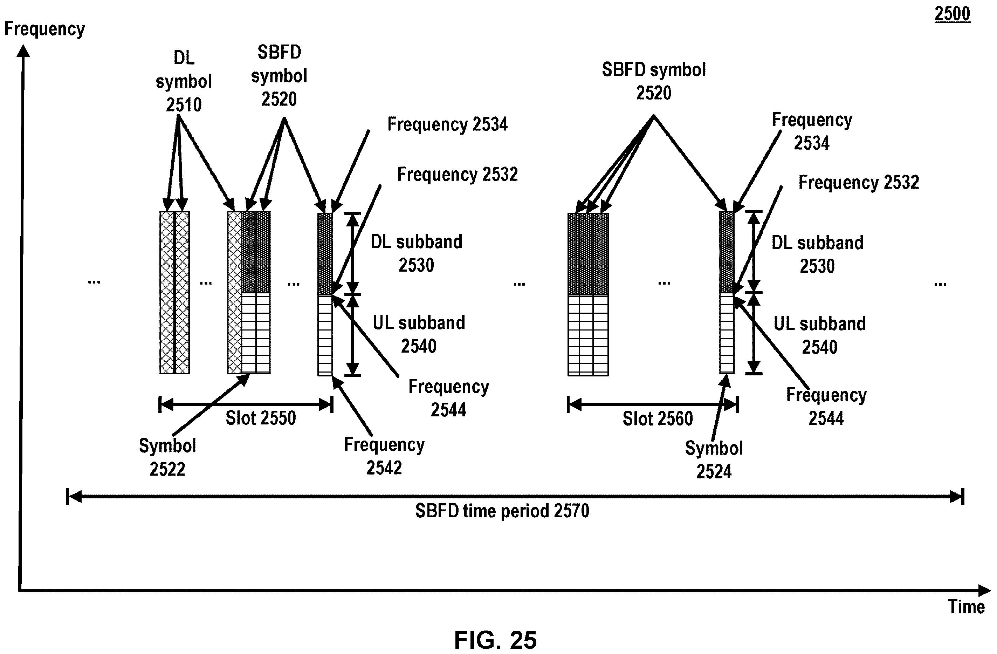

FIG. 25 illustrates an example of a subband full duplex (SBFD) configuration 2500. SBFD configuration 2500 may be associated with (or related to or for) a cell. The cell is according to the example embodiments in FIG. 22 (e.g., cell 2206), in FIG. 23 (e.g., cell 2306), and/or in FIG. 24 (e.g., cell 2406). The features illustrated in FIG. 25 may be combined with the features previously discussed with reference to FIGs. 17, 18, 19, 20, 21, 22, 23, and/or 24.

As illustrated in FIG. 25, SBFD configuration 2500 may comprise (or include or contain) a slot 2550 and a slot 2560 during an SBFD time period 2570. In an example (not shown in FIG. 25), SBFD configuration 2500 may also comprise (or include or contain) two or more slots 2550 and two or more slots 2560, slot 2550 and two or more slots 2560, or two or more slots 2550 and slot 2560. SBFD time period 2570 is according to the example embodiments in FIG. 17 (e.g., SBFD time period 1740) and/or in FIG. 18 (e.g., SBFD time period 1840).

Slot 2550 may comprise (or include or contain) one or more DL symbols 2510 and one or more SBFD symbols 2520. In an example (not shown in FIG. 25), slot 2550 may also comprise (or include or contain) only one or more SBFD symbols 2520. In an example, slot 2550 may also be referred to as a starting time slot (or a first time slot) during SBFD time period 2570. Slot 2550 may be indicated by (or identified by) an index (or a time slot index or an index of a time slot). The starting time slot (or the first time slot) and the index of the time slot (e.g., slot 2550) are according to the example embodiments in FIG. 22 (e.g., the starting time slot and the index of the starting time slot).

A symbol 2522 in slot 2550 may also be referred to as a starting SBFD symbol (or a first SBFD symbol), of one or more SBFD symbols 2520, during SBFD time period 2570. Symbol 2522 may be indicated by (or identified by) an index (or a symbol index or an index of a symbol). The starting SBFD symbol (or the first SBFD symbol) and the index of the symbol (e.g., symbol 2522) according to the example embodiments in FIG. 22 (e.g., the starting SBFD symbol and the index of the starting SBFD symbol). One or more DL symbols 2510 and one or more SBFD symbols 2520 are according to the example embodiments in FIG. 17 (e.g., DL time resource 1710 and SBFD time resource 1720) and/or in FIG. 18 (e.g., DL time resource 1810 and SBFD time resource 1820).

Slot 2560 may comprise (or include or contain) one or more SBFD symbols 2520. In an example (not shown in FIG. 25), slot 2560 may also comprise (or include or contain) one or more SBFD symbols 2520 and one or more DL symbols 2510. In an example, slot 2560 may also be referred to as an ending time slot (or a last time slot) during SBFD time period 2570. Slot 2560 may be indicated by (or identified by) an index (or a time slot index or an index of a time slot). The ending time slot (or the last time slot) and the index of the ending time slot (e.g., slot 2560) are according to the example embodiments in FIG. 22 (e.g., the ending time slot and the index of the ending time slot).

A symbol 2524 in slot 2560 may also be referred to as an ending SBFD symbol (or a last SBFD symbol), of one or more SBFD symbols 2520, during SBFD time period 2570. Symbol 2524 may be indicated by (or identified by) an index (or a symbol index or an index of a symbol). The ending SBFD symbol (or the last SBFD symbol) and the index of the ending symbol (e.g., symbol 2524) are according to the example embodiments in FIG. 22 (e.g., the ending SBFD symbol and the index of the ending SBFD symbol).

In an example, symbol 2522, slot 2550, symbol 2524, and slot 2560 may determine (or indicate) a time location of one or more SBFD symbols 2520 during SBFD time period 2570. The time location of one or more SBFD symbols 2520 during SBFD time period 2570 is according to the example embodiments in FIG. 22 (e.g., the time location of the one or more SBFD symbols).

As shown in FIG. 25, SBFD symbol, of one or more SBFD symbols 2520, may comprise a DL subband 2530 and an UL subband 2540. DL subband 2530 and UL subband 2540 are according to the example embodiments in FIG. 17 (e.g., DL subband 1722 and UL subband 1724) and/or in FIG. 18 (e.g., DL subband 1822, DL subband 1826, and UL subband 1824).

In an example, a frequency 2534 and/or a frequency 2532 may determine (or indicate or identify) a frequency location of DL subband 2530. The frequency location of DL subband 2540 is according to the example embodiments in FIG. 22 (e.g., the frequency location of the downlink subband). Frequency 2534 may be larger than frequency 2532 in a frequency domain.

For example, frequency 2534 may be referred to as the highest frequency (or ending frequency) of frequencies (or frequency resources e.g., PRBs, subcarriers, etc.) comprised in (or belong to) DL subband 2530. In another example, frequency 2534 may be referred to as the highest frequency (or ending frequency) of a bandwidth (or a transmission bandwidth) of DL subband 2530. For example, frequency 2532 may be referred to as the lowest frequency (or starting frequency) of frequencies (or frequency resources e.g., PRBs, subcarriers, etc.) comprised in (or belong to) DL subband 2530. In another example, frequency 2532 may be referred to as the lowest frequency (or starting frequency) of a bandwidth (or a transmission bandwidth) of DL subband 2530.

Frequency 2534 and/or frequency 2532 may be indicated by (or may comprise) an absolute frequency channel (e.g., an ARFCN, an NR-ARFCN, etc.) or an offset (or a DL subband offset). Frequency 2534, frequency 2532, the absolute frequency channel, and the DL subband offset are according to the example embodiments in FIG. 22 (e.g., the ending frequency of the DL subband, the starting frequency of the DL subband, the absolute frequency channel, and the DL subband offset).

In an example, a frequency 2544 and/or a frequency 2542 may determine (or indicate or identify) a frequency location of UL subband 2540. The frequency location of UL subband 2540 is according to the example embodiments in FIG. 22 (e.g., the frequency location of the uplink subband). Frequency 2544 may be larger than frequency 2542 in a frequency domain. Frequency 2544 may be smaller than frequency 2532 in a frequency domain.

For example, frequency 2544 may be referred to as the highest frequency (or ending frequency) of frequencies (or frequency resources e.g., PRBs, subcarriers, etc.) comprised in (or belong to) UL subband 2540. In another example, frequency 2544 may be referred to as the highest frequency (or ending frequency) of a bandwidth (or a transmission bandwidth) of UL subband 2540. For example, frequency 2542 may be referred to as the lowest frequency (or starting frequency) of frequencies (or frequency resources e.g., PRBs, subcarriers, etc.) comprised in (or belong to) UL subband 2540. In another example, frequency 2542 may be referred to as the lowest frequency (or starting frequency) of a bandwidth (or a transmission bandwidth) of UL subband 2540.

Frequency 2534 and/or frequency 2532 may be indicated by (or may comprise) an absolute frequency channel (e.g., an ARFCN, an NR-ARFCN, etc.) or an offset (or an UL subband offset). Frequency 2544, frequency 2542, the absolute frequency channel, and the UL subband offset are according to the example embodiments in FIG. 22 (e.g., the ending frequency of the UL subband, the starting frequency of the UL subband, the absolute frequency channel, and the UL subband offset).

In an example, a distance in frequency domain between the lowest frequency of frequencies in DL subband 2530 and the highest frequency of frequencies in UL subband 2540 may be referred to as a guard band. The guard band may also be referred to as a frequency separation, e.g., between DL subband 2530 and UL subband 2540. For example, the guard band may be based on (or determined by) frequency 2532 and frequency 2544. In an example, the guard band may be determined based on a difference between frequency 2532 and frequency 2544. In another example, the guard band may be determined based on a magnitude of a difference between frequency 2532 and frequency 2544. In an example, the guard band may be expressed (or defined) in terms of frequency units (e.g., L1 MHz) or frequency resources (e.g., L2 number of RBs, etc.).

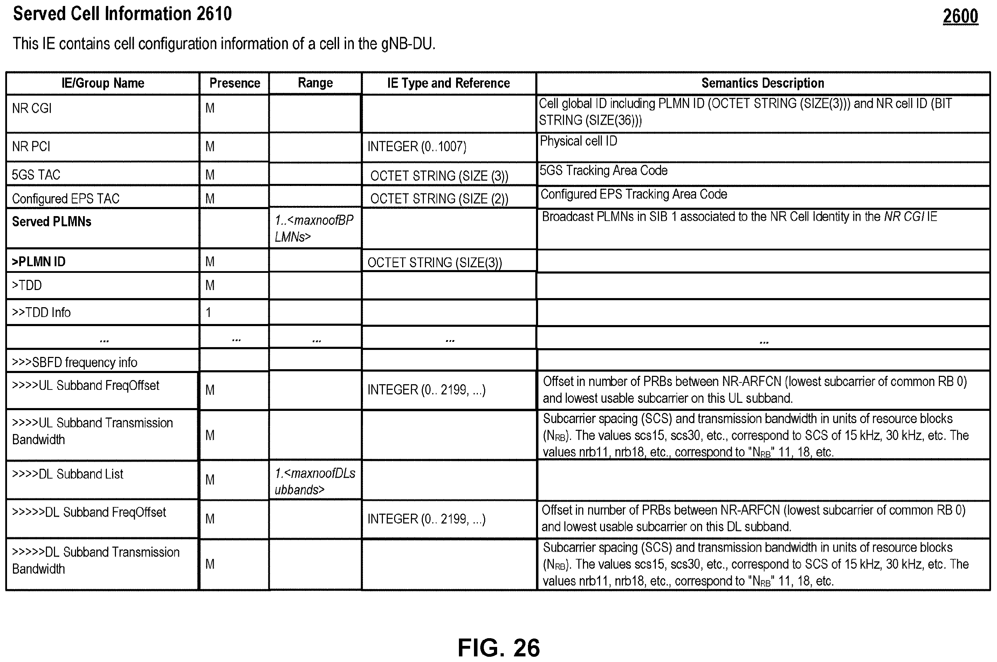

FIG. 26 illustrates an example of a served cell information 2610 (e.g., *Served Cell Information IE)* as per an aspect of an embodiment of the present disclosure. The features illustrated in FIG. 26 may be combined with the features previously discussed with reference to FIGs. 17, 18, 19, 20, 21, 22, 23, 24, and/or 25.

In the example of FIG. 26, a first node (e.g., a distributed unit of a base station, a gNB-DU, etc.) may transmit to a second node (e.g., a central unit of a base station, a gNB-CU, an AMF, etc.), served cell information 2610 (e.g., *Served Cell Information IE).* Served cell information 2610 (e.g., *Served Cell Information IE)* may be a X1AP, or an NGAP message. Served cell information 2610 may be transmitted during a setup request or a configuration update procedure.

The first node and the second node are according to the example embodiments in FIG. 19 (e.g., node 1920 and node 1940 respectively), FIG. 20 (e.g., node 2020 and node 2040 respectively), FIG. 22 (e.g., node 2220 and node 2240 respectively), and/or FIG. 24 (e.g., node 2420 and node 2440 respectively).

Served cell information 2610 may be comprised in a setup request message or a configuration update message. The setup request message and the configuration update message are according to the example embodiments in FIG. 19 (e.g., setup request 1902), FIG. 20 (e.g., configuration update 2002), FIG. 22 (e.g., configuration message 2202), and/or FIG. 24 (e.g., configuration message 2402).

As shown in FIG. 26, served cell information 2610 may be associated with (or comprise information of) a cell in a gNB-DU. The cell may be associated with (or identified) by an *NR CGI,* an *NR PCI,* a *5GS TAC,* and/or a *configured EPS TAC.* The NR cell global ID (CGI) (e.g., *NR CGI)* may comprise a PLMN ID and an NR cell ID. The PLMN ID may be an octet string of size 3 octets. The NR cell ID may be a bit string of size 36 bits. The NR physical cell ID (PCI) (e.g., *NR PCI*) may have a range (or a value) between 0 and 1007. The 5G system tracking area code (5GS TAC) (e.g., *5GS TAC)* may be an octet string of size 3 octets. The configured Evolved Packet System Tracking Area Code (EPS TAC) (e.g., *configured EPS TAC)* may be an octet string of size 2 octets.

As shown in FIG. 26, served cell information 2610 may be associated with *TDD* and may comprise information for TDD (e.g., *TDD info).* The information for TDD (e.g., *TDD info)* may further comprise (or include) frequency related information of SBFD (e.g., an *SBFD frequency info).*

The frequency related information of SBFD (e.g., an *SBFD frequency info)* may comprise an UL subband frequency offset (e.g., *UL Subband FreqOffset),* an UL subband transmission bandwidth (e.g., *UL Subband Transmission Bandwidth),* a DL subband list (e.g., *DL Subband List),* a DL subband frequency offset (e.g., *DL Subband FreqOffset),* and a DL subband transmission bandwidth (e.g., *DL Subband Transmission Bandwidth).*

The UL subband frequency offset (e.g., *UL Subband FreqOffset)* may be an integer in terms of number of PRBs. The UL subband frequency offset (e.g., *UL Subband FreqOffset)* may have a range (or a value) between 0 and 2199 PRBs. The UL subband frequency offset (e.g., *UL Subband FreqOffset)* may be an offset in number of PRBs between an NR-ARFCN (lowest subcarrier (e.g., a subcarrier of index 0) of common RB 0 (or PRB 0)) and lowest usable subcarrier (e.g., a subcarrier of index 0 of an RB of index 0) on the UL subband. The UL subband frequency offset (e.g., *UL Subband FreqOffset)* is according to the example embodiments in FIG. 22 (e.g., the UL subband offset) and/or in FIG. 25 (e.g., the UL subband offset).

The UL subband transmission bandwidth (e.g., *UL Subband Transmission Bandwidth)* may be indicated by (or determined based on) a subcarrier spacing (SCS) and a transmission bandwidth. The SCS may be 15 kHz, 30 kHz, 60 kHz, etc. The transmission bandwidth may be defined in terms of units of resource blocks (RBs) (or physical RBs (PRBs)). For example, the transmission bandwidth may be 11 RBs, 18 RBs, etc. The UL subband transmission bandwidth (e.g., *UL Subband Transmission Bandwidth)* is according to the example embodiments in FIG. 22 (e.g., the bandwidth of the uplink subband) and/or in FIG. 25 (e.g., the bandwidth of the uplink subband).

The DL subband list (e.g., *DL Subband List)* may indicate a maximum number of DL subbands in (or supported by) the cell in the gNB-DU. The DL subband list (e.g., *DL Subband List)* may be an integer. The DL subband list (e.g., *DL Subband List)* may have a value (or a range) between 1 and a maximum number of DL subbands (e.g., *maxnoofDLsubbands).* In an example, the maximum number of DL subbands (e.g., *maxnoofDLsubbands)* may be 2. In another example, the maximum number of DL subbands (e.g., *maxnoofDLsubbands)* may be 4. In yet another example, the maximum number of DL subbands (e.g., *maxnoofDLsubbands)* may depend on (or associated with) a frequency, a frequency range, a transmission bandwidth of the cell, a frequency band, and/or a numerology (e.g., an SCS) of a signal. The DL subband list (e.g., *DL Subband List)* is according to the example embodiments in FIG. 22 (e.g., the number of downlink subbands).

The DL subband frequency offset (e.g., *DL Subband FreqOffset)* may be an integer in terms of number of PRBs. The DL subband frequency offset (e.g., *DL Subband FreqOffset)* may have a range (or a value) between 0 and 2199 PRBs. The DL subband frequency offset (e.g., *DL Subband FreqOffset)* may be an offset in number of PRBs between an NR-ARFCN (lowest subcarrier (e.g., a subcarrier of index 0) of common RB 0 (or PRB 0)) and lowest usable subcarrier (e.g., a subcarrier of index 0 of an RB of index 0) on the DL subband. The DL subband frequency offset (e.g., *DL Subband FreqOffset)* is according to the example embodiments in FIG. 22 (e.g., the DL subband offset) and/or in FIG. 25 (e.g., the DL subband offset).

The DL subband transmission bandwidth (e.g., *DL Subband Transmission Bandwidth)* may be indicated by (or determined based on) a subcarrier spacing (SCS) and a transmission bandwidth. The SCS may be 15 kHz, 30 kHz, 60 kHz, etc. The transmission bandwidth may be defined in terms of units of resource blocks (RBs) (or physical RBs (PRBs)). For example, the transmission bandwidth may be 11 RBs, 18 RBs, etc. The DL subband transmission bandwidth (e.g., *DL Subband Transmission Bandwidth)* is according to the example embodiments in FIG. 22 (e.g., the bandwidth of the downlink subband) and/or in FIG. 25 (e.g., the bandwidth of the downlink subband).

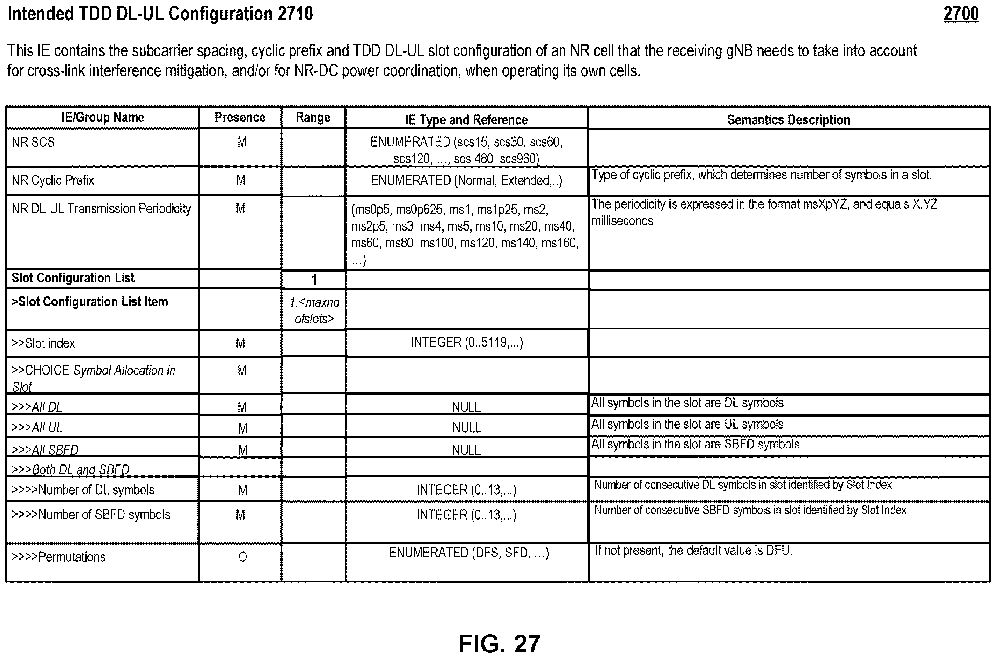

FIG. 27 illustrates an example of an intended TDD DL-UL configuration 2710 (e.g., *Intended TDD DL-UL Configuration IE)* as per an aspect of an embodiment of the present disclosure. The features illustrated in FIG. 27 may be combined with the features previously discussed with reference to FIGs. 17, 18, 19, 20, 21, 22, 23, 24, 25, and/or 26.

In the example of FIG. 27, a first node (e.g., a distributed unit of a base station, a gNB-DU, etc.) may transmit to a second node (e.g., a central unit of a base station, a gNB-CU, an AMF, etc.), intended TDD DL-UL configuration 2710 (e.g., *Intended TDD DL-UL Configuration IE).* intended TDD DL-UL configuration 2710 (e.g., Intended TDD DL-UL Configuration IE) may be a X1AP, or an NGAP message. Intended TDD DL-UL configuration 2710 (e.g., *Intended TDD DL-UL Configuration* IE) may be transmitted during a setup request or a configuration update procedure.

In an example, intended TDD DL-UL configuration 2710 (e.g., *Intended TDD DL-UL Configuration* IE) may be associated with a first cell of the first node. For example, the first node may transmit to the second node, intended TDD DL-UL configuration 2710 (e.g., *Intended TDD DL-UL Configuration IE)* of the first cell.

In another example, intended TDD DL-UL configuration 2710 (e.g., *Intended TDD DL-UL Configuration IE)* may be associated with a second cell of a third node. For example, the second node may receive from the third node, intended TDD DL-UL configuration 2710 (e.g., *Intended TDD DL-UL Configuration IE).* For example, the second node may transmit to the first node, intended TDD DL-UL configuration 2710 (e.g., *Intended TDD DL-UL Configuration IE)* of the second cell.

The first node and the second node are according to the example embodiments in FIG. 19 (e.g., node 1920 and node 1940 respectively), FIG. 20 (e.g., node 2020 and node 2040 respectively), FIG. 22 (e.g., node 2220 and node 2240 respectively), and/or FIG. 24 (e.g., node 2420 and node 2440 respectively). The first cell is according to the example embodiments in FIG. 22 (e.g., cell 2206), and/or FIG. 24 (e.g., cell 2406).

The third node is according to the example embodiments in FIG. 23 (e.g., node 2360). The second cell is according to the example embodiments in FIG. 23 (e.g., cell 2306).

In an example, intended TDD DL-UL configuration 2710 (e.g., *Intended TDD DL-UL Configuration* IE) may be comprised in a setup request message or a configuration update message. The setup request message and the configuration update message are according to the example embodiments in FIG. 19 (e.g., setup request 1902), FIG. 20 (e.g., configuration update 2002), FIG. 21 (e.g., configuration update 2102), FIG. 22 (e.g., configuration message 2202), FIG. 23 (e.g., configuration update 2302), and/or FIG. 24 (e.g., configuration message 2402).

As shown in FIG. 27, intended TDD DL-UL configuration 2710 (e.g., *Intended TDD DL-UL Configuration IE)* may comprise an NR SCS (e.g., an *NR SCS),* an NR cyclic prefix (e.g., *NR Cyclic Prefix),* and an NR DL-UL transmission periodicity (e.g., *NR DL-UL Transmission Periodicity)* for an NR cell. In an example, the second node may perform an interference mitigation based on intended TDD DL-UL configuration 2710 (e.g., *Intended TDD DL-UL Configuration IE)* of the first cell. In another example, the first node may perform an interference mitigation based on intended TDD DL-UL configuration 2710 (e.g., *Intended TDD DL-UL Configuration IE)* of the second cell.

The NR SCS (e.g., an *NR SCS)* may be referred to as a numerology of a signal. The NR SCS (e.g., an *NR SCS)* may be 15 kHz, 30 kHz, 60 kHz, etc.

The NR cyclic prefix (e.g., *NR Cyclic Prefix)* may also referred to as a numerology of a signal. The NR cyclic prefix (e.g., *NR Cyclic Prefix)* may be a normal cyclic prefix (e.g., *Normal*) or an extended cyclic prefix (e.g., *Extended).* For example, a duration of the normal cyclic prefix may be shorter (in time) than a duration of the extended cyclic prefix.

The NR DL-UL transmission periodicity (e.g., *NR DL-UL Transmission Periodicity)* for an NR cell may be referred to as a periodicity (or a period) of a pattern of DL-UL slots. The NR DL-UL transmission periodicity (e.g., *NR DL-UL Transmission Periodicity)* for an NR cell may be expressed in time units (e.g., 0.5ms, 0.625ms, 1ms, 1.25ms, 2ms, etc.).

As shown in FIG. 27, intended TDD DL-UL configuration 2710 (e.g., *Intended TDD DL-UL Configuration IE)* may comprise a list of slot configuration (e.g., *Slot Configuration List Item).* The list of slot configuration (e.g., *Slot Configuration List Item)* may comprise between 1 and a maximum number of slots (e.g., *maxnoofslots).* In an example, maximum number of slots (e.g., *maxnoofslots)* may be 5120. In an example, the maximum number of slots (e.g., *maxnoofslots)* may depend on a time duration. Examples of the time duration may be a pre-defined time duration (e.g., 10 ms), a frame duration, the NR DL-UL transmission periodicity (e.g., NR DL-UL Transmission Periodicity), an SBFD time period (e.g., SBFD time period 2570 in FIG. 25, etc. In an example, the maximum number of slots (e.g., *maxnoofslots)* may be 5120 slots during the time duration of 10 ms.

As shown in FIG. 27, each slot in the list of slot configuration may be indicated (or determined or identified) by a slot index (e.g., *Slot index).* The slot index (e.g., *Slot index)* may have a value (or a range) between 0 and 5119.

In an example, a slot index (e.g., *Slot index)* of a slot may indicate that all symbols in the slot are DL symbols (e.g., *All DL).*

In another example, a slot index (e.g., *Slot index)* of a slot may indicate that all symbols in the slot are UL symbols (e.g., *All UL).*

In yet another example, a slot index (e.g., *Slot index)* of a slot may indicate that all symbols in the slot are SBFD symbols (e.g., *All SBFD).*

In yet another example, a slot index (e.g., *Slot index)* of a slot may indicate that symbols in the slot are both DL and SBFD symbols (e.g., *Both DL and SBFD).* For example, a number of DL symbols (e.g., *Number of DL symbols)* may be between 0 and 13. For example, a number of SBFD symbols (e.g., *Number of SBFD symbols)* may be between 0 and 13.

The location (or order in time) of the DL symbols and the SBFD symbols in the slot may be indicated by (or determined based on) a permutation parameter (e.g., *Permutations).* For example, the permutation parameter (e.g., *Permutations)* may have a value of downlink first then subband (DFS) or SBFD first then downlink (SFD). The permutation parameter (e.g., *Permutations)* is according to the example embodiments in FIG. 22 (e.g., the first permutation parameter).

For example, the DL symbols may be located before the SBFD symbols (e.g., the last DL symbol may occur before the first SBFD symbol) in the slot based on the value of the permutation parameter being DFS. In another example, the DL symbols may be located after the SBFD symbols (e.g., the first DL symbol may occur after the last SBFD symbol) in the slot based on the value of the permutation parameter being SFD.

In an example, the permutation parameter (e.g., *Permutations)* may be optional. For example, intended TDD DL-UL configuration 2710 (e.g., *Intended TDD DL-UL Configuration IE)* may not include (or comprise) the permutation parameter (e.g., *Permutations).* For example, the permutation parameter (e.g., *Permutations)* may have a default value based on the permutation parameter (e.g., *Permutations)* being absent (or not present or not comprised in intended TDD DL-UL configuration 2710). In an example, the default value of the permutation parameter (e.g., *Permutations*) may be DFS. In another example, the default value of the permutation parameter (e.g., *Permutations*) may be SFD.

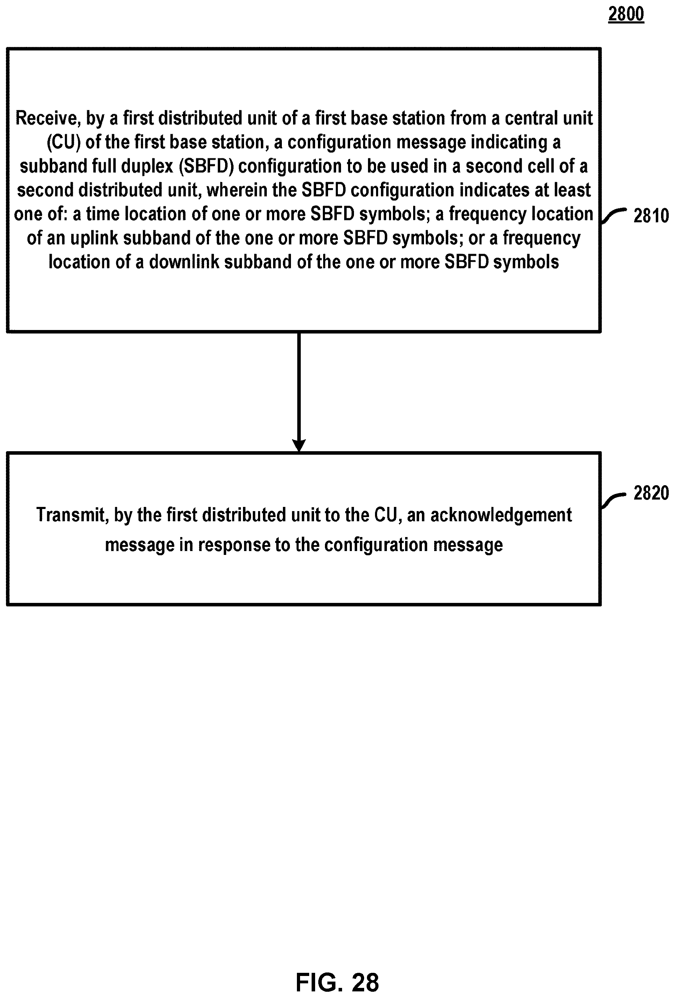

FIG. 28 illustrates an example as per an aspect of an embodiment of the present disclosure. The features illustrated in FIG. 28 may be combined with the features previously discussed with reference to FIGs. 17, 18, 19, 20, 21, 22, 23, 24, 25, 26, and/or 27.

Referring to FIG. 28, process 2800 comprises a step 2810 of receiving, by a first distributed unit of a first base station from a central unit (CU) of the first base station, a configuration message indicating a subband full duplex (SBFD) configuration to be used in a second cell of a second distributed unit, wherein the SBFD configuration indicates at least one of: a time location of one or more SBFD symbols; a frequency location of an uplink subband of the one or more SBFD symbols; a frequency location of a downlink subband of the one or more SBFD symbols; a multicarrier configuration; a beam configuration; a cell configuration; or a frequency band. Process 2800 further comprises a step 2820 of transmitting, by the first distributed unit to the CU, an acknowledgement message in response to the configuration message.

Additional aspects, with examples, of step 2810, step 2820, and process 2800 are discussed below. Each of the additional aspects, and examples, below may be considered an embodiment. Each aspect of the embodiments may be combined with, or substituted for, the aspects of the embodiment of process 2800 illustrated in FIG. 28, such as step 2810 and/or step 2820. Furthermore, each of the additional aspects and examples below may be combined with each other.

In an example, the time location of the one or more SBFD symbols comprises at least one of: an index of a starting time slot; an index of a starting SBFD symbol within the starting time slot; an index of an ending time slot; an index of an ending SBFD symbol within the ending time slot; an index of a time slot containing all SBFD symbols; an index of a time slot containing one or more downlink symbols and one or more SBFD symbols; an index of a time slot containing one or more uplink symbols and one or more SBFD symbols; a number of SBFD symbols in a time slot containing one or more downlink symbols and one or more SBFD symbols; a number of downlink symbols in a time slot containing one or more downlink symbols and one or more SBFD symbols; a location of one or more SBFD symbols in the time slot containing one or more downlink symbols and one or more SBFD symbols; a location of one or more downlink symbols in the time slot containing one or more downlink symbols and one or more SBFD symbols; a number of SBFD symbols in a time slot containing one or more uplink symbols and one or more SBFD symbols; a number of uplink symbols in a time slot containing one or more uplink symbols and one or more SBFD symbols; a location of one or more SBFD symbols in the time slot containing one or more uplink symbols and one or more SBFD symbols, or a location of one or more uplink symbols in the time slot containing one or more uplink symbols and one or more SBFD symbols; or an indication of a guard period.

In an example, the location of the one or more SBFD symbols in the time slot containing the one or more downlink symbols and the one or more SBFD symbols, or the location of the one or more downlink symbols in the time slot containing the one or more downlink symbols and the one or more SBFD symbols, is determined based on a first permutation parameter.

In an example, the location of the one or more SBFD symbols in the time slot containing the one or more uplink symbols and the one or more SBFD symbols, or the location of the one or more uplink symbols in the time slot containing the one or more uplink symbols and the one or more SBFD symbols, is determined based on a second permutation parameter.

In an example, the frequency location of the uplink subband of the one or more SBFD symbols comprises at least one of: a number of uplink subbands; a bandwidth of the uplink subband; a subcarrier spacing; a frequency of the uplink subband; or an indication of a guard band of an uplink subband.

In an example, the frequency of the uplink subband is associated with the subcarrier spacing.

In an example, the frequency of the uplink subband comprises a frequency channel number or an offset.

In an example, the frequency of the uplink subband comprises at least one of: a starting frequency of the uplink subband; an ending frequency of the uplink subband; or a center frequency of the uplink subband.

In an example, the frequency location of the downlink subband of the one or more SBFD symbols comprises at least one of: a number of downink subbands; a bandwidth of the downlink subband; a subcarrier spacing; a frequency of the downlink subband; or an indication of a guard band of a downlink subband.

In an example, the method of claim 7, wherein the frequency of the downlink subband is associated with the subcarrier spacing.

In an example, the frequency of the downlink subband comprises a frequency channel number or an offset.

In an example, the frequency of the downlink subband comprises at least one of: a starting frequency of the downlink subband; an ending frequency of the downlink subband; or a center frequency of the downlink subband.

In an example, the offset is determined based on a subcarrier spacing and/or on a reference frequency.

In an example, the offset is relative to the reference frequency.

In an example, the reference frequency is a reference subcarrier of an uplink carrier frequency or a downlink carrier frequency.

In an example, the uplink carrier frequency or the downlink carrier frequency is associated with the first cell.

In an example, the reference subcarrier is a lowest subcarrier of a reference resource block (RB).

In an example, the uplink carrier frequency or the downlink carrier frequency comprises a frequency channel number.

In an example, the frequency channel number comprises an absolute frequency channel number (ARFCN) or a next radio - ARFCN (NR-ARFCN).

In an example, the offset is an index of a resource block (RB) or an index of a subcarrier.

In an example, the cell configuration is a cell size or a base station class.

In an example, the cell size is a very small cell, a small cell, a medium cell, or a larger cell.

In an example, the base station class is a wide area base station, a medium range base station, a local area base station, or a home base station.

In an example, the SBFD configuration is at least partly comprised in a time division duplex (TDD) downlink-uplink slot configuration.

In an example, the TDD downlink-uplink slot configuration is to be used in the first cell.

In an example, the TDD downlink-uplink slot configuration is associated with a wireless device.

In an example, the first cell operates in subband full duplex (SBFD).

In an example, the SBFD comprises at least one uplink subband and at least one downlink subband in an SBFD symbol.

In an example, the downlink subband and the uplink subband are comprised within a bandwidth of a carrier frequency of the cell.

In an example, in the SBFD symbol, the second cell may simultaneously transmit a downlink signal in the downlink subband and receive an uplink signal in the uplink subband.

In an example, the downlink subband comprises one or more frequency resources.

In an example, the uplink subband comprises one or more frequency resources.

In an example, one of the one or more frequency resources comprises a physical resource block, a virtual resource block, a control channel element, a resource element, subcarrier, or tone.

In an example, the physical resource block is a resource block.

In an example, the one or more downlink symbols are associated with a full duplex - frequency division duplexing (FD-FDD), a time division duplexing (TDD), or a half-duplex - frequency division duplexing (HD-FDD) operation.

In an example, the one or more uplink symbols are associated with a full duplex - frequency division duplexing (FD-FDD), a time division duplexing (TDD), or a half-duplex - frequency division duplexing (HD-FDD) operation.

Process 2800 further comprises a step of adapting a subband full duplex (SBFD) configuration of a first cell associated with the first distributed unit based on the SBFD configuration of the second cell.

Process 2800 further comprises a step of adapting an allocation of one or more radio resources in the first cell based on the SBFD configuration of the second cell.

Process 2800 further comprises a step of releasing, reconfiguring, deconfiguring, or cancelling the one or more radio resources in the first cell based on the SBFD configuration of the second cell.

In an example, the one or more radio resources comprises resource blocks or subcarriers.

Process 2800 further comprises a step of performing an interference mitigation based on the SBFD configuration of the second cell.

In an example, the interference mitigation is associated with a cross-link interference (CLI).

In an example, the second distributed unit is associated with the first base station or with a second base station.

In an example, the first distributed unit or the second distributed unit is a gNB Distributed Unit (gNB-DU), and/or the CU is a gNB Central Unit (gNB-CU).

In an example, the configuration message or the acknowledgement message is transmitted via an F1 application protocol (F1AP).

In an example, the configuration message is a gNB-CU configuration update message.

In an example, the acknowledgement message is a gNB-CU configuration update acknowledgement message.

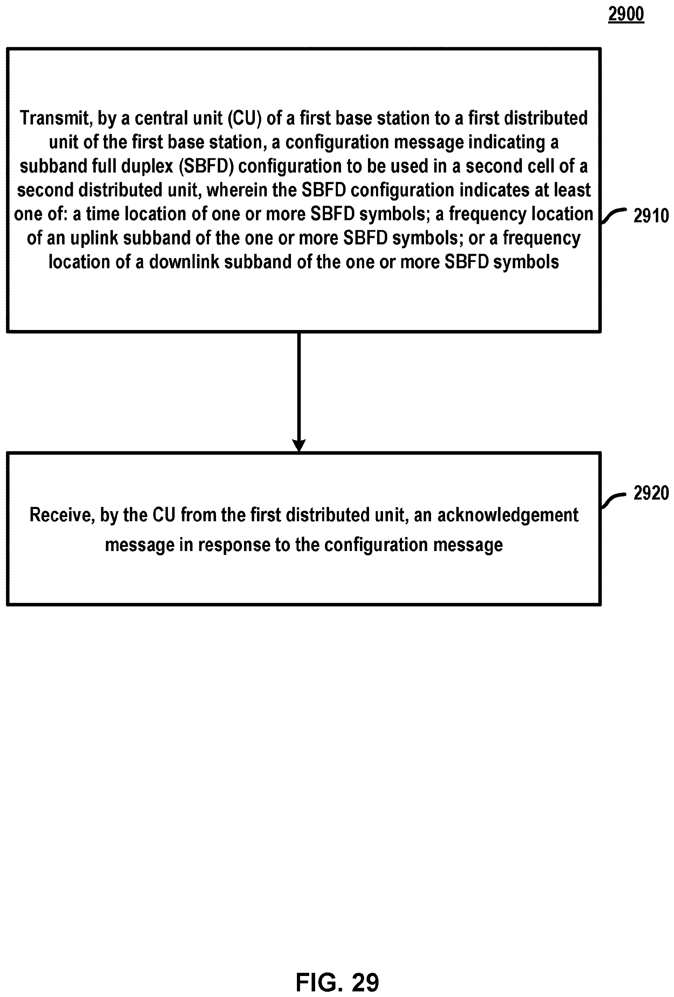

FIG. 29 illustrates an example as per an aspect of an embodiment of the present disclosure. The features illustrated in FIG. 29 may be combined with the features previously discussed with reference to FIG. 28.

Referring to FIG. 29, process 2900 comprises a step 2910 of transmitting, by a central unit (CU) of a first base station to a first distributed unit of the first base station, a configuration message indicating a subband full duplex (SBFD) configuration to be used in a second cell of a second distributed unit, wherein the SBFD configuration indicates at least one of: a time location of one or more SBFD symbols; a frequency location of an uplink subband of the one or more SBFD symbols; a frequency location of a downlink subband of the one or more SBFD symbols; a multicarrier configuration; a beam configuration; a cell configuration; or a frequency band. Process 2900 further comprises a step 2920 of receiving, by the CU from the first distributed unit, an acknowledgement message in response to the configuration message.

Additional aspects, with examples, of step 2910, step 2920, and process 2900 are discussed below. Each of the additional aspects, and examples, below may be considered an embodiment. Each aspect of the embodiments may be combined with, or substituted for, the aspects of the embodiment of process 2900 illustrated in FIG. 29, such as step 2910 and/or step 2920. Furthermore, each of the additional aspects and examples below may be combined with each other.

In an example, the time location of the one or more SBFD symbols comprises at least one of: an index of a starting time slot; an index of a starting SBFD symbol within the starting time slot; an index of an ending time slot; an index of an ending SBFD symbol within the ending time slot; an index of a time slot containing all SBFD symbols; an index of a time slot containing one or more downlink symbols and one or more SBFD symbols; an index of a time slot containing one or more uplink symbols and one or more SBFD symbols; a number of SBFD symbols in a time slot containing one or more downlink symbols and one or more SBFD symbols; a number of downlink symbols in a time slot containing one or more downlink symbols and one or more SBFD symbols; a location of one or more SBFD symbols in the time slot containing one or more downlink symbols and one or more SBFD symbols; a location of one or more downlink symbols in the time slot containing one or more downlink symbols and one or more SBFD symbols; a number of SBFD symbols in a time slot containing one or more uplink symbols and one or more SBFD symbols; a number of uplink symbols in a time slot containing one or more uplink symbols and one or more SBFD symbols; a location of one or more SBFD symbols in the time slot containing one or more uplink symbols and one or more SBFD symbols, a location of one or more uplink symbols in the time slot containing one or more uplink symbols and one or more SBFD symbols; or an indication of a guard period.

In an example, the location of the one or more SBFD symbols in the time slot containing the one or more downlink symbols and the one or more SBFD symbols, or the location of the one or more downlink symbols in the time slot containing the one or more downlink symbols and the one or more SBFD symbols, is determined based on a first permutation parameter.

In an example, the location of the one or more SBFD symbols in the time slot containing the one or more uplink symbols and the one or more SBFD symbols, or the location of the one or more uplink symbols in the time slot containing the one or more uplink symbols and the one or more SBFD symbols, is determined based on a second permutation parameter.

In an example, the frequency location of the uplink subband of the one or more SBFD symbols comprises at least one of: a number of uplink subbands; a bandwidth of the uplink subband; a subcarrier spacing; a frequency of the uplink subband; or an indication of a guard band of an uplink subband.

In an example, the frequency of the uplink subband is associated with the subcarrier spacing.

In an example, the frequency of the uplink subband comprises a frequency channel number or an offset.

In an example, the frequency of the uplink subband comprises at least one of: a starting frequency of the uplink subband; an ending frequency of the uplink subband; or a center frequency of the uplink subband.

In an example, the frequency location of the downlink subband of the one or more SBFD symbols comprises at least one of: a number of downink subbands; a bandwidth of the downlink subband; a subcarrier spacing; a frequency of the downlink subband; or an indication of a guard band of a downlink subband.

In an example, the frequency of the downlink subband is associated with the subcarrier spacing.

In an example, the frequency of the downlink subband comprises a frequency channel number or an offset.

In an example, the frequency of the downlink subband comprises at least one of: a starting frequency of the downlink subband; an ending frequency of the downlink subband; or a center frequency of the downlink subband.

In an example, the offset is determined based on a subcarrier spacing and/or on a reference frequency.

In an example, the offset is relative to the reference frequency.

In an example, the reference frequency is a reference subcarrier of an uplink carrier frequency or a downlink carrier frequency.

In an example, the uplink carrier frequency or the downlink carrier frequency is associated with the first cell.

In an example, the reference subcarrier is a lowest subcarrier of a reference resource block (RB).

In an example, the uplink carrier frequency or the downlink carrier frequency comprises a frequency channel number.

In an example, the frequency channel number comprises an absolute frequency channel number (ARFCN) or a next radio - ARFCN (NR-ARFCN).

In an example, the offset is an index of a resource block (RB) or an index of a subcarrier.

In an example, the cell configuration is a cell size or a base station class.

In an example, the cell size is a very small cell, a small cell, a medium cell, or a larger cell.

In an example, the base station class is a wide area base station, a medium range base station, a local area base station, or a home base station.

In an example, the SBFD configuration is at least partly comprised in a time division duplex (TDD) downlink-uplink slot configuration.

In an example, the TDD downlink-uplink slot configuration is to be used in the first cell.

In an example, the TDD downlink-uplink slot configuration is associated with a wireless device.

In an example, the first cell operates in subband full duplex (SBFD).

In an example, the SBFD comprises at least one uplink subband and at least one downlink subband in an SBFD symbol.

In an example, the downlink subband and the uplink subband are comprised within a bandwidth of a carrier frequency of the cell.

In an example, in the SBFD symbol, the second cell may simultaneously transmit a downlink signal in the downlink subband and receive an uplink signal in the uplink subband.

In an example, the downlink subband comprises one or more frequency resources.

In an example, the uplink subband comprises one or more frequency resources.

In an example, one of the one or more frequency resources comprises a physical resource block, a virtual resource block, a control channel element, a resource element, subcarrier, or tone.

In an example, the physical resource block is a resource block.

In an example, the one or more downlink symbols are associated with a full duplex - frequency division duplexing (FD-FDD), a time division duplexing (TDD), or a half-duplex - frequency division duplexing (HD-FDD) operation.

In an example, the one or more uplink symbols are associated with a full duplex - frequency division duplexing (FD-FDD), a time division duplexing (TDD), or a half-duplex - frequency division duplexing (HD-FDD) operation.

Process 2900 further comprises a step of adapting an allocation of one or more radio resources in the first cell based on the SBFD configuration of the second cell.

Process 2900 further comprises a step of releasing, reconfiguring, deconfiguring, or cancelling the one or more radio resources in the first cell or in the second cell based on the SBFD configuration of the second cell.

In an example, the one or more radio resources comprises resource blocks or subcarriers.

Process 2900 further comprises a step of transmitting the SBFD configuration to one or more wireless devices or to a second distributed unit.

Process 2900 further comprises a step of performing an interference mitigation based on the SBFD configuration of the second cell.

In an example, the interference mitigation is associated with a cross-link interference (CLI).

Process 2900 further comprises a step of determining a second subband full duplex (SBFD) configuration of the second cell based on the SBFD configuration of the second cell.

Process 2900 further comprises a step of transmitting the second SBFD configuration to one or more wireless devices.

In an example, the second distributed unit is associated with the first base station or with a second base station.

In an example, the first distributed unit or the second distributed unit is a gNB Distributed Unit (gNB-DU), and/or the CU is a gNB Central Unit (gNB-CU).

In an example, the configuration message or the acknowledgement message is transmitted via an F1 application protocol (F1AP).

In an example, the configuration message is a gNB-CU configuration update message.

In an example, the acknowledgement message is a gNB-CU configuration update acknowledgement message.

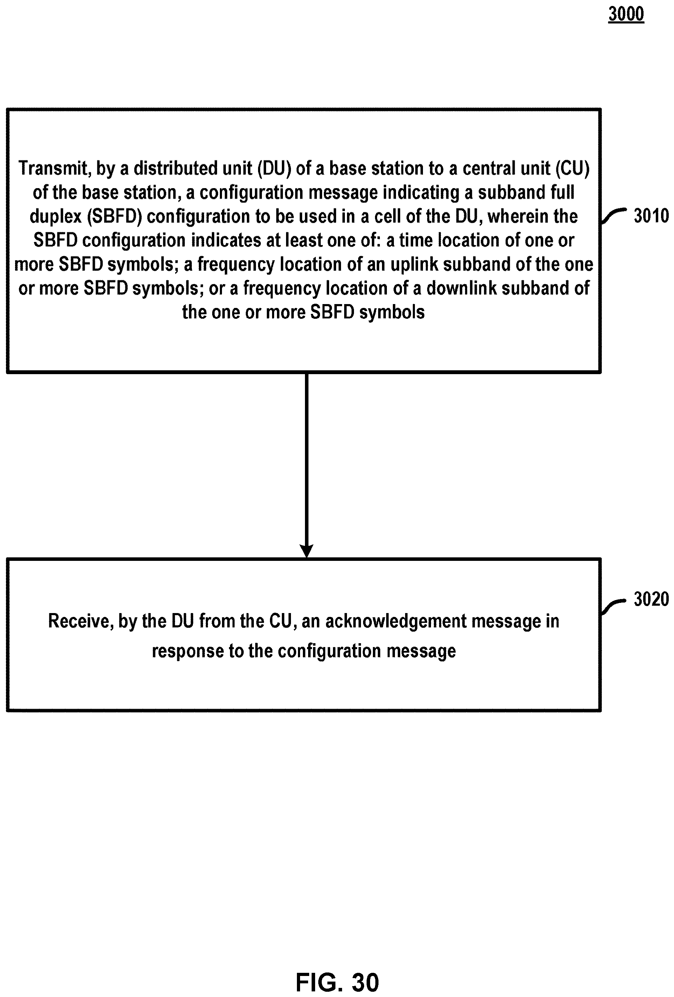

FIG. 30 illustrates an example as per an aspect of an embodiment of the present disclosure. The features illustrated in FIG. 29 may be combined with the features previously discussed with reference to FIG. 29.

Referring to FIG. 30, process 3000 comprises a step 3010 of transmitting, a distributed unit (DU) of a base station to a central unit (CU) of the base station, a configuration message indicating a subband full duplex (SBFD) configuration to be used in a cell of the DU, wherein the SBFD configuration indicates at least one of: a time location of one or more SBFD symbols; a frequency location of an uplink subband of the one or more SBFD symbols; a frequency location of a downlink subband of the one or more SBFD symbols; a multicarrier configuration; a beam configuration; a cell configuration; or a frequency band. Process 3000 further comprises a step 3020 of receiving, by the DU from the CU, an acknowledgement message in response to the configuration message.

Additional aspects, with examples, of step 3010, step 3020, and process 3000 are discussed below. Each of the additional aspects, and examples, below may be considered an embodiment. Each aspect of the embodiments may be combined with, or substituted for, the aspects of the embodiment of process 3000 illustrated in FIG. 30, such as step 3010 and/or step 3020. Furthermore, each of the additional aspects and examples below may be combined with each other.

In an example, the time location of the one or more SBFD symbols comprises at least one of: an index of a starting time slot; an index of a starting SBFD symbol within the starting time slot; an index of an ending time slot; an index of an ending SBFD symbol within the ending time slot; an index of a time slot containing all SBFD symbols; an index of a time slot containing one or more downlink symbols and one or more SBFD symbols; an index of a time slot containing one or more uplink symbols and one or more SBFD symbols; a number of SBFD symbols in a time slot containing one or more downlink symbols and one or more SBFD symbols; a number of downlink symbols in a time slot containing one or more downlink symbols and one or more SBFD symbols; a location of one or more SBFD symbols in the time slot containing one or more downlink symbols and one or more SBFD symbols; a location of one or more downlink symbols in the time slot containing one or more downlink symbols and one or more SBFD symbols; a number of SBFD symbols in a time slot containing one or more uplink symbols and one or more SBFD symbols; a number of uplink symbols in a time slot containing one or more uplink symbols and one or more SBFD symbols; a location of one or more SBFD symbols in the time slot containing one or more uplink symbols and one or more SBFD symbols; a location of one or more uplink symbols in the time slot containing one or more uplink symbols and one or more SBFD symbols; or an indication of a guard period.

In an example, the location of the one or more SBFD symbols in the time slot containing the one or more downlink symbols and the one or more SBFD symbols, or the location of the one or more downlink symbols in the time slot containing the one or more downlink symbols and the one or more SBFD symbols, is determined based on a first permutation parameter.

In an example, the location of the one or more SBFD symbols in the time slot containing the one or more uplink symbols and the one or more SBFD symbols, or the location of the one or more uplink symbols in the time slot containing the one or more uplink symbols and the one or more SBFD symbols, is determined based on a second permutation parameter.

In an example, the frequency location of the uplink subband of the one or more SBFD symbols comprises at least one of: a number of uplink subbands; a bandwidth of the uplink subband; a subcarrier spacing; a frequency of the uplink subband; or an indication of a guard band of an uplink subband.

In an example, the frequency of the uplink subband is associated with the subcarrier spacing.

In an example, the frequency of the uplink subband comprises a frequency channel number or an offset.

In an example, the frequency of the uplink subband comprises at least one of: a starting frequency of the uplink subband; an ending frequency of the uplink subband; or a center frequency of the uplink subband.

In an example, the frequency location of the downlink subband of the one or more SBFD symbols comprises at least one of: a number of downink subbands; a bandwidth of the downlink subband; a subcarrier spacing; a frequency of the downlink subband; or an indication of a guard band of a downlink subband.

In an example, the method of claim 7, wherein the frequency of the downlink subband is associated with the subcarrier spacing.

In an example, the frequency of the downlink subband comprises a frequency channel number or an offset.

In an example, the frequency of the downlink subband comprises at least one of: a starting frequency of the downlink subband; an ending frequency of the downlink subband; or a center frequency of the downlink subband.

In an example, the offset is determined based on a subcarrier spacing and/or on a reference frequency.

In an example, the offset is relative to the reference frequency.

In an example, the reference frequency is a reference subcarrier of an uplink carrier frequency or a downlink carrier frequency.

In an example, the uplink carrier frequency or the downlink carrier frequency is associated with the cell.

In an example, the reference subcarrier is a lowest subcarrier of a reference resource block (RB).

In an example, the uplink carrier frequency or the downlink carrier frequency comprises a frequency channel number.

In an example, the frequency channel number comprises an absolute frequency channel number (ARFCN) or a next radio - ARFCN (NR-ARFCN).

In an example, the offset is an index of a resource block (RB) or an index of a subcarrier.

In an example, the cell configuration is a cell size or a base station class.

In an example, the cell size is a very small cell, a small cell, a medium cell, or a larger cell.

In an example, the base station class is a wide area base station, a medium range base station, a local area base station, or a home base station.

In an example, the SBFD configuration is at least partly comprised in a time division duplex (TDD) downlink-uplink slot configuration.

In an example, the TDD downlink-uplink slot configuration is to be used in the cell.

In an example, the TDD downlink-uplink slot configuration is associated with a wireless device.

In an example, the cell operates in subband full duplex (SBFD).

In an example, the SBFD comprises at least one uplink subband and at least one downlink subband in an SBFD symbol.

In an example, the downlink subband and the uplink subband are comprised within a bandwidth of a carrier frequency of the cell.

In an example, in the SBFD symbol, the cell may simultaneously transmit a downlink signal in the downlink subband and receive an uplink signal in the uplink subband.

In an example, the downlink subband comprises one or more frequency resources.

In an example, the uplink subband comprises one or more frequency resources.

In an example, one of the one or more frequency resources comprises a physical resource block, a virtual resource block, a control channel element, a resource element, subcarrier, or tone.

In an example, the physical resource block is a resource block.

In an example, the one or more downlink symbols are associated with a full duplex - frequency division duplexing (FD-FDD), a time division duplexing (TDD), or a half-duplex - frequency division duplexing (HD-FDD) operation.

In an example, the one or more uplink symbols are associated with a full duplex - frequency division duplexing (FD-FDD), a time division duplexing (TDD), or a half-duplex - frequency division duplexing (HD-FDD) operation.

In an example, the DU of the base station is a gNB Distributed Unit (gNB-DU) and the CU of the base station is a gNB Central Unit (gNB-CU).

In an example, the configuration message or the acknowledgement message is transmitted via an F1 application protocol (F1AP).

In an example, the configuration message is an F1 setup request or a gNB-DU configuration update message.

In an example, the acknowledgement message is an F1 setup response or a gNB-DU configuration update acknowledgement message.

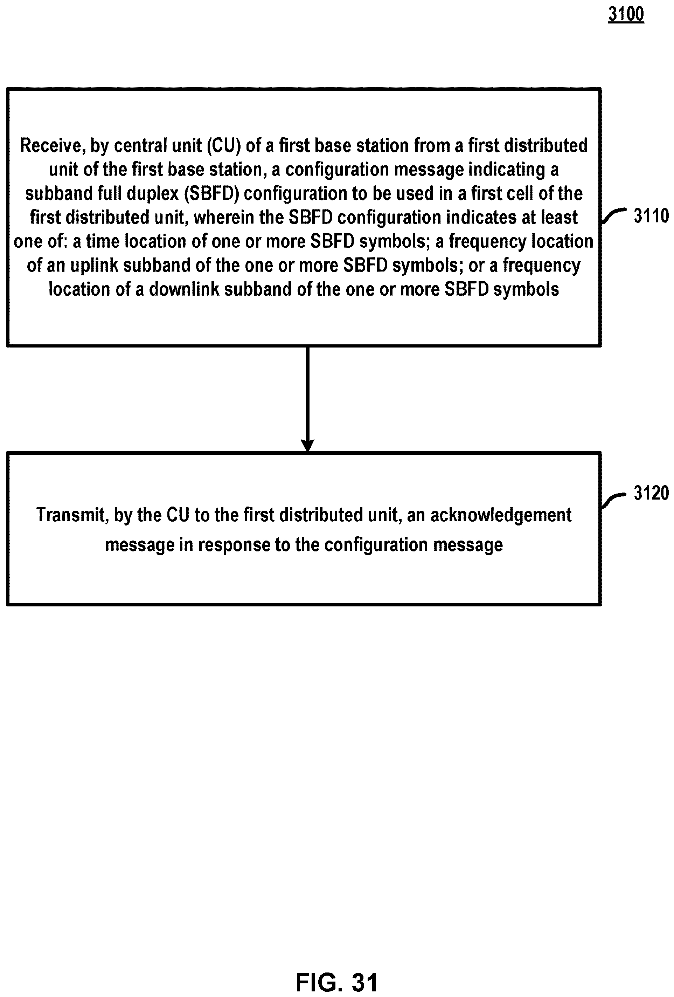

FIG. 31 illustrates an example as per an aspect of an embodiment of the present disclosure. The features illustrated in FIG. 31 may be combined with the features previously discussed with reference to FIG. 30.

Referring to FIG. 31, process 3100 comprises a step 3110 of receiving, by a central unit (CU) of a first base station from a first distributed unit of the first base station, a configuration message indicating a subband full duplex (SBFD) configuration to be used in a first cell of the first distributed unit, wherein the SBFD configuration indicates at least one of: a time location of one or more SBFD symbols; a frequency location of an uplink subband of the one or more SBFD symbols; a frequency location of a downlink subband of the one or more SBFD symbols; a multicarrier configuration; a beam configuration; a cell configuration; or a frequency band. Process 3100 further comprises a step 3120 of transmitting, by the CU to the first distributed unit, an acknowledgement message in response to the configuration message.

Additional aspects, with examples, of step 3110, step 3120, and process 3100 are discussed below. Each of the additional aspects, and examples, below may be considered an embodiment. Each aspect of the embodiments may be combined with, or substituted for, the aspects of the embodiment of process 3100 illustrated in FIG. 31, such as step 3110 and/or step 3120. Furthermore, each of the additional aspects and examples below may be combined with each other.

In an example, the time location of the one or more SBFD symbols comprises at least one of: an index of a starting time slot; an index of a starting SBFD symbol within the starting time slot; an index of an ending time slot; an index of an ending SBFD symbol within the ending time slot; an index of a time slot containing all SBFD symbols; an index of a time slot containing one or more downlink symbols and one or more SBFD symbols; an index of a time slot containing one or more uplink symbols and one or more SBFD symbols; a number of SBFD symbols in a time slot containing one or more downlink symbols and one or more SBFD symbols; a number of downlink symbols in a time slot containing one or more downlink symbols and one or more SBFD symbols; a location of one or more SBFD symbols in the time slot containing one or more downlink symbols and one or more SBFD symbols; a location of one or more downlink symbols in the time slot containing one or more downlink symbols and one or more SBFD symbols; a number of SBFD symbols in a time slot containing one or more uplink symbols and one or more SBFD symbols; a number of uplink symbols in a time slot containing one or more uplink symbols and one or more SBFD symbols; a location of one or more SBFD symbols in the time slot containing one or more uplink symbols and one or more SBFD symbols; a location of one or more uplink symbols in the time slot containing one or more uplink symbols and one or more SBFD symbols; or an indication of a guard period.

In an example, the location of the one or more SBFD symbols in the time slot containing the one or more downlink symbols and the one or more SBFD symbols, or the location of the one or more downlink symbols in the time slot containing the one or more downlink symbols and the one or more SBFD symbols, is determined based on a first permutation parameter.

In an example, the location of the one or more SBFD symbols in the time slot containing the one or more uplink symbols and the one or more SBFD symbols, or the location of the one or more uplink symbols in the time slot containing the one or more uplink symbols and the one or more SBFD symbols, is determined based on a second permutation parameter.

In an example, the frequency location of the uplink subband of the one or more SBFD symbols comprises at least one of: a number of uplink subbands; a bandwidth of the uplink subband; a subcarrier spacing; a frequency of the uplink subband; or an indication of a guard band of an uplink subband.

In an example, the frequency of the uplink subband is associated with the subcarrier spacing.

In an example, the frequency of the uplink subband comprises a frequency channel number or an offset.

In an example, the frequency of the uplink subband comprises at least one of: a starting frequency of the uplink subband; an ending frequency of the uplink subband; or a center frequency of the uplink subband.

In an example, the frequency location of the downlink subband of the one or more SBFD symbols comprises at least one of: a number of downink subbands; a bandwidth of the downlink subband; a subcarrier spacing; a frequency of the downlink subband; or an indication of a guard band of a downlink subband.

In an example, the method of claim 7, wherein the frequency of the downlink subband is associated with the subcarrier spacing.

In an example, the frequency of the downlink subband comprises a frequency channel number or an offset.

In an example, the frequency of the downlink subband comprises at least one of: a starting frequency of the downlink subband; an ending frequency of the downlink subband; or a center frequency of the downlink subband.

In an example, the offset is determined based on a subcarrier spacing and/or on a reference frequency.

In an example, the offset is relative to the reference frequency.

In an example, the reference frequency is a reference subcarrier of an uplink carrier frequency or a downlink carrier frequency.

In an example, the uplink carrier frequency or the downlink carrier frequency is associated with the first cell.

In an example, the reference subcarrier is a lowest subcarrier of a reference resource block (RB).

In an example, the uplink carrier frequency or the downlink carrier frequency comprises a frequency channel number.

In an example, the frequency channel number comprises an absolute frequency channel number (ARFCN) or a next radio - ARFCN (NR-ARFCN).

In an example, the offset is an index of a resource block (RB) or an index of a subcarrier.

In an example, the cell configuration is a cell size or a base station class.

In an example, the cell size is a very small cell, a small cell, a medium cell, or a larger cell.

In an example, the base station class is a wide area base station, a medium range base station, a local area base station, or a home base station.

In an example, the SBFD configuration is at least partly comprised in a time division duplex (TDD) downlink-uplink slot configuration.

In an example, the TDD downlink-uplink slot configuration is to be used in the first cell.

In an example, the TDD downlink-uplink slot configuration is associated with a wireless device.

In an example, the first cell operates in subband full duplex (SBFD).

In an example, the SBFD comprises at least one uplink subband and at least one downlink subband in an SBFD symbol.

In an example, the downlink subband and the uplink subband are comprised within a bandwidth of a carrier frequency of the cell.

In an example, in the SBFD symbol, the first cell may simultaneously transmit a downlink signal in the downlink subband and receive an uplink signal in the uplink subband.

In an example, the downlink subband comprises one or more frequency resources.

In an example, the uplink subband comprises one or more frequency resources.

In an example, one of the one or more frequency resources comprises a physical resource block, a virtual resource block, a control channel element, a resource element, subcarrier, or tone.

In an example, the physical resource block is a resource block.

In an example, the one or more downlink symbols are associated with a full duplex - frequency division duplexing (FD-FDD), a time division duplexing (TDD), or a half-duplex - frequency division duplexing (HD-FDD) operation.

In an example, the one or more uplink symbols are associated with a full duplex - frequency division duplexing (FD-FDD), a time division duplexing (TDD), or a half-duplex - frequency division duplexing (HD-FDD) operation.

Process 3100 further comprises a step of transmitting the SBFD configuration to one or more wireless devices or to a second distributed unit.

Process 3100 further comprises a step of performing an interference mitigation based on the SBFD configuration.

In an example, the interference mitigation is associated with a cross-link interference (CLI).

Process 3100 further comprises a step of adapting a resource allocation of radio resources in one or more cells based on the SBFD configuration.

Process 3100 further comprises a step of adapting a resource allocation of radio resources in one or more cells based on the SBFD configuration.

Process 3100 further comprises a step of performing a load balancing in one or more cells based on the SBFD configuration.

Process 3100 further comprises a step of performing a cell change of one or more wireless devices based on the SBFD configuration.

In an example, the cell change is a handover, a change of a serving cell, an RRC connection release with redirection, or an RRC connection re-establishment.

In an example, the first distributed unit or the second distributed unit is a gNB Distributed Unit (gNB-DU), and/or the CU is a gNB Central Unit (gNB-CU).

In an example, the configuration message or the acknowledgement message is transmitted via an F1 application protocol (F1AP).

In an example, the configuration message is an F1 setup request or a gNB-DU configuration update message.

In an example, the acknowledgement message is an F1 setup response or a gNB-DU configuration update acknowledgement message.

## Claims

1. A method comprising:
receiving, by a central unit (CU) of a base station from a first distributed unit (DU) of the base station, an F1 setup request message indicating a first subband full duplex (SBFD) configuration to be used in a cell of the first DU, wherein the first SBFD configuration indicates:
a frequency of an uplink subband;
a bandwidth of the uplink subband;
a frequency of a downlink subband; and
a bandwidth of the downlink subband;
transmitting, by the CU to a second DU of the base station, a gNB-CU configuration update message indicating a second SBFD configuration that is based on the first SBFD configuration; and
in response to transmitting the gNB-CU configuration update message, receiving, by the CU from the second DU, a gNB-CU configuration update acknowledgement message.

2. The method of claim 1, wherein the first SBFD configuration and/or the second SBFD configuration indicate:
an indication of a guard band of the uplink subband; and
an indication of a guard band of the downlink subband.

3. The method of claim 1 or 2, wherein:
the first SBFD configuration comprises a cell identifier identifying the cell; and
the second SBFD configuration comprises a cell identifier identifying the cell.

4. The method of any one of claims 1-3, wherein the first SBFD configuration and/or the second SBFD configuration indicate one or more of:
a number of uplink subbands; and
a subcarrier spacing associated with the frequency of the uplink subband.

5. The method of any one of claims 1-4, wherein the frequency of the uplink subband comprises one or more of:
a frequency channel number;
an offset;
a starting frequency of the uplink subband;
an ending frequency of the uplink subband; and
a center frequency of the uplink subband.

6. The method of any one of claims 1-5, wherein the first SBFD configuration and/or the second SBFD configuration indicate one or more of:
a number of downlink subbands; and
a subcarrier spacing associated with the frequency of the downlink subband.

7. The method of any one of claims 1-6, wherein the frequency of the downlink subband comprises one or more of:
a frequency channel number;
an offset;
a starting frequency of the downlink subband;
an ending frequency of the downlink subband; and
a center frequency of the downlink subband.

8. The method of claim 6 or 7, wherein:
the offset is from a reference frequency and is based on a subcarrier spacing;
the reference frequency is:
a reference subcarrier of an uplink carrier frequency or a downlink carrier frequency; or
a lowest subcarrier of a reference resource block (RB).

9. The method of any one of claims 1-8, comprising transmitting, to one or more wireless devices, one or more messages indicating the second SBFD configuration.

10. The method of any of claims 1-9, wherein the first SBFD configuration and/or the second SBFD configuration are at least partly comprised in a time division duplex (TDD) downlink-uplink slot configuration.

11. The method of any one of claims 1-10, wherein:
the uplink subband is of one or more SBFD symbols;
the downlink subband is of the one or more SBFD symbols; and
in each of the one or more SBFD symbols:
a downlink signal is configured to be transmitted by the base station, via a second cell, in the downlink subband;
an uplink signal is configured to be received by the base station, via the second cell, in the uplink subband.

12. The method of claim 11, wherein the downlink subband and the uplink subband are comprised within a bandwidth of a carrier frequency of the second cell.

13. The method of claim 11 or 12, comprising:
adapting an allocation of radio resources in the cell or in the second cell, based on an SBFD configuration of the second cell; and
performing an interference mitigation based on the SBFD configuration of the second cell, wherein the interference mitigation is associated with a cross-link interference (CLI).

14. An apparatus comprising:
one or more processors; and
memory storing instructions that, when executed by the one or more processors, cause the apparatus to perform the method of any one of claims 1-13.

15. A non-transitory computer-readable medium comprising instructions that, when executed by one or more processors of an apparatus, cause the apparatus to perform the method of any one of claims 1-13.
